(19) Europäisches Patentamt
European Patent Office
Office européen des brevets

(11) **EP 3 879 775 B1**

(12) **EUROPEAN PATENT SPECIFICATION**

(45) Date of publication and mention
of the grant of the patent:
**24.01.2024 Bulletin 2024/04**

(21) Application number: **19889219.2**

(22) Date of filing: **29.11.2019**

(51) International Patent Classification (IPC):
*H04L 27/26* (2006.01)   *H04J 13/00* (2011.01)
*H04J 13/10* (2011.01)   *H04L 5/00* (2006.01)

(52) Cooperative Patent Classification (CPC):
**H04L 27/2613; H04J 13/0014; H04J 13/107;**
**H04L 27/2614;** H04L 5/003; H04L 5/0048

(86) International application number:
**PCT/CN2019/122177**

(87) International publication number:
**WO 2020/108648 (04.06.2020 Gazette 2020/23)**

(54) **DATA TRANSMISSION METHOD, DEVICE, AND SYSTEM**

DATENÜBERTRAGUNGSVERFAHREN, -VORRICHTUNG UND -SYSTEM

PROCÉDÉ, DISPOSITIF ET SYSTÈME DE TRANSMISSION DE DONNÉES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.11.2018 CN 201811458310**

(43) Date of publication of application:
**15.09.2021 Bulletin 2021/37**

(73) Proprietor: **Huawei Technologies Co., Ltd.**
**Longgang District**
**Shenzhen, Guangdong 518129 (CN)**

(72) Inventors:
• **TANG, Xiaohu**
  **Chengdu, Sichuan 610031 (CN)**
• **YU, Qiuping**
  **Chengdu, Sichuan 610031 (CN)**
• **YAN, Min**
  **Shenzhen, Guangdong 518129 (CN)**

(74) Representative: **Maiwald GmbH**
**Elisenhof**
**Elisenstraße 3**
**80335 München (DE)**

(56) References cited:
**WO-A1-2018/131800**

**Description**

**TECHNICAL FIELD**

This application relates to the field of communications technologies, and in particular, to a data transmission method, apparatus, and system.

**BACKGROUND**

Standards used for wireless local area networks (Wireless Local Area Networks, WLAN) are Institute of Electrical and Electronics Engineers (Institute of Electrical and Electronics Engineers, IEEE) 802.11 series standards. IEEE802.11ay is a WLAN standard that can implement a comparatively high data transmission rate among existing IEEE802.11 series standards, and an operating frequency band of the IEEE802.11ay is 60 gigahertzes (GigaHertz, GHz).

An orthogonal frequency division multiplexing (Orthogonal frequency division multiplexing, OFDM) technology is used in the IEEE802.11ay. In the IEEE802.11ay, a transmit end may send a physical layer protocol data unit (physical layer protocol data unit, PPDU) to a receive end on a spectrum resource, to implement data transmission. The PPDU is divided into a plurality of sequence fields based on different functions, for example, a short training field (Short training field, STF) supporting an initial location detection function, and a channel estimation field (Channel estimation field, CEF) supporting a channel estimation function. It should be noted that a higher peak-to-average power ratio (peak-to-average power ratio, PAPR) of the PPDU indicates lower power utilization when the transmit end sends the PPDU. Therefore, to improve power utilization when the transmit end sends the PPDU, the STF is designed in the IEEE802.11ay so that a PAPR of the STF is comparatively low, thereby reducing a PAPR of the PPDU.

However, a manner of generating the STF by the transmit end is comparatively simple, and a manner of generating the PPDU is also comparatively simple. Therefore, flexibility of generating the PPDU by the transmit end is comparatively low.

WO 2018/131800 A1 describes iscloses a method for transmitting and receiving a signal in a WLAN system, by a station, and a device therefor. More particularly, the present specification discloses, when a station transmits and receives a signal through a channel on which one or two channels are bonded, a method for constituting an enhanced directional multi gigabit (EDMG) short training field (STF) for an orthogonal frequency division multiplexing (OFDM) packet, and transmitting and receiving a signal comprising the constituted EDMG STF field, and a device therefor.

**SUMMARY**

The present invention is defined by appended claims. This application provides a data transmission methods, apparatuses and computer-readable storage medium, to resolve a problem that flexibility of generating a PPDU by a transmit end is comparatively low. The technical solutions are as follows.

To be specific, elements in the target field in the STF generated by the transmit end include a plurality of elements arranged according to a regular pattern that one target element is arranged next to every a zero elements (or a zero elements are arranged next to each target element), wherein "a" in "a zero elements" represents quantity of zero elements and "a" ≥1, and a plurality of consecutive target elements in the target field form a Golay sequence. When generating the STF in the PPDU, the transmit end may generate the STF based on the Golay sequence by inserting a zero elements at least before or after each element in the Golay sequence, wherein "a" in "a zero elements" represents quantity of zero elements and "a" ≥1. It can be learned that the manner of generating the STF in this embodiment of this application is different from a manner of generating an STF in the prior art. Therefore, this embodiment of this application enriches manners of generating an STF, and further enriches manners of generating a PPDU, thereby improving flexibility of generating the PPDU by the transmit end.

In addition, the Golay sequence is characterized by a comparatively low PAPR, and inserting a zero element in the Golay sequence does not greatly affect a PAPR of a sequence obtained after the zero element is inserted. Therefore, when the target field in the STF includes a plurality of consecutive target elements that can form a plurality of Golay sequences, the target field in the STF includes a plurality of sequences characterized by low PAPRs. Under an influence of these sequences, a PAPR of the entire STF is comparatively low, and a PAPR of each part of the STF is also comparatively low. If the STF needs to be allocated to a plurality of receive ends, a PAPR of a part, of the STF, that is received by each receive end is comparatively low. In this case, power utilization of the transmit end is comparatively high.

In a first possible implementation of the aspect of the application, a quantity of elements in the target field in the STF is an integer multiple of m, m is a quantity of subcarriers in one resource block RB, and m > 1. In the target field in the STF, basic elements in every m elements form a Golay sequence. To be specific, the STF is obtained by inserting a zero in at least one Golay sequence. Therefore, when the STF is obtained by inserting zeros in a plurality of Golay sequences, the STF includes elements in the plurality of Golay sequences. Under an influence of these Golay sequences, the entire STF includes a plurality of parts with comparatively low PAPRs, thereby further improving power utilization of the transmit end.

With reference to the first possible implementation of the aspect of the application, in a second possible implementation of the aspect of the application, m = 84, and a = 3; or m = 80, and a = 3. To be specific, when m is equal to 84 or 80, the target field in the STF may be obtained by inserting three zeros between any two elements in the Golay sequence, and inserting three zeros before or after all elements in the Golay sequence.

With reference to the first possible implementation of the aspect of the application, in a third possible implementation of the aspect of the application, when a channel bonding CB of the spectrum resource is 1, the target field in the STF is G1 (v, :), 1 < v < 8, G1 (1, :) = [S1, S2, S1, -S2], G1 (2, :) = [S1, S2, -S1, S2], G1 (3, :) = [S2, S1, S2, -S1], G1 (4, :) = [S2, S1, -S2, S1], G1 (5, :) = [S1, -S2, S1, S2], G1 (6, :) = [-S1, S2, S1, S2], G1 (7, :) = [S2, -S1, S2, S1], and G1 (8, :) = [-S2, S1, S2, S1], where S1 indicates a first sequence whose length is m, S2 indicates a second sequence whose length is m, -S1 indicates S1 multiplied by -1, -S2 indicates S2 multiplied by -1, basic elements in the first sequence S1 form a first Golay sequence R1, basic elements in the second sequence S2 form a second Golay sequence R2, and the first Golay sequence R1 is orthogonal to the second Golay sequence R2. To be specific, when the CB is 1, any STF generated by the transmit end may have eight possible choices, and when the transmit end supports a multiple-input multiple-output technology, the transmit end needs to simultaneously generate a plurality of orthogonal STFs. In this case, a plurality of orthogonal STFs may be generated based on the eight target fields provided in the third possible implementation.

With reference to the third possible implementation of the aspect of the application, in a fourth possible implementation of the aspect of the application, m = 84, the first Golay sequence R1 = [a0, 0, b0], the second Golay sequence R2 = [a0, 0, -b0], a0 = [1, 1, -1, 1, -1, 1, -1, -1, 1, 1], and b0 = [1, 1, -1, 1, 1, 1, 1, 1, -1, -1]. To be specific, when m = 4, if 84 elements need to be obtained by continuously inserting three zeros, a length of a used Golay sequence is 21. The Golay sequence whose length is 21 may be obtained by inserting one zero between two Golay sequences whose lengths are 10. In addition, the two Golay sequences whose lengths are 10 are both Golay sequences (including only two types of elements that are opposite numbers of each other) defined in a unit circle. Therefore, PAPRs of the two Golay sequences are both comparatively low, and PAPRs of STFs obtained based on the two Golay sequences are comparatively low.

With reference to the fourth possible implementation of the aspect of the application, in a fifth possible implementation of the aspect of the application, when the CB of the spectrum resource is 2, the target field in the STF is G2 (v, :), G2 (1, :) = [S1, S2, S1, -S2, S1, S1, S2, -S1, S2], G2 (2, :) = [S1, S2, S1, -S2, -S2, -S1, -S2, S1, -S2], G2 (3, :) = [S2, S1, -S2, S1, S1, S2, S1, S2, -S1], G2 (4, :) = [S2, S1, -S2, S1, -S2, -S2, -S1, -S2, S1], G2 (5, :) = [S1, -S2, S1, S2, S1, -S1, S2, S1, S2], G2 (6, :) = [S1, -S2, S1, S2, S1, S1, -S2, -S1, -S2], G2 (7, :) = [S2, -S1, S2, S1, S1, -S2, S1, S2, S1], and G2 (8, :) = [-S2, S1, S2, S1, -S1, S2, -S1, S2, S1]. In the fifth possible implementation, eight target fields are provided when the CB is 2, and PAPRs of STFs including the eight target fields are all comparatively low.

With reference to the fourth possible implementation of the aspect of the application, in a sixth possible implementation of the aspect of the application, when the CB of the spectrum resource is 3, the target field in the STF is G3 (v, :), G3 (1, :) = [S2, -S1, S2, S1, -S2, S2, S1, S2, -S1, S2, S2, -S1, -S2, -S1], G3 (2, :) = [-S2, S1, S2, S1, S1, S1, S2, -S1, S2, -S2, -S1, S2, S1, S2], G3 (3, :) = [S2, S1, -S2, S1, S1, S2, S1, S2, -S1, S1, S1, -S2, -S1, -S2], G3 (4, :) = [S1, -S2, S1, S2, -S1, -S2, -S1, -S2, S1, -S2, -S1, S2, S1, S2], G3 (5, :) = [S2, S1, S2, - S1, -S2, -S2, S1, -S2, -SS1, -S2, S2, S1, -S2, S1], G3 (6, :) = [S2, S1, -S2, S1, S2, S1, -S2, -S1, -S2, -S1, -S1, - S2, S1, -S2], G3 (7, :) = [S2, -S1, S2, S1, -S1, -S2, -S1, S2, -S1, -S1, -S2, S1, S2, S1], and G3 (8, :) = [S1, S2, - S1, S2, -S1, S2, S1, S2, -S1, -S2, -S1, -S2, -S1, S2]. In the sixth possible implementation, eight target fields are provided when the CB is 3, and PAPRs of STFs including the eight target fields are all comparatively low.

With reference to the fourth possible implementation of the aspect of the application, in a seventh possible implementation of the aspect of the application, when the CB of the spectrum resource is 4, the target field in the STF is G4 (v, :), G4 (1, :) = [S2, S1, -S2, S1, -S2, S1, S2, -S1, S2, S1, -S2, -S1, -S2, S1, -S2, S1, -S2, -S1, -S2], G4 (2, :) = [-S2, S1, S2, S1, S2, -S2, S1, -S2, -S1, -S1, S2, S1, S2, -S1, -S2, S2, S1, -S2, S1], G4 (3, :) = [S2, S1, -S2, S1, -S2, S1, S2, -S1, S2, -S1, -S2, S1, -S2, -S1, -S2, S1, -S2, -S1, -S2], G4 (4, :) = [S1, S2, S1, -S2, S1, -S2, S1, S2, S1, -S2, -S1, S2, -S1, -S2, S1, -S2, S1, -S2, -S1], G4 (5, :) = [S2, S1, S2, -S1, -S2, S1, -S2, S1, S2, -S1, S2, -S1, -S2, -S1, S2, -S1, -S2, -S1, S2], G4 (6, :) = [S2, -S1, S2, S1, S2, S1, -S2, -S1, -S2, S1, -S2, S1, S2, S1, S2, S1, -S2, S1, S2], G4 (7, :) = [S2, S1, S2, -S1, S2, -S1, S2, S1, S2, -S1, -S2, S1, -S2, -S1, S2, -S1, S2, -S1, -S2], and G4 (8, :) = [S2, S1, -S2, S1, S2, S1, S2, S1, -S2, S1, -S2, -S1, -S2, S1, S2, S1, S2, -S1, S2]. In the seventh possible implementation, eight target fields are provided when the CB is 4, and PAPRs of STFs including the eight target fields are all comparatively low.

With reference to the third possible implementation of the aspect of the application, in an eighth possible implementation of the aspect of the application, m = 80, the first Golay sequence R1 = [a0, b0], the second Golay sequence R2 = [a0, -b0], a0 = [1, 1, -1, 1, -1, 1, -1, -1, 1, 1], and b0 = [1, 1, -1, 1, 1, 1, 1, 1, -1, -1]. To be specific, when m = 4, if 80 elements need to be obtained by continuously inserting three zeros, a length of a used Golay sequence is 20. The Golay sequence whose length is 20 may be obtained by combining two Golay sequences whose lengths are 10. In addition, the two Golay sequences whose lengths are 10 are both Golay sequences (including only two types of elements that are opposite numbers of each other) defined in a unit circle. Therefore, PAPRs of the two Golay sequences are both comparatively low, and PAPRs of STFs obtained based on the two Golay sequences are comparatively low.

With reference to the eighth possible implementation of the aspect of the application, in a ninth possible implementation of the aspect of the application, when the CB of the spectrum resource is 2, the target field in the STF is G2 (v, :), G2 (1, :) = [G1 (4, :), S2, G1 (6, :)], G2 (2, :) = [G1 (7, :), S2, G1 (8, :)], G2 (3, :) = [G1 (4, :), S2, G1 (2, :)], G2 (4, :) = [G1 (3, :), S2, -G1 (1, :)], G2 (5, :) = [G1 (1, :), -S1, -G1 (7, :)], G2 (6, :) = [G1 (1, :), S2, G1 (2, :)], G2 (7, :) = [G1 (7, :), -S2, G1 (3, :)], and G2 (8, :) = [G1 (8, :), S2, G1 (6, :)]. In the ninth possible implementation, eight target fields are provided when the CB is 2, and PAPRs of STFs including the eight target fields are all comparatively low.

With reference to the eighth possible implementation of the aspect of the application, in a tenth possible implementation of the aspect of the application, when the CB of the spectrum resource is 3, the target field in the STF is G3 (v, :), G3 (1, :) = [G1 (5, :), S1, G1 (6, :), S2, -G1 (7, :)], G3 (2, :) = [G1 (1, :), -S1, -G1 (7, :), -S2, G1 (5, :)], G3 (3, :) = [G1 (7, :), -S2, -G1 (3, :), -S2, -G1 (8, :)], G3 (4, :) = [G1 (5, :), -S1, -G1 (3, :), -S2, G1 (6, :)], G3 (5, :) = [G1 (7, :), -S2, -G1 (1, :), -S1, G1 (8, :)], G3 (6, :) = [G1 (8, :), -S1, G1 (3, :), -S1, G1 (7, :)], G3 (7, :) = [G1 (5, :), -S1, G1 (3, :), S2, G1 (1, :)], and G3 (8, :) = [G1 (1, :), -S2, -G1 (6, :), S2, -G1 (2, :)]. In the tenth possible implementation, eight target fields are provided when the CB is 3, and PAPRs of STFs including the eight target fields are all comparatively low.

With reference to the eighth possible implementation of the aspect of the application, in an eleventh possible implementation of the aspect of the application, when the CB of the spectrum resource is 4, the target field in the STF is G4 (v, :), G4 (1, :) = [G1 (1, :), -G1 (1, :), G1 (5, :), G1 (2, :), G1 (2, :)], G4 (2, :) = [G1 (2, :), -G1 (2, :), G1 (6, :), G1 (1, :), G1 (1, :)], G4 (3, :)= [G1 (5, :), G1 (5, :), G1 (2, :), -G1 (6, :), G1 (6, :)], G4 (4, :) = [G1 (5, :), -G1 (5, :), -G1 (1, :), -G1 (6, :), -G1 (6, :)], G4 (5, :) = [G1 (1, :), G1 (1, :), -G1 (6, :), G1 (2, :), - G1 (2, :)], G4 (6, :) = [G1 (4, :), -G1 (4, :), G1 (8, :), G1 (3, :), G1 (3, :)], G4 (7, :) = [G1 (3, :), -G1 (3, :), -G1 (7, :), G1 (4, :), G1 (4, :)], and G4 (8, :) = [G1 (6, :), G1 (6, :), G1 (1, :), -G1 (5, :), G1 (5, :)]. In the eleventh possible implementation, eight target fields are provided when the CB is 4, and PAPRs of STFs including the eight target fields are all comparatively low.

## BRIEF DESCRIPTION OF DRAWINGS

FIG. 1 is a schematic structural diagram of a data transmission system;

FIG. 2 is a flowchart of a data transmission method according to an embodiment of this application;

FIG. 3 is a schematic structural diagram of a spectrum resource for transmitting an STF;

FIG. 4 is a schematic structural diagram of a spectrum resource including one bonded channel according to an embodiment of this application;

FIG. 5 is a schematic diagram of a plurality of allocation cases for a spectrum resource shown in FIG. 4 according to an embodiment of this application;

FIG. 6 is a schematic diagram of a PAPR;

FIG. 7 is a schematic structural diagram of a spectrum resource including two bonded channels according to an embodiment of this application;

FIG. 8 is a schematic diagram of a plurality of allocation cases for a spectrum resource shown in FIG. 7 according to an embodiment of this application;

FIG. 9 is a schematic diagram of another PAPR;

FIG. 10 is a schematic structural diagram of a spectrum resource including three bonded channels according to an embodiment of this application;

FIG. 11 is a schematic diagram of a plurality of allocation cases for a spectrum resource shown in FIG. 10 according to an embodiment of this application;

FIG. 12 is a schematic diagram of another PAPR;

FIG. 13 is a schematic structural diagram of a spectrum resource including four bonded channels according to an embodiment of this application;

FIG. 14 is a schematic diagram of a plurality of allocation cases for a spectrum resource shown in FIG. 13 according to an embodiment of this application;

FIG. 15 is a schematic diagram of another PAPR;

FIG. 16 is a schematic structural diagram of another spectrum resource including one bonded channel according to an embodiment of this application;

FIG. 17 is a schematic diagram of a plurality of allocation cases for a spectrum resource shown in FIG. 16 according to an embodiment of this application;

FIG. 18 is a schematic diagram of another PAPR;

FIG. 19 is a schematic structural diagram of another spectrum resource including two bonded channels according to an embodiment of this application;

FIG. 20 is a schematic diagram of a plurality of allocation cases for a spectrum resource shown in FIG. 19 according to an embodiment of this application;

FIG. 21 is a schematic diagram of another PAPR;

FIG. 22 is a schematic structural diagram of a spectrum resource including three bonded channels according to an embodiment of this application;

FIG. 23 is a schematic diagram of a plurality of allocation cases for a spectrum resource shown in FIG. 22 according to an embodiment of this application;

FIG. 24 is a schematic diagram of another PAPR;

FIG. 25 is a schematic structural diagram of another spectrum resource including four bonded channels according to an embodiment of this application;

FIG. 26 is a schematic diagram of another PAPR;

FIG. 27 is a schematic diagram of another PAPR;

FIG. 28 is a schematic diagram of another PAPR;

FIG. 29 is a schematic diagram of another PAPR;

FIG. 30 is a schematic diagram of another PAPR;

FIG. 31 is a schematic diagram of another PAPR;

FIG. 32 is a schematic structural diagram of a data transmission apparatus according to an embodiment of this application;

FIG. 33 is a schematic structural diagram of another data transmission apparatus according to an embodiment of this application;

FIG. 34 is a schematic structural diagram of still another data transmission apparatus according to an embodiment of this application; and

FIG. 35 is a schematic structural diagram of yet another data transmission apparatus according to an embodiment of this application.

## DESCRIPTION OF EMBODIMENTS

To make the objectives, technical solutions, and advantages of this application clearer, the following further describes the implementations of this application in detail with reference to the accompanying drawings.

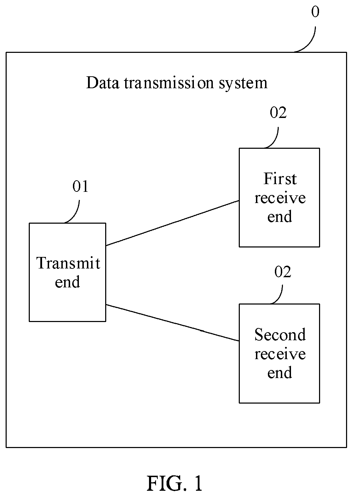

FIG. 1 is a schematic structural diagram of a data transmission system according to an embodiment of this application. As shown in FIG. 1, the data transmission system 0 may include a transmit end 01 and at least one receive end 02. The transmit end may establish a wireless communication connection to each receive end.

It should be noted that the data transmission system 0 may include one receive end 02, or may include a plurality of receive ends 02. In this embodiment of this application, for example, the data transmission system 0 includes a plurality of receive ends 02, such as two receive ends 02 in FIG. 1. One of the two receive ends 02 may be referred to as a first receive end, and the other receive end may be referred to as a second receive end. Either of the transmit end 01 and the receive end 02 may be a device such as a base station or a wireless access point (Access Point, AP), and the other one is user equipment (User Equipment, UE). In this embodiment of this application, for example, the transmit end 01 is a base station, and the receive end 02 is UE (such as a mobile phone or a computer). Optionally, the transmit end 01 may be alternatively UE, and the receive end 02 may be alternatively a base station or an AP. This is not limited in this embodiment of this application.

The transmit end 01 and the receive end 02 in FIG. 1 may transmit data on a frequency band of 60 GHz by transmitting a PPDU. The PPDU includes a preamble and a data part that carries to-be-transmitted data. The preamble is used to indicate a parameter of the data part. For example, an STF in the preamble is used to indicate an initial location of the data part, and the receive end can determine the initial location of the data part based on the STF.

It should be noted that existing IEEE802.11ay allows a transmit end to transmit data only to one receive end on one spectrum resource. To enable a transmit end to concurrently transmit data to a plurality of receive ends on one spectrum resource, an orthogonal frequency division multiple access (Orthogonal frequency division multiple access, OFDMA) technology may be introduced based on the IEEE802.11ay. By using the OFDMA technology, one spectrum resource may be divided into a plurality of subcarriers, and the plurality of subcarriers are allocated to the plurality of receive ends in a one-to-one correspondence. Correspondingly, an STF in a PPDU is divided into a plurality of parts that are in a one-to-one correspondence with the plurality of receive ends. When the transmit end transmits the STF in the PPDU to the plurality of receive ends, a part, corresponding to each receive end, of the STF is transmitted on a subcarrier allocated to the receive end. In this case, although a PAPR of the entire STF (that is, all sub-STFs) in the PPDU sent by the transmit end can be comparatively low based on the design of the STF in the IEEE802.11ay, a PAPR of each part of the STF is still comparatively high, thereby limiting improvement of power utilization of the transmit end.

However, the embodiments of this application provide a data transmission method based on a Golay sequence. In the data transmission method, an overall PAPR of an STF in a PPDU generated by a transmit end is comparatively low, and the STF also includes a part with a comparatively low PAPR.

The Golay sequence is used in the data transmission method provided in the embodiments of this application. Therefore, before the data transmission method provided in the embodiments of this application is described, the Golay sequence is first defined in the embodiments of this application. For example, it is assumed that both a sequence c and a sequence d are binary sequences (that is, sequences including two types of elements) whose lengths are N, where $c = (c(0), c(1),...,c(N-1))$, and $d = (d(0),d(1),...,d(N-1))$. c (u) indicates the (u+1)th element in the sequence c, d (u) indicates the (u+1)th element in the sequence d, and $0 \le u \le N - 1$. If $C_{cd}(t) + C_{dc}(t) = 0$ and $1 \le t < N$, both the sequence c and the sequence d are Golay sequences, and the sequence c and the sequence d are referred to as a Golay sequence pair, where $C_{cd}(t) = \sum_{i=0}^{N-1} c_i d_{N-1-t}$, and $C_{dc}(t) = \sum_{i=0}^{N-1} d_i c_{N-1-t}$.

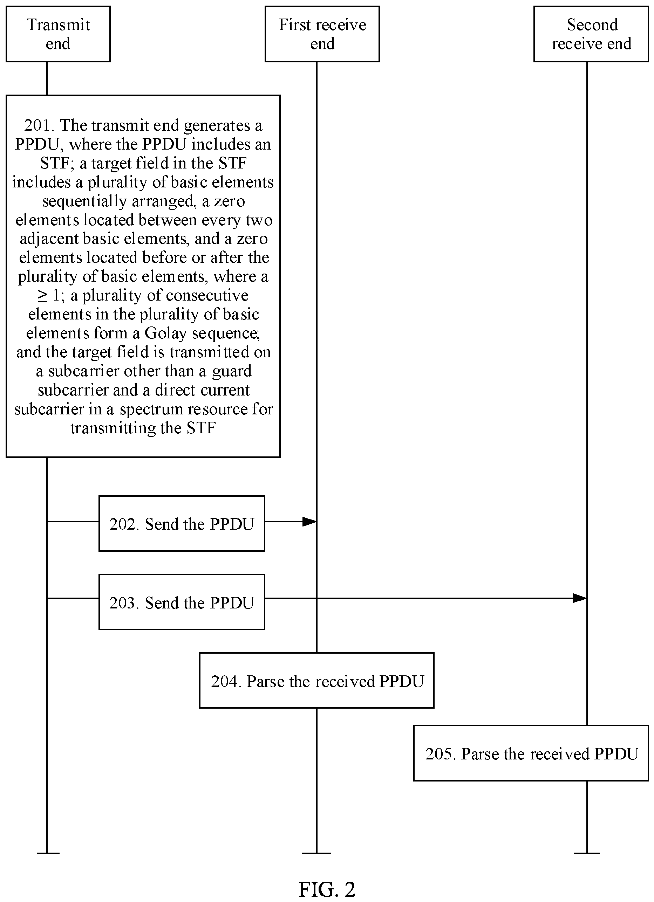

FIG. 2 is a flowchart of a data transmission method according to an embodiment of this application. The data transmission method may be used in the data transmission system shown in FIG. 2. As shown in FIG. 2, the data transmission method includes the following steps.

Step 201: A transmit end generates a PPDU. The PPDU includes an STF. A target field in the STF includes a plurality of basic elements sequentially arranged, a zero elements located between every two adjacent basic elements, and a zero elements located before or after the plurality of basic elements, wherein "a" in "a zero elements" represents quantity of zero elements and "a" ≥ 1. A plurality of consecutive elements in the plurality of basic elements form a Golay sequence. The target field is transmitted on a subcarrier other than a guard subcarrier and a direct current subcarrier in a spectrum resource for transmitting the STF.

In step 201, the transmit end may generate the PPDU based on to-be-sent data. The PPDU may include a preamble and a data part. The preamble may also include an STF, and the data part may carry the to-be-sent data. Optionally, the PPDU may further include a part other than the preamble and the data part, for example, a reserved bit, and the preamble may further include a part other than the STF, for example, a CEF. This is not limited in this embodiment of this application.

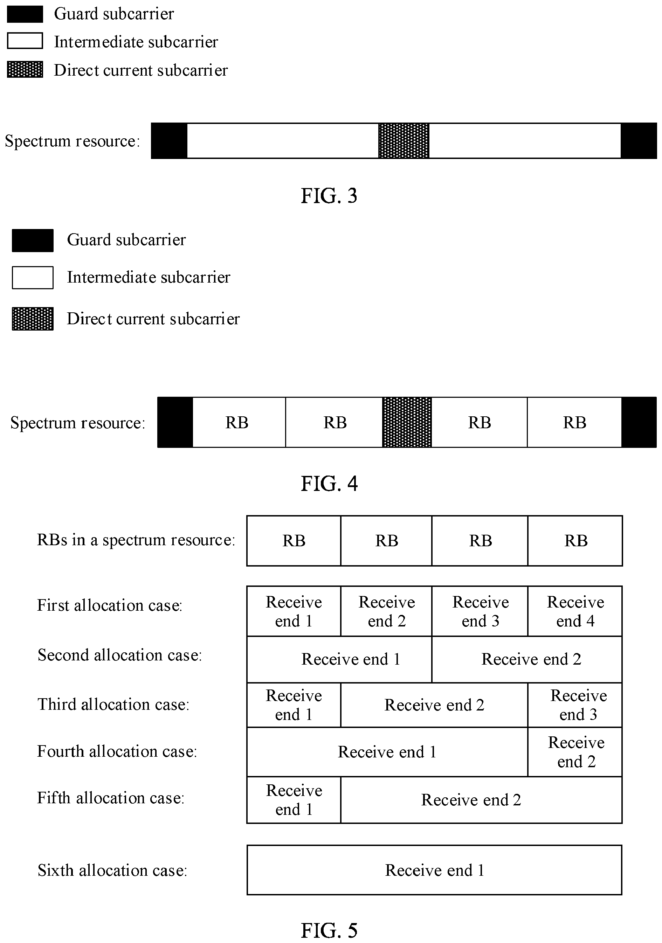

It should be noted that the STF in the PPDU can be transmitted on a spectrum resource. The spectrum resource may be divided into a plurality of subcarriers. The plurality of subcarriers are in a one-to-one correspondence with elements in the STF, and each element is transmitted on a subcarrier corresponding to the element. FIG. 3 is a schematic structural diagram of a spectrum resource for transmitting an STF according to an embodiment of this application. As shown in FIG. 3, a plurality of subcarriers in the spectrum resource may include two guard subcarriers, one direct current subcarrier, and two intermediate subcarriers. The two intermediate subcarriers are located on two sides of the direct current subcarrier, and both the two intermediate subcarriers and the direct current subcarrier are located between the two guard subcarriers. In this embodiment of this application, a part, of the STF, that is transmitted on the two intermediate subcarriers (that is, subcarriers other than the direct current subcarrier and the guard subcarriers) is referred to as a target field.

Optionally, in this embodiment of this application, the target field in the STF in the PPDU generated by the transmit end may include a plurality of basic elements sequentially arranged, a zero elements located between every two adjacent basic elements, and a zero elements located before or after the plurality of basic elements, wherein "a" in "a zero elements" represents quantity of zero elements and "a" ≥ 1. In addition, a plurality of consecutive elements in the plurality of basic elements form a Golay sequence.

It should be noted that the plurality of basic elements sequentially arranged, the a zero elements located before or after the plurality of basic elements, and the a zero elements located between every two adjacent basic elements may form a group of elements that meet a specified arrangement rule, wherein "a" in "a zero elements" represents quantity of zero elements and "a" ≥1, and the target field in the STF may include one or more groups of elements that meet the specified arrangement rule. This is not limited in this embodiment of this application. In addition, the target field in the STF may further include another element in addition to the one or more groups of elements that meet the specified arrangement rule. This is not limited in this embodiment of this application.

For example, it is assumed that the target field in the STF includes [0, 0, 0, 1, 0, 0, 0, 1, 0, 0, 0, -1, 0, 0, 0, 1, 0, 0, 0, -1, 0, 0, 0, 1, 0, 0, 0, -1, 0, 0, 0, -1, 0, 0, 0, 1, 0, 0, 0, 1]. In this case, all non-zero elements in the target field may be referred to as basic elements, three zero elements exist between every two basic elements, three zero elements exist before a plurality of basic elements, a plurality of basic elements in the target field form one Golay sequence, and each Golay sequence is [1, 1, -1, 1, -1, 1, -1, -1, 1, 1]. In this case, the target field in the STF includes one group of elements that meet the specified arrangement rule.

It is assumed that the target field in the STF includes [0, 0, 0, 1, 0, 0, 0, 1, 0, 0, 0, -1, 0, 0, 0, 1, 0, 0, 0, -1, 0, 0, 0, 1, 0, 0, 0, -1, 0, 0, 0, 1, 0, 0, 0, 1, 0, 0, 0, 1, 0, 0, 0, 1, 0, 0, 0, -1, 0, 0, 0, 1, 0, 0, 0, -1, 0, 0, 0, 1, 0, 0, 0, -1, 0, 0, 0, -1, 0, 0, 0, 1, 0, 0, 0, 1, 0, 0, 0, 1, 0, 0, 0, -1, 0, 0, 0, 1, 0, 0, 0, -1, 0, 0, 0, 1, 0, 0, 0, - 1, 0, 0, 0, -1, 0, 0, 0, 1, 0, 0, 0, 1, 0, 0, 0, 1, 0, 0, 0, 1, 0, 0, 0, -1, 0, 0, 0, 1, 0, 0, 0, -1, 0, 0, 0, 1, 0, 0, 0, -1, 0, 0, 0, - 1, 0, 0, 0, 1, 0, 0, 0, 1]. In this case, all non-zero elements in the target field may be referred to as basic elements, three zero elements exist between every two basic elements, three zero elements exist before a plurality of basic elements, a plurality of basic elements in the target field form four Golay sequences, and each Golay sequence is [1, 1, -1, 1, - 1, 1, -1, -1, 1, 1]. In this case, the target field in the STF includes four groups of elements that meet the specified arrangement rule.

For another example, it is assumed that the target field in the STF includes [0, 0, 0, 0, 1, 0, 0, 0, 0, 1, 0, 0, 0, 0, -1, 0, 0, 0, 0, 1, 0, 0, 0, 0, 1, 0, 0, 0, 0, 1, 0, 0, 0, 0, 1, 0, 0, 0, 0, 1, 0, 0, 0, 0, -1, 0, 0, 0, 0, 1]. In this case, all non-zero elements in the target field may be referred to as basic elements, four zero elements exist between every two basic elements, four zero elements exist before a plurality of basic elements, a plurality of basic elements in the target field form four Golay sequences, and each Golay sequence is [1, 1, -1, 1, 1, 1, 1, 1, -1]. In this case, the target field in the STF includes one group of elements that meet the specified arrangement rule.

It should be noted that, in this embodiment of this application, only that $a = 3$ or $4$ is used as an example. In actual application, a may be alternatively another integer greater than or equal to 1, and a Golay sequence including basic elements is not limited to the two types of Golay sequences provided above.

In general, at least some of elements in the target field in the STF generated by the transmit end are arranged according to a regular pattern that one target element is arranged next to a zero elements (or a zero elements are arranged next to each target element), wherein "a" in "a zero elements" represents quantity of zero elements and "a" $\geq 1$, so that a plurality of target elements in the target field include a plurality of consecutive elements that can form a Golay sequence. The Golay sequence is characterized by a comparatively low PAPR. For example, a PAPR of a Golay sequence defined in a unit circle is usually approximately 3. The Golay sequence defined in the unit circle includes two types of elements, and the two types of elements are opposite numbers of each other. For example, the two types of elements are 1 and -1, or j (an imaginary number unit) and -j. Inserting a zero element in the Golay sequence does not greatly affect a PAPR of a sequence obtained after the zero element is inserted. Therefore, when the target field in the STF includes a plurality of consecutive target elements that can form a plurality of Golay sequences, the target field in the STF includes a plurality of sequences characterized by low PAPRs. Under an influence of these sequences, a PAPR of the entire STF is comparatively low, and a PAPR of each part of the STF is also comparatively low. If the STF needs to be allocated to a plurality of receive ends, a PAPR of a part, of the STF, that is received by each receive end is comparatively low. In this case, power utilization of the transmit end is comparatively high.

In addition, it should be noted that both the transmit end and the receive end in this embodiment of this application can support a multiple-input multiple-output (Multiple-Input Multiple-Output, MIMO) technology. To be specific, the transmit end may have transmit antennas whose quantity is equal to that of target spatial flows, the receive end may have receive antennas whose quantity is equal to that of target spatial flows, and the quantity of target spatial flows is an integer greater than or equal to 2. The transmit end may send the PPDU to the receive end by using the transmit antennas and the receive antennas. In this case, the PPDU may include STFs whose quantity is equal to that of target spatial flows, and the STFs whose quantity is equal to that of target spatial flows are separately sent by the transmit antennas whose quantity is equal to that of target spatial flows. At least one of the STFs whose quantity is equal to that of target spatial flows (for example, each STF or a plurality of STFs in the STFs whose quantity is equal to that of target spatial flows) meets the foregoing STF characteristics (that is, the PAPR of the entire STF is comparatively low, and the PAPR of each part of the STF is also comparatively low).

In addition, to prevent impact between the STFs whose quantity is equal to that of target spatial flows, any two of the STFs whose quantity is equal to that of target spatial flows may be orthogonal. It should be noted that, it is assumed that both a sequence c and a sequence d are binary sequences (that is, sequences including two types of elements) whose lengths are N, where $c = (c(0), c(1), ..., c(N-1))$, and $d = [d(0), d(1), ..., d(N-1))$. c (u) indicates the $(u+1)^{th}$ element in the sequence c, d (u) indicates the $(u+1)^{th}$ element in the sequence d, and $0 \leq u \leq N - 1$. If $C_{cd}(t) = 0$, the sequence c and the sequence d may be referred to as being orthogonal.

Step 202: The transmit end sends the PPDU to a first receive end.

Step 203: The transmit end sends the PPDU to a second receive end.

In this embodiment of this application, the transmit end may send the PPDU to one or more receive ends. In this embodiment of this application, only that the transmit end sends the PPDU to two receive ends (that is, the first receive end and the second receive end) is used as an example.

When the transmit end sends the PPDU to one receive end, the spectrum resource for transmitting the STF in the PPDU is entirely allocated to the receive end, and all elements in the STF are elements that need to be sent to the receive end. When the transmit end sends the PPDU to a plurality of receive ends, the spectrum resource for transmitting the STF in the PPDU may be divided into a plurality of subcarriers, and the plurality of subcarriers are allocated to the plurality of receive ends in a one-to-one correspondence. Based on division of subcarriers in the spectrum resource, elements in the STF may also be divided into a plurality of segments of elements. The plurality of segments of elements are in a one-to-one correspondence with the plurality of subcarriers, and each segment of elements is transmitted to a receive end corresponding to the segment of elements on a subcarrier corresponding to the segment of elements.

After the transmit end sends the PPDU, the first receive end and the second receive end each may receive the PPDU.

Step 204: The first receive end parses the received PPDU.

Step 205: The second receive end parses the received PPDU.

After receiving the PPDU, each receive end may parse the preamble and the data part in the PPDU, to obtain the data that needs to be sent by the transmit end to the receive end. During parsing of the STF in the preamble, a starting location of the data part may be determined based on the STF. Then the data part may be parsed based on the starting location, to obtain the data in the data part.

Optionally, a minimum unit that is in the spectrum resource for transmitting the STF and that can be allocated to the receive end is a resource block (Resource block, RB). In this case, the spectrum resource may include at least one resource block, and a quantity of subcarriers in one resource block (Resource block, RB) may be m. A quantity of elements in the target field in the STF in the PPDU generated by the transmit end in step 201 may be an integer multiple of m, where m > 1. The STF in the PPDU varies with different values of m. The STF in the PPDU generated in step 201 is described below by using three examples.

In a first example, m = 84, and the STF may include at least three of four sequences S1, S2, -S1, and -S2. S1 indicates a first sequence whose length is m, S2 indicates a second sequence whose length is m, -S1 indicates S1 multiplied by -1, and -S2 indicates S2 multiplied by -1. Basic elements in the first sequence S1 form a first Golay sequence R1, basic elements in the second sequence S2 form a second Golay sequence R2, and the first Golay sequence R1 is orthogonal to the second Golay sequence R2. For example, the first Golay sequence R1 = [a0, 0, b0], and the second Golay sequence R2 = [a0, 0, -b0]. In this embodiment of this application, for example, a0 = [1, 1, -1, 1, -1, 1, -1, -1, 1, 1], and b0 = [1, 1, -1, 1, 1, 1, 1, 1, -1, -1]. Optionally, alternatively, a0 = [1, 1, 1, 1, 1, -1, 1, -1, - 1, 1], and b0 = [1, 1, -1, -1, 1, 1, 1, -1, 1, -1]. This is not limited in this embodiment of this application.

It should be noted that the spectrum resource for transmitting the STF may include at least one bonded channel, that is, a channel bonding (Channel bonding, CB) of the spectrum resource ≥ 1. In addition, when CBs of spectrum resources are different, quantities of RBs in the spectrum resources are different, cases of allocating the spectrum resources to the receive end are also different, and correspondingly, STFs are also different. Spectrum resources with different CBs are described below by using examples.

According to a first aspect, FIG. 4 is a schematic structural diagram of a spectrum resource including one bonded channel (that is, a CB is 1, and bandwidth may be 2.16 GHz) according to an embodiment of this application. As shown in FIG. 4, the spectrum resource may include two guard subcarriers, one direct current subcarrier, and two intermediate subcarriers. Each of the two intermediate subcarriers includes two RBs, and the two intermediate subcarriers include four RBs in total. Each RB includes 84 subcarriers, and the two intermediate subcarriers include 336 subcarriers in total.

FIG. 5 is a schematic diagram of a plurality of allocation cases for the spectrum resource shown in FIG. 4 according to an embodiment of this application. As shown in FIG. 5, there may be six allocation cases for the spectrum resource shown in FIG. 4. In a first allocation case, the four RBs in the spectrum resource may be allocated to a maximum of four receive ends. For example, a first RB is allocated to a receive end 1, a second RB is allocated to a receive end 2, a third RB is allocated to a receive end 3, and a fourth RB is allocated to a receive end 4. In a second allocation case, the four RBs in the spectrum resource may be allocated to a maximum of two receive ends. For example, a first RB and a second RB are both allocated to a receive end 1, and a third RB and a fourth RB are both allocated to a receive end 2. In a third allocation case, the four RBs in the spectrum resource may be allocated to a maximum of three receive ends. For example, a first RB is allocated to a receive end 1, a second RB and a third RB are both allocated to a receive end 2, and a fourth RB is allocated to a receive end 3. In a fourth allocation case, the four RBs in the spectrum resource may be allocated to a maximum of two receive ends. For example, a first RB, a second RB, and a third RB are all allocated to a receive end 1, and a fourth RB is allocated to a receive end 2. In a fifth allocation case, the four RBs in the spectrum resource may be allocated to a maximum of two receive ends. For example, a first RB is allocated to a receive end 1, and a second RB, a third RB, and a fourth RB are all allocated to a receive end 2. In a sixth allocation case, the four RBs in the spectrum resource may be allocated to a maximum of one receive end. For example, a first RB, a second RB, a third RB, and a fourth RB are all allocated to a receive end 1.

Based on the structure of the spectrum resource shown in FIG. 4 and the plurality of allocation cases shown in FIG. 5, the target field in the STF obtained by the transmit end may be any one of the following eight target fields. For example, when the CB of the spectrum resource is 1, the target field in the STF is G1 (v, :), where $1 \leq v \leq 8$; and

$$G1\ (1,\ :) = [S1,\ S2,\ S1,\ -S2];$$

$$G1\ (2,\ :) = [S1,\ S2,\ -S1,\ S2];$$

$$G1 (3, :) = [S2, S1, S2, -S1];$$

$$G1 (4, :) = [S2, S1, -S2, S1];$$

$$G1 (5, :) = [S1, -S2, S1, S2];$$

$$G1 (6, :) = [-S1, S2, S1, S2];$$

$$G1 (7, :) = [S2, -S1, S2, S1];$$

and

$$G1 (8, :) = [-S2, S1, S2, S1].$$

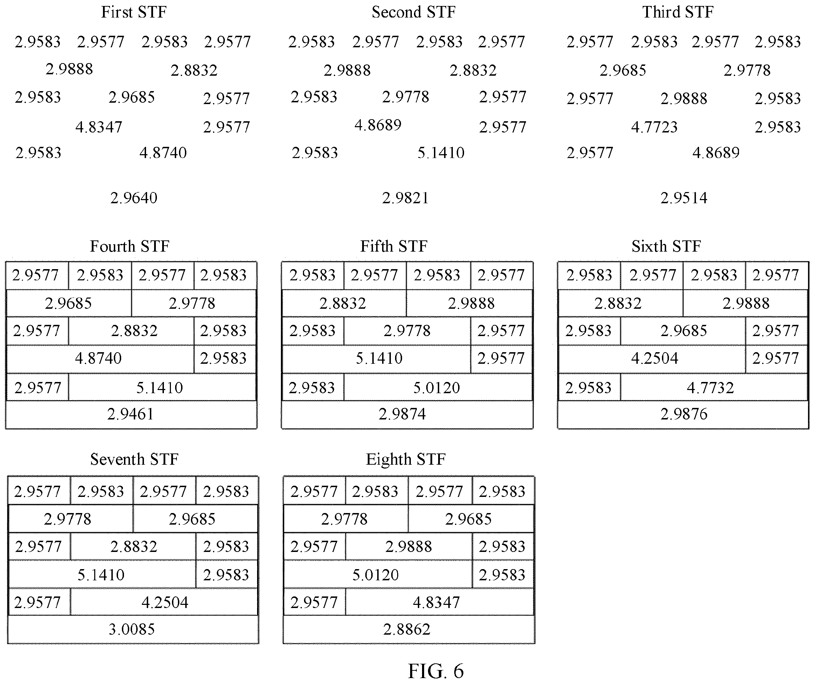

Based on eight STFs including the eight target fields, FIG. 6 shows PAPRs of the eight STFs in a plurality of allocation cases for the spectrum resource. As shown in FIG. 6, for a first STF, when the spectrum resource is allocated to four receive ends according to the first allocation case in FIG. 5, PAPRs of four segments of elements transmitted on four subcarriers allocated to the four receive ends are all comparatively low. For example, a PAPR of a segment of elements transmitted on a subcarrier allocated to a receive end 1 is 2.9583, a PAPR of a segment of elements transmitted on a subcarrier allocated to a receive end 2 is 2.9577, a PAPR of a segment of elements transmitted on a subcarrier allocated to a receive end 3 is 2.9583, and a PAPR of a segment of elements transmitted on a subcarrier allocated to a receive end 4 is 2.9577. When the spectrum resource is allocated to two receive ends according to the second allocation case in FIG. 5, PAPRs of two segments of elements transmitted on two intermediatesubcarriers allocated to the two receive ends are both comparatively low. For example, a PAPR of a segment of elements transmitted on a subcarrier allocated to a receive end 1 is 2.9888, and a PAPR of a segment of elements transmitted on a subcarrier allocated to a receive end 2 is 2.8832. When the spectrum resource is allocated to one receive end according to the sixth allocation case in FIG. 5, a PAPR of a segment of elements (that is, the entire STF) transmitted on a subcarrier (that is, the entire spectrum resource) allocated to the receive end is comparatively low (for example, the PAPR is 2.9640). It can be learned from FIG. 6 that, for each of the eight STFs, regardless of how the spectrum resource is allocated, an overall PAPR of each STF is comparatively low, and a PAPR of a part, of each STF, that is transmitted to each receive end is also comparatively low. Regardless of which one of the eight STFs is generated by the transmit end, a PAPR of the STF is comparatively low, and a PAPR of a part of the STF is also comparatively low. Optionally, when the quantity of target spatial flows is 8, the transmit end may generate the eight orthogonal STFs.

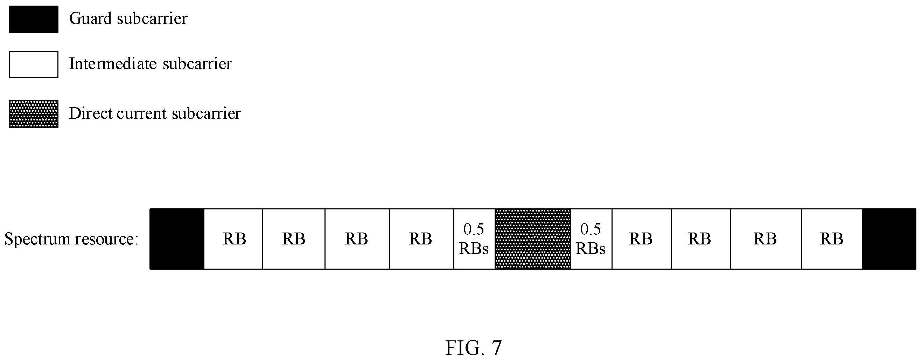

According to a second aspect, FIG. 7 is a schematic structural diagram of a spectrum resource including two bonded channels (that is, a CB is 2, and bandwidth may be 4.32 GHz) according to an embodiment of this application. As shown in FIG. 7, the spectrum resource may include two guard subcarriers, one direct current subcarrier, and two intermediate subcarriers. Each of the two intermediate subcarriers includes 4.5 RBs, and the two intermediate subcarriers include nine RBs in total. Each RB includes 84 subcarriers, and the two intermediate subcarriers may include 756 subcarriers.

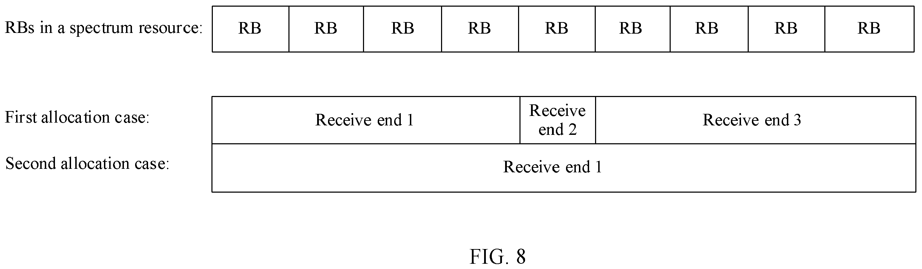

FIG. 8 is a schematic diagram of a plurality of allocation cases for the spectrum resource shown in FIG. 7 according to an embodiment of this application. As shown in FIG. 8, there may be two allocation cases for the spectrum resource shown in FIG. 7. In a first allocation case, the nine RBs in the spectrum resource may be allocated to a maximum of three receive ends. For example, a first RB to a fourth RB are all allocated to a receive end 1, a fifth RB is allocated to a receive end 2, and a sixth RB to a ninth RB are all allocated to a receive end 3. In a second allocation case, the nine RBs in the spectrum resource may be allocated to a maximum of one receive end. For example, a first RB to a ninth RB are all allocated to a receive end 1.

Based on the structure of the spectrum resource shown in FIG. 7 and the plurality of allocation cases shown in FIG. 8, the target field in the STF generated by the transmit end may be any one of the following eight target fields. For example, when the CB of the spectrum resource is 2, the target field in the STF is G2 (v, :), and a length of G2 (v, :) is 756; and

G2 (1, :) = [S1, S2, S1, –S2, S1, S1, S2, –S1, S2];

G2 (2, :) = [S1, S2, S1, –S2, –S2, –S1, –S2, S1, –S2];

G2 (3, :) = [S2, S1, –S2, S1, S1, S2, S1, S2, –S1];

G2 (4, :) = [S2, S1, –S2, S1, –S2, –S2, –S1, –S2, S1];

G2 (5, :) = [S1, –S2, S1, S2, S1, –S1, S2, S1, S2];

G2 (6, :) = [S1, –S2, S1, S2, S1, S1, –S2, –S1, –S2];

G2 (7, :) = [S2, –S1, S2, S1, S1, –S2, S1, S2, S1];

and G2 (8, :) = [–S2, S1, S2, S1, –S1, S2, –S1, S2, S1].

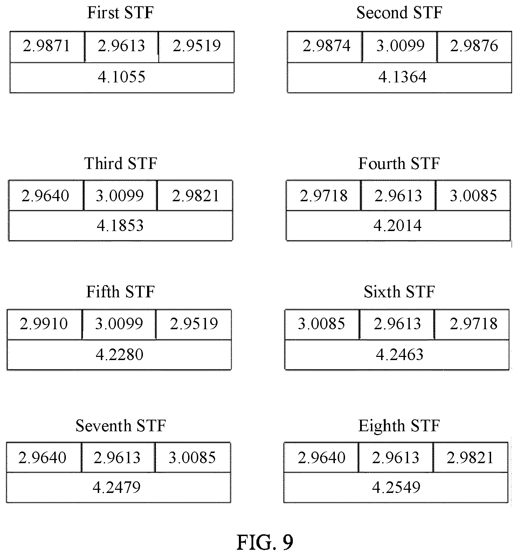

Based on eight STFs including the eight target fields, FIG. 9 shows PAPRs of the eight STFs in a plurality of allocation cases for the spectrum resource. As shown in FIG. 9, for a first STF, when the spectrum resource is allocated to three receive ends according to the first allocation case in FIG. 8, PAPRs of three segments of elements transmitted on three subcarriers allocated to the three receive ends are all comparatively low. For example, a PAPR of a segment of elements transmitted on a subcarrier allocated to a receive end 1 is 2.9871, a PAPR of a segment of elements transmitted on a subcarrier allocated to a receive end 2 is 2.9613, and a PAPR of a segment of elements transmitted on a subcarrier allocated to a receive end 3 is 2.9519. When the spectrum resource is allocated to one receive end according to the second allocation case in FIG. 8, a PAPR of a segment of elements (that is, the entire STF) transmitted on a subcarrier (that is, the entire spectrum resource) allocated to the receive end is comparatively low (for example, the PAPR is 4.1055). It can be learned from FIG. 9 that, for each of the eight STFs, regardless of how the spectrum resource is allocated, an overall PAPR of each STF is comparatively low, and a PAPR of a part, of each STF, that is transmitted to each receive end is also comparatively low. Regardless of which one of the eight STFs is generated by the transmit end, a PAPR of the STF is comparatively low, and a PAPR of a part of the STF is also comparatively low. Optionally, when the quantity of target spatial flows is 8, the transmit end may generate the eight orthogonal STFs.

It should be noted that, when the CB of the spectrum resource is 2, the STF may be obtained through permutations and combinations based on some basic sequences. For example, G2 (v, :) may be divided into three segments of elements based on the first allocation case for the spectrum resource in FIG. 8, a first segment of elements is transmitted on a first RB to a fourth RB, a second segment of elements is transmitted on a fifth RB, and a third segment of elements is transmitted on a sixth RB to a ninth RB. The first segment of elements may be obtained by selecting a target field in any one of the eight STFs obtained when the CB of the spectrum resource is 1 and eight other STFs obtained by multiplying the eight STFs by -1 (16 STFs in total). The second segment of elements may be obtained by selecting any sequence from S1, S2, -S1, and -S2. The third segment of elements may be obtained by selecting a target field in any one of the eight STFs and the eight other STFs obtained by multiplying the eight STFs by -1 (16 STFs in total). Therefore, $16 \times 4 \times 16$ STFs can be obtained in total through different permutations and combinations. Then eight orthogonal STFs with comparatively low PAPRs may be selected from the $16 \times 4 \times 16$ STFs as eight STFs in the PPDU when the spectrum resource includes two bonded channels.

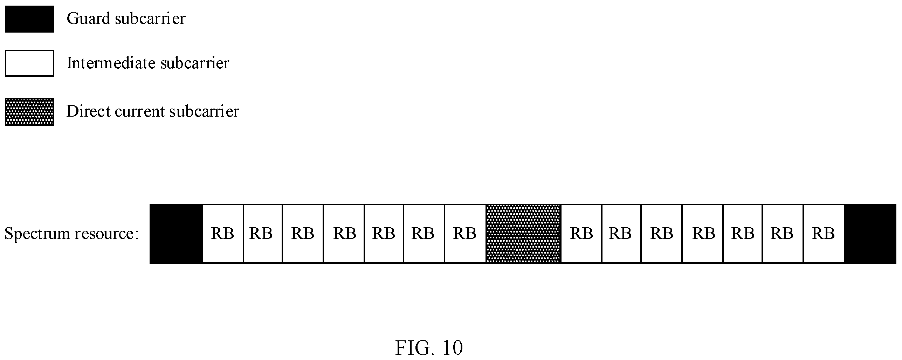

According to a third aspect, FIG. 10 is a schematic structural diagram of a spectrum resource including three bonded channels (that is, a CB is 3, and bandwidth may be 6.48 GHz) according to an embodiment of this application. As shown in FIG. 10, the spectrum resource may include two guard subcarriers, one direct current subcarrier, and two intermediate subcarriers. Each of the two intermediate subcarriers includes seven RBs, and the two intermediate subcarriers include 14 RBs in total. Each RB includes 84 subcarriers, and the two intermediate subcarriers include 1176 subcarriers in total.

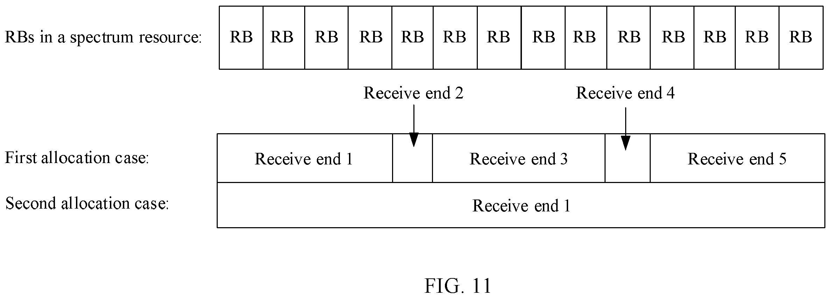

FIG. 11 is a schematic diagram of a plurality of allocation cases for the spectrum resource shown in FIG. 10 according to an embodiment of this application. As shown in FIG. 11, there may be two allocation cases for the spectrum resource shown in FIG. 10. In a first allocation case, the 14 RBs in the spectrum resource may be allocated to a maximum of five receive ends. For example, a first RB to a fourth RB are all allocated to a receive end 1, a fifth RB is allocated to a receive end 2, a sixth RB to a ninth RB are all allocated to a receive end 3, a tenth RB is allocated to a receive end 4, and an eleventh RB to a fourteenth RB are all allocated to a receive end 5. In a second allocation case, the 14 RBs in the spectrum resource may be allocated to a maximum of one receive end. For example, a first RB to a fourteenth RB are all allocated to a receive end 1.

Based on the structure of the spectrum resource shown in FIG. 10 and the plurality of allocation cases shown in FIG. 11, the target field in the STF generated by the transmit end may be any one of the following eight target fields. For example, when the CB of the spectrum resource is 3, the target field in the STF is G3 (v, :), and a length of G3 (v, :) is 1176; and

$$G3\ (1, :) = [S2, -S1, S2, S1, -S2, S2, S1, S2, -S1, S2, S2, -S1, -S2, -S1];$$

$$G3\ (2, :) = [-S2, S1, S2, S1, S1, S1, S2, -S1, S2, -S2, -S1, S2, S1, S2];$$

$$G3\ (3, :) = [S2, S1, -S2, S1, S1, S2, S1, S2, -S1, S1, S1, -S2, -S1, -S2];$$

$$G3\ (4, :) = [S1, -S2, S1, S2, -S1, -S2, -S1, -S2, S1, -S2, -S1, S2, S1, S2];$$

$$G3\ (5, :) = [S2, S1, S2, -S1, -S2, -S2, S1, -S2, -S1, -S2, S2, S1, -S2, S1];$$

$$G3\ (6, :) = [S2, S1, -S2, S1, S2, S1, -S2, -S1, -S2, -S1, -S1, -S2, S1, -S2];$$

$$G3\ (7, :) = [S2, -S1, S2, S1, -S1, -S2, -S1, S2, -S1, -S1, -S2, S1, S2, S1];$$

and

$$G3\ (8, :) = [S1, S2, -S1, S2, -S1, S2, S1, S2, -S1, -S2, -S1, -S2, -S1, S2].$$

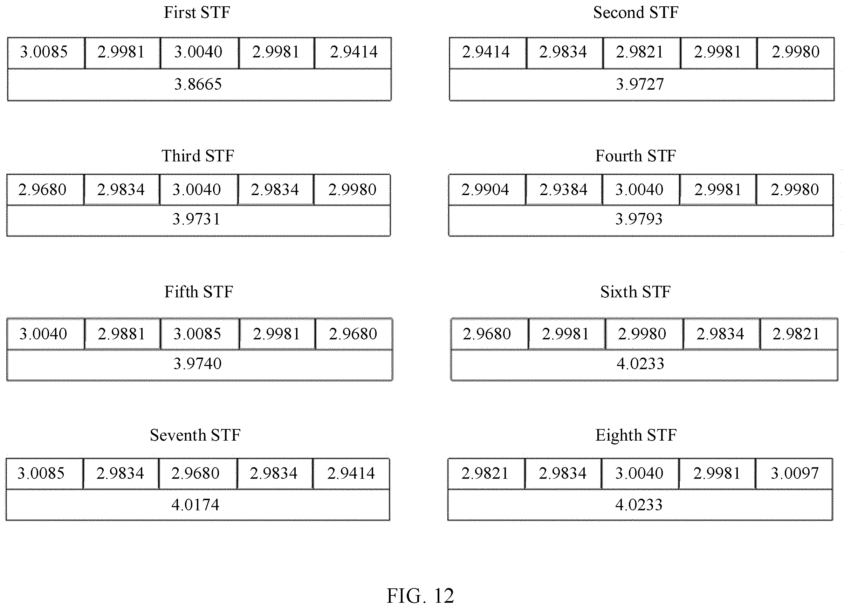

Based on eight STFs including the eight target fields, FIG. 12 shows PAPRs of the eight STFs in a plurality of allocation cases for the spectrum resource. As shown in FIG. 12, for a first STF, when the spectrum resource is allocated to five receive ends according to the first allocation case in FIG. 11, PAPRs of five segments of elements transmitted on five subcarriers allocated to the five receive ends are all comparatively low. For example, a PAPR of a segment of elements transmitted on a subcarrier allocated to a receive end 1 is 3.0085, a PAPR of a segment of elements transmitted on a subcarrier allocated to a receive end 2 is 2.9981, a PAPR of a segment of elements transmitted on a subcarrier allocated to a receive end 3 is 3.0040, a PAPR of a segment of elements transmitted on a subcarrier allocated to a receive end 4 is 2.9981, and a PAPR of a segment of elements transmitted on a subcarrier allocated to a receive end 5 is 2.9414. When the spectrum resource is allocated to one receive end according to the second allocation case in FIG. 11, a PAPR of a segment of elements (that is, the entire STF) transmitted on a subcarrier (that is, the entire spectrum resource) allocated to the receive end is comparatively low (for example, the PAPR is 3.8665). It can be learned from FIG. 12 that, for each of the eight STFs, regardless of how the spectrum resource is allocated, an overall PAPR of each STF is comparatively low, and a PAPR of a part, of each STF, that is transmitted to each receive end is also comparatively low. Regardless of which one of the eight STFs is generated by the transmit end, a PAPR of the STF is comparatively low, and a PAPR of a part of the STF is also comparatively low. Optionally, when the quantity of target spatial flows is 8, the transmit end may generate the eight orthogonal STFs.

It should be noted that, when the spectrum resource includes three bonded channels, the STF may be obtained through permutations and combinations based on some basic sequences. For example, G3 (v, :) may be divided into five segments of elements based on the first allocation case for the spectrum resource in FIG. 11, a first segment of elements is transmitted on a first RB to a fourth RB, a second segment of elements is transmitted on a fifth RB, a third segment of elements is transmitted on a sixth RB to a ninth RB, a fourth segment of elements is transmitted on a tenth RB, and a fifth segment of elements is transmitted on an eleventh RB to a fourteenth RB. The first segment of elements may be obtained by selecting a target field in any one of the eight STFs obtained when the spectrum resource includes one bonded channel and eight other STFs obtained by multiplying the eight STFs by -1 (16 STFs in total). The second segment of elements may be obtained by selecting any sequence from S1, S2, -S1, and -S2. The third segment of elements may be obtained by selecting a target field in any one of the eight STFs and the eight other STFs obtained by multiplying the eight STFs by -1 (16 STFs in total). The fourth segment of elements may be obtained by selecting any sequence from S1, S2, -S1, and -S2. The fifth segment of elements may be obtained by selecting a target field in any one of the eight STFs and the eight other STFs obtained by multiplying the eight STFs by -1 (16 STFs in total). Therefore, $16 \times 4 \times 16 \times 4 \times 16$ STFs can be obtained in total through different permutations and combinations. Then eight orthogonal STFs with comparatively low PAPRs may be selected from the $16 \times 4 \times 16 \times 4 \times 16$ STFs as eight STFs in the PPDU when the spectrum resource includes three bonded channels.

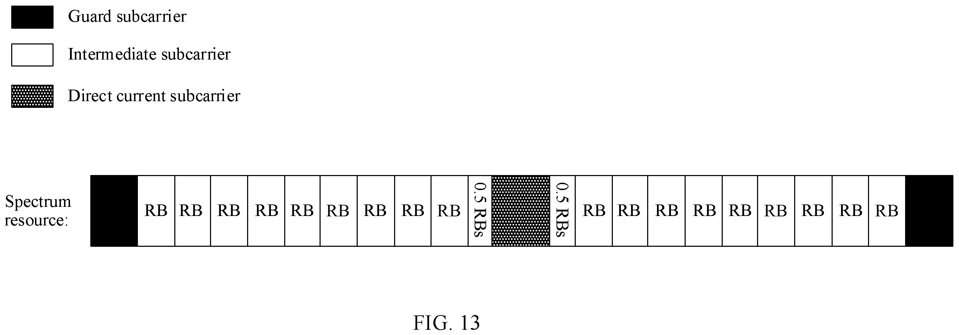

According to a fourth aspect, FIG. 13 is a schematic structural diagram of a spectrum resource including four bonded channels (that is, a CB is 4, and bandwidth may be 8.64 GHz) according to an embodiment of this application. As shown in FIG. 13, the spectrum resource may include two guard subcarriers, one direct current subcarrier, and two intermediate subcarriers. Each of the two intermediate subcarriers includes 9.5 RBs, and the two intermediate subcarriers include 19 RBs in total. Each RB includes 84 subcarriers, and the two intermediate subcarriers include 1596 subcarriers in total.

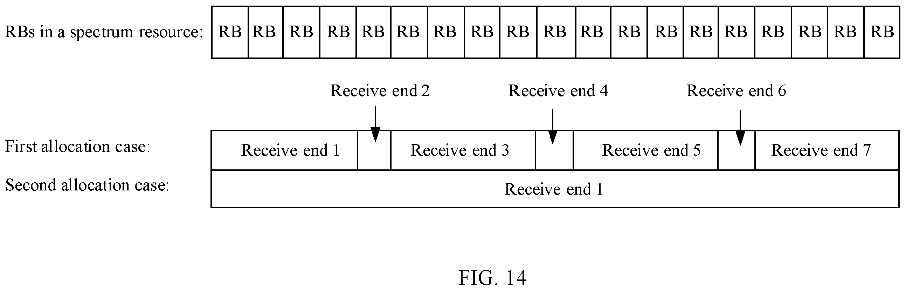

FIG. 14 is a schematic diagram of a plurality of allocation cases for the spectrum resource shown in FIG. 13 according to an embodiment of this application. As shown in FIG. 14, there may be two allocation cases for the spectrum resource shown in FIG. 13. In a first allocation case, the 19 RBs in the spectrum resource may be allocated to a maximum of seven receive ends. For example, a first RB to a fourth RB are all allocated to a receive end 1, a fifth RB is allocated to a receive end 2, a sixth RB to a ninth RB are all allocated to a receive end 3, a tenth RB is allocated to a receive end 4, an eleventh RB to a fourteenth RB are all allocated to a receive end 5, a fifteenth RB is allocated to a receive end 6, and a sixteenth RB to a nineteenth RB are all allocated to a receive end 7. In a second allocation case, the 19 RBs in the spectrum resource may be allocated to a maximum of one receive end. For example, a first RB to a nineteenth RB are all allocated to a receive end 1.

Based on the structure of the spectrum resource shown in FIG. 13 and the plurality of allocation cases shown in FIG. 14, the target field in the STF generated by the transmit end may be any one of the following eight target fields. For example, when the CB of the spectrum resource is 4, the target field in the STF is G4 (v, :), and a length of G4 (v, :) is 1596; and

$$G4\ (1,\ :) = [S2,\ S1,\ -S2,\ S1,\ -S2,\ S1,\ S2,\ -S1,\ S2,\ S1,\ -S2,\ -S1,\ -S2,\ S1,\ -S2,\ S1,\ -S2,\ -S1,\ -S2];$$

$$G4\ (2,\ :) = [-S2,\ S1,\ S2,\ S1,\ S2,\ -S2,\ S1,\ -S2,\ -S1,\ -S1,\ S2,\ S1,\ S2,\ -S1,\ -S2,\ S2,\ S1,\ -S2,\ S1];$$

$$G4\ (3,\ :) = [S2,\ S1,\ -S2,\ S1,\ -S2,\ S1,\ S2,\ -S1,\ S2,\ -S1,\ -S2,\ S1,\ -S2,\ -S1,\ -S2,\ S1,\ -S2,\ -S1,\ -S2];$$

$$G4\ (4,\ :) = [S1,\ S2,\ S1,\ -S2,\ S1,\ -S2,\ S1,\ S2,\ S1,\ -S2,\ -S1,\ S2,\ -S1,\ -S2,\ S1,\ -S2,\ S1,\ -S2,\ -S1];$$

$$G4\ (5,\ :) = [S2,\ S1,\ S2,\ -S1,\ -S2,\ S1,\ -S2,\ S1,\ S2,\ -S1,\ S2,\ -S1,\ -S2,\ -S1,\ S2,\ -S1,\ -S2,\ -S1,\ S2];$$

$$G4\ (6,\ :) = [S2,\ -S1,\ S2,\ S1,\ S2,\ S1,\ -S2,\ -S1,\ -S2,\ S1,\ -S2,\ S1,\ S2,\ S1,\ S2,\ S1,\ -S2,\ S1,\ S2];$$

$$G4\ (7,\ :) = [S2,\ S1,\ S2,\ -S1,\ S2,\ -S1,\ S2,\ S1,\ S2,\ -S1,\ -S2,\ S1,\ -S2,\ -S1,\ S2,\ -S1,\ S2,\ -S1,\ -S2];$$

and

$$G4\ (8,\ :) = [S2,\ S1,\ -S2,\ S1,\ S2,\ S1,\ S2,\ S1,\ -S2,\ S1,\ -S2,\ -S1,\ -S2,\ S1,\ S2,\ S1,\ S2,\ -S1,\ S2].$$

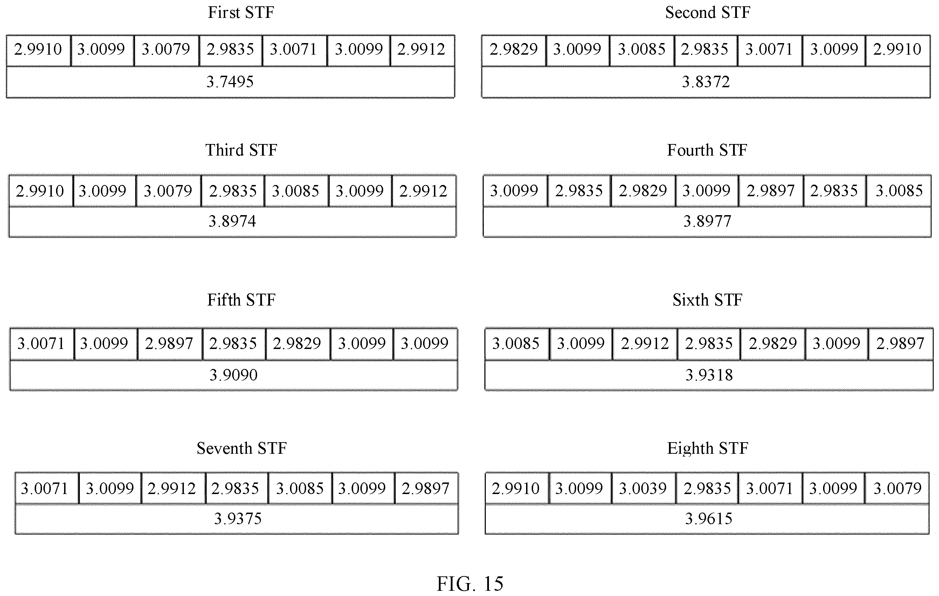

Based on eight STFs including the eight target fields, FIG. 15 shows PAPRs of the eight STFs in a plurality of allocation cases for the spectrum resource. As shown in FIG. 15, for a first STF, when the spectrum resource is allocated to nine receive ends according to the first allocation case in FIG. 14, PAPRs of nine segments of elements transmitted on nine subcarriers allocated to the nine receive ends are all comparatively low. For example, a PAPR of a segment of elements transmitted on a subcarrier allocated to a receive end 1 is 2.9910, a PAPR of a segment of elements transmitted on a subcarrier allocated to a receive end 2 is 3.0099, a PAPR of a segment of elements transmitted on a subcarrier allocated to a receive end 3 is 3.0079, a PAPR of a segment of elements transmitted on a subcarrier allocated to a receive end 4 is 2.9835, a PAPR of a segment of elements transmitted on a subcarrier allocated to a receive end 5 is 3.0071, a PAPR of a segment of elements transmitted on a subcarrier allocated to a receive end 6 is 3.0099, and a PAPR of a segment of elements transmitted on a subcarrier allocated to a receive end 7 is 2.9912. When the spectrum resource is allocated to one receive end according to the second allocation case in FIG. 14, a PAPR of a segment of elements (that is, the entire STF) transmitted on a subcarrier (that is, the entire spectrum resource) allocated to the receive end is comparatively low (for example, the PAPR is 3.7495). It can be learned from FIG. 15 that, for each of the eight STFs, regardless of how the spectrum resource is allocated, an overall PAPR of each STF is comparatively low, and a PAPR of a part, of each STF, that is transmitted to each receive end is also comparatively low. Regardless of which one of the eight STFs is generated by the transmit end, a PAPR of the STF is comparatively low, and a PAPR of a part of the STF is also comparatively low. Optionally, when the quantity of target spatial flows is 8, the transmit end may generate the eight orthogonal STFs.

It should be noted that, when the spectrum resource includes four bonded channels, the STF may be obtained through permutations and combinations based on some basic sequences. For example, G4 (v, :) may be divided into seven segments of elements based on the first allocation case for the spectrum resource in FIG. 14, a first segment of elements is transmitted on a first RB to a fourth RB, a second segment of elements is transmitted on a fifth RB, a third segment of elements is transmitted on a sixth RB to a ninth RB, a fourth segment of elements is transmitted on a tenth RB, a fifth segment of elements is transmitted on an eleventh RB to a fourteenth RB, a sixth segment of elements is transmitted on a fifteenth RB, and a seventh segment of elements is transmitted on a sixteenth RB to a nineteenth RB. The first segment of elements may be obtained by selecting a target field in any one of the eight STFs obtained when the spectrum resource includes one bonded channel and eight other STFs obtained by multiplying the eight STFs by-1 (16 STFs in total). The second segment of elements may be obtained by selecting any sequence from S1, S2, -S1, and -S2. The third segment of elements may be obtained by selecting a target field in any one of the eight STFs and the eight other STFs obtained by multiplying the eight STFs by -1 (16 STFs in total). The fourth segment of elements may be obtained by selecting any sequence from S1, S2, -S1, and -S2. The fifth segment of elements may be obtained by selecting a target field in any one of the eight STFs and the eight other STFs obtained by multiplying the eight STFs by -1 (16 STFs in total). The sixth segment of elements may be obtained by selecting any sequence from S1, S2, -S1, and -S2. The seventh segment of elements may be obtained by selecting a target field in any one of the eight STFs and the eight other STFs obtained by multiplying the eight STFs by -1 (16 STFs in total). Therefore, $16 \times 4 \times 16 \times 4 \times 16 \times 4 \times 16$ STFs can be obtained in total through different permutations and combinations. Then eight orthogonal STFs with comparatively low PAPRs may be selected from the $16 \times 4 \times 16 \times 4 \times 16 \times 4 \times 16$ STFs as eight STFs in the PPDU when the spectrum resource includes four bonded channels.

In a second example, m = 80, and each STF may include at least three of four sequences S1, S2, -S1, and -S2. S1 indicates a first sequence whose length is m, S2 indicates a second sequence whose length is m, -S1 indicates S1 multiplied by -1, and -S2 indicates S2 multiplied by -1. Basic elements in the first sequence S1 form a first Golay sequence R1, basic elements in the second sequence S2 form a second Golay sequence R2, and the first Golay sequence R1 is orthogonal to the second Golay sequence R2. The first Golay sequence R1 = [a0, b0], and the second Golay sequence R2 = [a0, -b0]. For example, the first Golay sequence R1 = [a0, 0, b0], and the second Golay sequence R2 = [a0, 0, -b0]. In this embodiment of this application, for example, a0 = [1, 1, -1, 1, -1, 1, -1, -1, 1, 1], and b0 = [1, 1, -1, 1, 1, 1, 1, 1, -1, -1]. Optionally, alternatively, a0 = [1, 1, 1, 1, 1, -1, 1, -1, -1, 1], and b0 = [1, 1, - 1, -1, 1, 1, 1, -1, 1, -1]. This is not limited in this embodiment of this application.

It should be noted that the spectrum resource for transmitting the STF may include at least one bonded channel, that is, a channel bonding (Channel bonding, CB) of the spectrum resource $\geq$ 1. In addition, when CBs of spectrum resources are different, quantities of RBs in the spectrum resources are different, cases of allocating the spectrum resources to the receive end are also different, and correspondingly, STFs are also different. Spectrum resources with different CBs are described below by using examples.

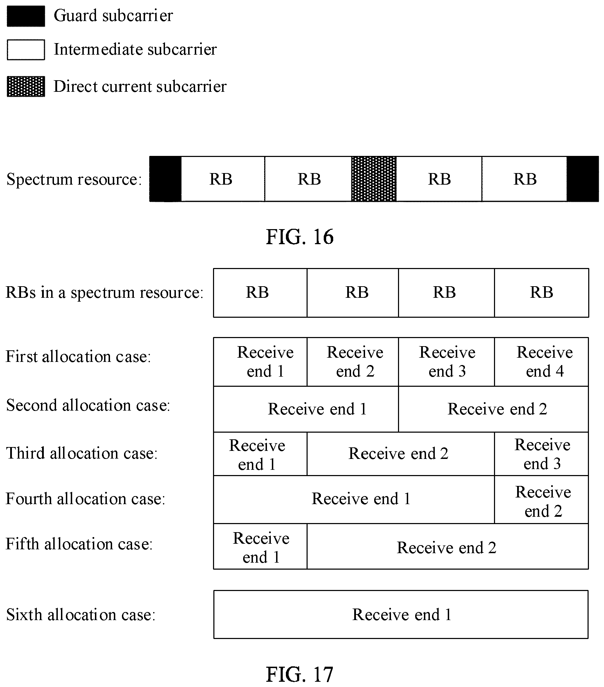

According to a first aspect, FIG. 16 is a schematic structural diagram of another spectrum resource including one bonded channel (that is, a CB is 1, and bandwidth may be 2.16 GHz) according to an embodiment of this application. As shown in FIG. 16, the spectrum resource may include two guard subcarriers, one direct current subcarrier, and two intermediate subcarriers. Each of the two intermediate subcarriers includes two RBs, and the two intermediate subcarriers include four RBs in total. Each RB includes 80 subcarriers, and the two intermediate subcarriers include 320 subcarriers in total.

FIG. 17 is a schematic diagram of a plurality of allocation cases for the spectrum resource shown in FIG. 16 according to an embodiment of this application. As shown in FIG. 17, there may be six allocation cases for the spectrum resource shown in FIG. 16. In a first allocation case, the four RBs in the spectrum resource may be allocated to a maximum of four receive ends. For example, a first RB is allocated to a receive end 1, a second RB is allocated to a receive end 2, a third RB is allocated to a receive end 3, and a fourth RB is allocated to a receive end 4. In a second allocation case, the four RBs in the spectrum resource may be allocated to a maximum of two receive ends. For example, a first RB and a second RB are both allocated to a receive end 1, and a third RB and a fourth RB are both allocated to a receive end 2. In a third allocation case, the four RBs in the spectrum resource may be allocated to a maximum of three receive ends. For example, a first RB is allocated to a receive end 1, a second RB and a third RB are both allocated to a receive end 2, and a fourth RB is allocated to a receive end 3. In a fourth allocation case, the four RBs in the spectrum resource may be allocated to a maximum of two receive ends. For example, a first RB, a second RB, and a third RB are all allocated to a receive end 1, and a fourth RB is allocated to a receive end 2. In a fifth allocation case, the four RBs in the spectrum resource may be allocated to a maximum of two receive ends. For example, a first RB is allocated to a receive end 1, and a second RB, a third RB, and a fourth RB are all allocated to a receive end 2. In a sixth allocation case, the four RBs in the spectrum resource may be allocated to a maximum of one receive end. For example, a first RB, a second RB, a third RB, and a fourth RB are all allocated to a receive end 1.

Based on the structure of the spectrum resource shown in FIG. 16 and the plurality of allocation cases shown in FIG. 17, the target field in the STF generated by the transmit end may be any one of the following eight target fields. For example, when the CB of the spectrum resource is 1, the target field in the STF is G1 (v, :), $1 < v < 8$, and a length of G1 (v, :) is 320; and

$$G1\ (1, :) = [S1, S2, S1, -S2];$$

$$G1\ (2, :) = [S1, S2, -S1, S2];$$

$$G1\ (3, :) = [S2, S1, S2, -S1];$$

$$G1\ (4, :) = [S2, S1, -S2, S1];$$

$$G1\ (5, :) = [S1, -S2, S1, S2];$$

$$G1\ (6, :) = [-S1, S2, S1, S2];$$

$$G1\ (7, :) = [S2, -S1, S2, S1];$$

and

$$G1\ (8, :) = [-S2, S1, S2, S1].$$

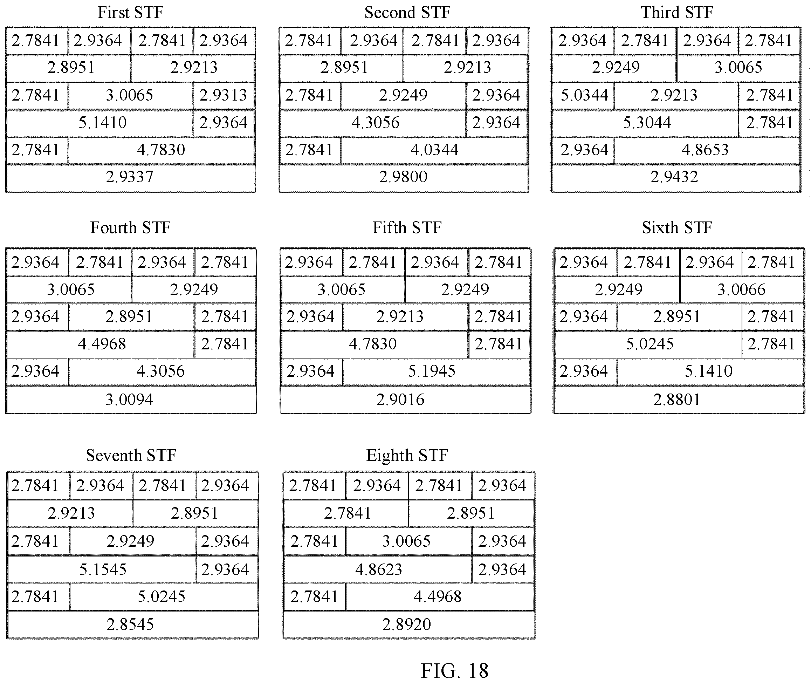

Based on eight STFs including the eight target fields, FIG. 18 shows PAPRs of the eight STFs in a plurality of allocation cases for the spectrum resource. As shown in FIG. 18, for a first STF, when the spectrum resource is allocated to four receive ends according to the first allocation case in FIG. 17, PAPRs of four segments of elements transmitted on four subcarriers allocated to the four receive ends are all comparatively low. For example, a PAPR of a segment of elements transmitted on a subcarrier allocated to a receive end 1 is 2.7841, a PAPR of a segment of elements transmitted on a subcarrier allocated to a receive end 2 is 2.9364, a PAPR of a segment of elements transmitted on a subcarrier allocated to a receive end 3 is 2.7841, and a PAPR of a segment of elements transmitted on a subcarrier allocated to a receive end 4 is 2.9364. When the spectrum resource is allocated to two receive ends according to the second allocation case in FIG. 17, PAPRs of two segments of elements used for transmission on two intermediatesubcarriers allocated to the two receive ends are both comparatively low. For example, a PAPR of a segment of elements used for transmission on a subcarrier allocated to a receive end 1 is 2.8951, and a PAPR of a segment of elements used for transmission on a subcarrier allocated to a receive end 2 is 2.9213. When the spectrum resource is allocated to one receive end according to the sixth allocation case in FIG. 17, a PAPR of a segment of elements (that is, the entire STF) used for transmission on a subcarrier (that is, the entire spectrum resource) allocated to the receive end is comparatively low (for example, the PAPR is 2.9337). It can be learned from FIG. 18 that, for each of the eight STFs, regardless of how the spectrum resource is allocated, an overall PAPR of each STF is comparatively low, and a PAPR of a part, of each STF, that is transmitted to each receive end is also comparatively low. Regardless of which one of the eight STFs is generated by the transmit end, a PAPR of the STF is comparatively low, and a PAPR of a part of the STF is also comparatively low. Optionally, when the quantity of target spatial flows is 8, the transmit end may generate the eight orthogonal STFs.

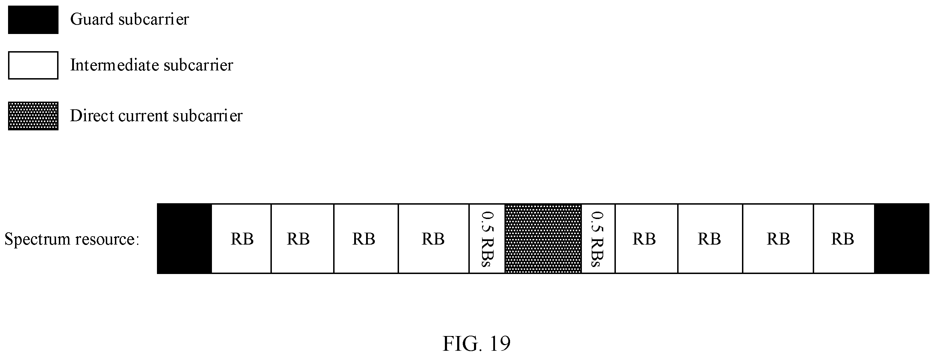

According to a second aspect, FIG. 19 is a schematic structural diagram of another spectrum resource including two bonded channels (that is, a CB is 2, and bandwidth may be 4.32 GHz) according to an embodiment of this application. As shown in FIG. 19, the spectrum resource may include two guard subcarriers, one direct current subcarrier, and two intermediate subcarriers. Each of the two intermediate subcarriers includes 4.5 RBs, and the two intermediate subcarriers include nine RBs in total. Each RB includes 80 subcarriers, and the two intermediatesubcarriers may include 720 subcarriers.

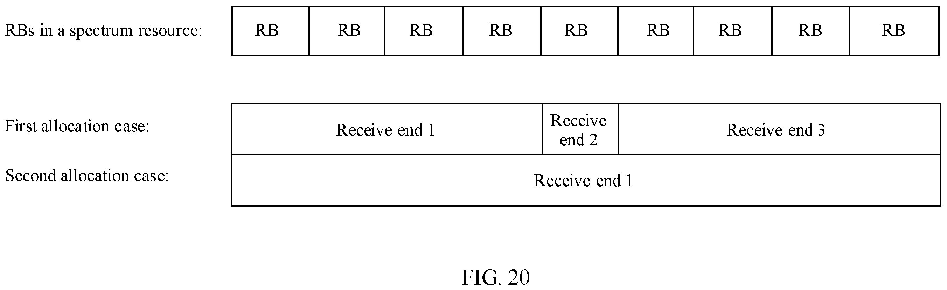

FIG. 20 is a schematic diagram of a plurality of allocation cases for the spectrum resource shown in FIG. 19 according to an embodiment of this application. As shown in FIG. 20, there may be two allocation cases for the spectrum resource shown in FIG. 19. In a first allocation case, the nine RBs in the spectrum resource may be allocated to a maximum of three receive ends. For example, a first RB to a fourth RB are all allocated to a receive end 1, a fifth RB is allocated to a receive end 2, and a sixth RB to a ninth RB are all allocated to a receive end 3. In a second allocation case, the nine RBs in the spectrum resource may be allocated to a maximum of one receive end. For example, a first RB to a ninth RB are all allocated to a receive end 1.

Based on the structure of the spectrum resource shown in FIG. 19 and the plurality of allocation cases shown in FIG. 20, the target field in the STF generated by the transmit end may be any one of the following eight target fields. For example, when the CB of the spectrum resource is 2, the target field in the STF is G2 (v, :), and a length of G2 (v, :) is 720; and

$$G2\ (1, :) = [G1\ (4, :), S2, G1\ (6, :)];$$

$$G2\ (2, :) = [G1\ (7, :), S2, G1\ (8, :)];$$

$$G2\ (3, :) = [G1\ (4, :), S2, G1\ (2, :)];$$

$$G2\ (4, :) = [G1\ (3, :), S2, -G1\ (1, :)];$$

$$G2\ (5, :) = [G1\ (1, :), -S1, -G1\ (7, :)];$$

$$G2\ (6, :) = [G1\ (1, :), S2, G1\ (2, :)];$$

$$G2\ (7, :) = [G1\ (7, :), -S2, G1\ (3, :)];$$

and

$$G2\ (8, :) = [G1\ (8, :), S2, G1\ (6, :)].$$

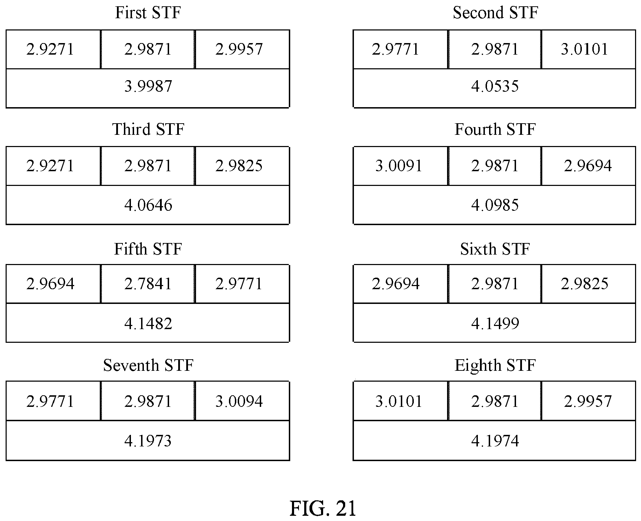

Based on eight STFs including the eight target fields, FIG. 21 shows PAPRs of the eight STFs in a plurality of allocation cases for the spectrum resource. As shown in FIG. 21, for a first STF, when the spectrum resource is allocated to three receive ends according to the first allocation case in FIG. 19, PAPRs of three segments of elements transmitted on three subcarriers allocated to the three receive ends are all comparatively low. For example, a PAPR of a segment of elements transmitted on a subcarrier allocated to a receive end 1 is 2.9271, a PAPR of a segment of elements transmitted on a subcarrier allocated to a receive end 2 is 2.9871, and a PAPR of a segment of elements transmitted on a subcarrier allocated to a receive end 3 is 2.9957. When the spectrum resource is allocated to one receive end according to the second allocation case in FIG. 8, a PAPR of a segment of elements (that is, the entire STF) transmitted on a subcarrier (that is, the entire spectrum resource) allocated to the receive end is comparatively low (for example, the PAPR is 3.9987). It can be learned from FIG. 21 that, for each of the eight STFs, regardless of how the spectrum resource is allocated, an overall PAPR of each STF is comparatively low, and a PAPR of a part, of each STF, that is transmitted to each receive end is also comparatively low. Regardless of which one of the eight STFs is generated by the transmit end, a PAPR of the STF is comparatively low, and a PAPR of a part of the STF is also comparatively low. Optionally, when the quantity of target spatial flows is 8, the transmit end may generate the eight orthogonal STFs.

It should be noted that, when the spectrum resource includes two bonded channels, the STF may be obtained through permutations and combinations based on some basic sequences. For example, G2 (v, :) may be divided into three segments of elements based on the first allocation case for the spectrum resource in FIG. 20, a first segment of elements is transmitted on a first RB to a fourth RB, a second segment of elements is transmitted on a fifth RB, and a third segment of elements is transmitted on a sixth RB to a ninth RB. The first segment of elements may be obtained by selecting a target field in any one of the eight STFs obtained when the spectrum resource includes one bonded channel and eight other STFs obtained by multiplying the eight STFs by -1 (16 STFs in total). The second segment of elements may be obtained by selecting any sequence from S1, S2, -S1, and -S2. The third segment of elements may be obtained by selecting a target field in any one of the eight STFs and the eight other STFs obtained by multiplying the eight STFs by -1 (16 STFs in total). Therefore, $16 \times 4 \times 16$ STFs can be obtained in total through different permutations and combinations. Then eight orthogonal STFs with comparatively low PAPRs may be selected from the $16 \times 4 \times 16$ STFs as eight STFs in the PPDU when the spectrum resource includes two bonded channels.

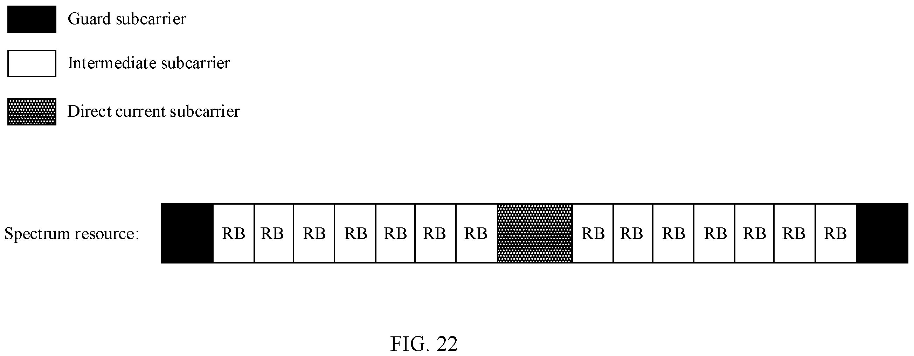

According to a third aspect, FIG. 22 is a schematic structural diagram of a spectrum resource including three bonded channels (that is, a CB is 3, and bandwidth may be 6.48 GHz) according to an embodiment of this application. As shown in FIG. 22, the spectrum resource may include two guard subcarriers, one direct current subcarrier, and two intermediate subcarriers. Each of the two intermediate subcarriers includes seven RBs, and the two intermediate subcarriers include 14 RBs in total. Each RB includes 80 subcarriers, and the two intermediate subcarriers include 1120 subcarriers in total.

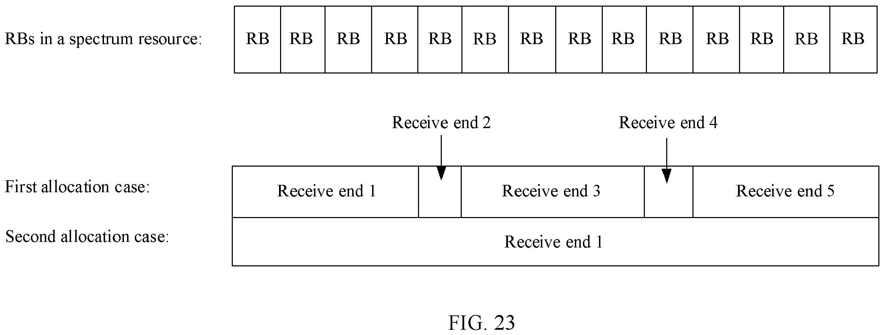

FIG. 23 is a schematic diagram of a plurality of allocation cases for the spectrum resource shown in FIG. 22 according to an embodiment of this application. As shown in FIG. 23, there may be two allocation cases for the spectrum resource shown in FIG. 22. In a first allocation case, the 14 RBs in the spectrum resource may be allocated to a maximum of five receive ends. For example, a first RB to a fourth RB are all allocated to a receive end 1, a fifth RB is allocated to a receive end 2, a sixth RB to a ninth RB are all allocated to a receive end 3, a tenth RB is allocated to a receive end 4, and an eleventh RB to a fourteenth RB are all allocated to a receive end 5. In a second allocation case, the 14 RBs in the spectrum resource may be allocated to a maximum of one receive end. For example, a first RB to a fourteenth RB are all allocated to a receive end 1.

Based on the structure of the spectrum resource shown in FIG. 22 and the plurality of allocation cases shown in FIG. 23, the target field in the STF generated by the transmit end may be any one of the following eight target fields. For example, when the CB of the spectrum resource is 3, the target field in the STF is G3 (v, :), and a length of G3 (v, :) is 1120; and

$$G3\ (1, :) = [G1\ (5, :),\ S1,\ G1\ (6, :),\ S2,\ -G1\ (7, :)];$$

$$G3\ (2, :) = [G1\ (1, :),\ -S1,\ -G1\ (7, :),\ -S2,\ G1\ (5, :)];$$

$$G3\ (3, :) = [G1\ (7, :),\ -S2,\ -G1\ (3, :),\ -S2,\ -G1\ (8, :)];$$

$$G3\ (4, :) = [G1\ (5, :),\ -S1,\ -G1\ (3, :),\ -S2,\ G1\ (6, :)];$$

$$G3\ (5, :) = [G1\ (7, :),\ -S2,\ -G1\ (1, :),\ -S1,\ G1\ (8, :)];$$

$$G3\ (6, :) = [G1\ (8, :),\ -S1,\ G1\ (3, :),\ -S1,\ G1\ (7, :)];$$

$$G3\ (7,\ :) = [G1\ (5,\ :),\ -S1,\ G1\ (3,\ :),\ S2,\ G1\ (1,\ :)];$$

and

$$G3\ (8,\ :) = [G1\ (1,\ :),\ -S2,\ -G1\ (6,\ :),\ S2,\ -G1\ (2,\ :)].$$

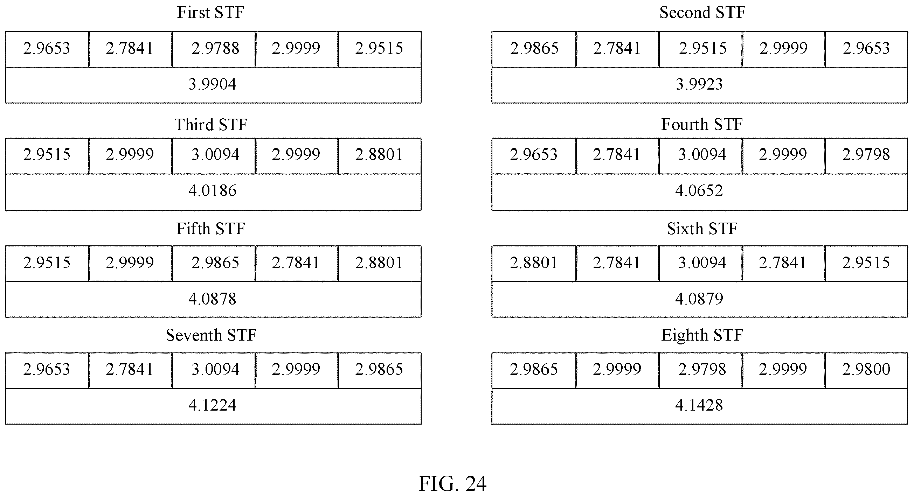

Based on eight STFs including the eight target fields, FIG. 24 shows PAPRs of the eight STFs in a plurality of allocation cases for the spectrum resource. As shown in FIG. 24, for a first STF, when the spectrum resource is allocated to five receive ends according to the first allocation case in FIG. 23, PAPRs of five segments of elements transmitted on five subcarriers allocated to the five receive ends are all comparatively low. For example, a PAPR of a segment of elements transmitted on a subcarrier allocated to a receive end 1 is 2.9653, a PAPR of a segment of elements transmitted on a subcarrier allocated to a receive end 2 is 2.7841, a PAPR of a segment of elements transmitted on a subcarrier allocated to a receive end 3 is 2.9788, a PAPR of a segment of elements transmitted on a subcarrier allocated to a receive end 4 is 2.9999, and a PAPR of a segment of elements transmitted on a subcarrier allocated to a receive end 5 is 2.9515. When the spectrum resource is allocated to one receive end according to the second allocation case in FIG. 23, a PAPR of a segment of elements (that is, the entire STF) transmitted on a subcarrier (that is, the entire spectrum resource) allocated to the receive end is comparatively low (for example, the PAPR is 3.9904). It can be learned from FIG. 24 that, for each of the eight STFs, regardless of how the spectrum resource is allocated, an overall PAPR of each STF is comparatively low, and a PAPR of a part, of each STF, that is transmitted to each receive end is also comparatively low. Regardless of which one of the eight STFs is generated by the transmit end, a PAPR of the STF is comparatively low, and a PAPR of a part of the STF is also comparatively low. Optionally, when the quantity of target spatial flows is 8, the transmit end may generate the eight orthogonal STFs.

It should be noted that, when the spectrum resource includes three bonded channels, the STF may be obtained through permutations and combinations based on some basic sequences. For example, G3 (v, :) may be divided into five segments of elements based on the first allocation case for the spectrum resource in FIG. 23, a first segment of elements is transmitted on a first RB to a fourth RB, a second segment of elements is transmitted on a fifth RB, a third segment of elements is transmitted on a sixth RB to a ninth RB, a fourth segment of elements is transmitted on a tenth RB, and a fifth segment of elements is transmitted on an eleventh RB to a fourteenth RB. The first segment of elements may be obtained by selecting a target field in any one of the eight STFs obtained when the spectrum resource includes one bonded channel and eight other STFs obtained by multiplying the eight STFs by -1 (16 STFs in total). The second segment of elements may be obtained by selecting any sequence from S1, S2, -S1, and -S2. The third segment of elements may be obtained by selecting a target field in any one of the eight STFs and the eight other STFs obtained by multiplying the eight STFs by -1 (16 STFs in total). The fourth segment of elements may be obtained by selecting any sequence from S1, S2, -S1, and -S2. The fifth segment of elements may be obtained by selecting a target field in any one of the eight STFs and the eight other STFs obtained by multiplying the eight STFs by -1 (16 STFs in total). Therefore, $16\times4\times16\times4\times16$ STFs can be obtained in total through different permutations and combinations. Then eight orthogonal STFs with comparatively low PAPRs may be selected from the $16\times4\times 16\times4\times 16$ STFs as eight STFs in the PPDU when the spectrum resource includes three bonded channels.

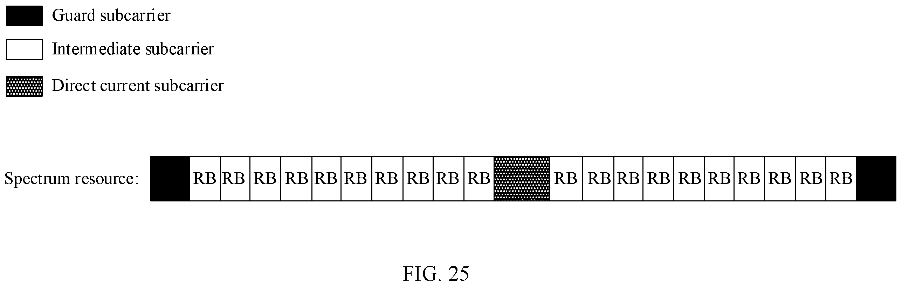

According to a fourth aspect, FIG. 25 is a schematic structural diagram of another spectrum resource including four bonded channels (that is, a CB is 4, and bandwidth may be 8.64 GHz) according to an embodiment of this application. As shown in FIG. 25, the spectrum resource may include two guard subcarriers, one direct current subcarrier, and two intermediate subcarriers. Each of the two intermediate subcarriers includes 10 RBs, and the two intermediate subcarriers include 20 RBs in total. Each RB includes 80 subcarriers, and the two intermediate subcarriers include 1600 subcarriers in total.

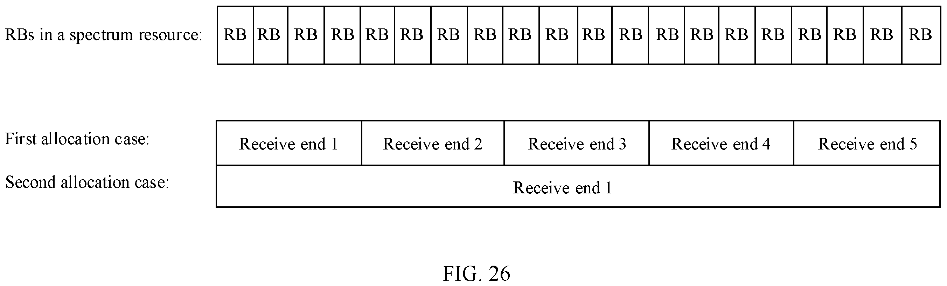

FIG. 26 is a schematic diagram of a plurality of allocation cases for the spectrum resource shown in FIG. 25 according to an embodiment of this application. As shown in FIG. 26, there may be two allocation cases for the spectrum resource shown in FIG. 25. In a first allocation case, the 20 RBs in the spectrum resource may be allocated to a maximum of five receive ends. For example, a first RB to a fourth RB are all allocated to a receive end 1, a fifth RB to an eighth RB are allocated to a receive end 2, a ninth RB to a twelfth RB are all allocated to a receive end 3, a thirteenth RB to a sixteenth RB are allocated to a receive end 4, and a seventeenth RB to a twentieth RB are all allocated to a receive end 5. In a second allocation case, the 20 RBs in the spectrum resource may be allocated to a maximum of one receive end. For example, a first RB to a twentieth RB are all allocated to a receive end 1.

Based on the structure of the spectrum resource shown in FIG. 25 and the plurality of allocation cases shown in FIG. 26, the target field in the STF generated by the transmit end may be any one of the following eight target fields. For example, when the CB of the spectrum resource is 4, the target field in the STF is G4 (v, :), and a length of G4 (v, :) is 1600; and

G4 (1, :) = [G1 (1, :), –G1 (1, :), G1 (5, :), G1 (2, :), G1 (2, :)];

G4 (2, :) = [G1 (2, :), –G1 (2, :), G1 (6, :), G1 (1, :), G1 (1, :)];

G4 (3, :) = [G1 (5, :), G1 (5, :), G1 (2, :), –G1 (6, :), G1 (6, :)];

G4 (4, :) = [G1 (5, :), –G1 (5, :), –G1 (1, :), –G1 (6, :), –G1 (6, :)];

G4 (5, :) = [G1 (1, :), G1 (1, :), –G1 (6, :), G1 (2, :), –G1 (2, :)];

G4 (6, :) = [G1 (4, :), –G1 (4, :), G1 (8, :), G1 (3, :), G1 (3, :)];

G4 (7, :) = [G1 (3, :), –G1 (3, :), –G1 (7, :), G1 (4, :), G1 (4, :)];

and G4 (8, :) = [G1 (6, :), G1 (6, :), G1 (1, :), –G1 (5, :), G1 (5, :)].

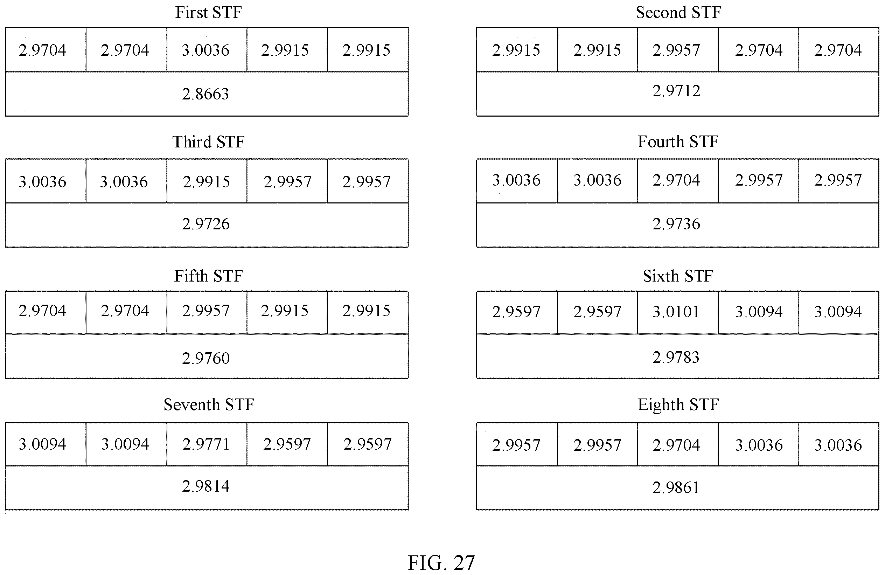

Based on eight STFs including the eight target fields, FIG. 27 shows PAPRs of the eight STFs in a plurality of allocation cases for the spectrum resource. As shown in FIG. 27, for a first STF, when the spectrum resource is allocated to five receive ends according to the first allocation case in FIG. 26, PAPRs of five segments of elements transmitted on five subcarriers allocated to the five receive ends are all comparatively low. For example, a PAPR of a segment of elements transmitted on a subcarrier allocated to a receive end 1 is 2.9704, a PAPR of a segment of elements transmitted on a subcarrier allocated to a receive end 2 is 2.9704, a PAPR of a segment of elements transmitted on a subcarrier allocated to a receive end 3 is 3.0036, a PAPR of a segment of elements transmitted on a subcarrier allocated to a receive end 4 is 2.9915, and a PAPR of a segment of elements transmitted on a subcarrier allocated to a receive end 5 is 2.9915. When the spectrum resource is allocated to one receive end according to the second allocation case in FIG. 26, a PAPR of a segment of elements (that is, the entire STF) transmitted on a subcarrier (that is, the entire spectrum resource) allocated to the receive end is comparatively low (for example, the PAPR is 2.8663). It can be learned from FIG. 27 that, for each of the eight STFs, regardless of how the spectrum resource is allocated, an overall PAPR of each STF is comparatively low, and a PAPR of a part, of each STF, that is transmitted to each receive end is also comparatively low. Regardless of which one of the eight STFs is generated by the transmit end, a PAPR of the STF is comparatively low, and a PAPR of a part of the STF is also comparatively low. Optionally, when the quantity of target spatial flows is 8, the transmit end may generate the eight orthogonal STFs.

It should be noted that, when the spectrum resource includes four bonded channels, the STF may be obtained through permutations and combinations based on some basic sequences. For example, G4 (v, :) may be divided into five segments of elements based on the first allocation case for the spectrum resource in FIG. 26, a first segment of elements is transmitted on a first RB to a fourth RB, a second segment of elements is transmitted on a fifth RB to an eighth RB, a third segment of elements is transmitted on a ninth RB to a twelfth RB, a fourth segment of elements is transmitted on a thirteenth RB to a sixteenth RB, and a fifth segment of elements is transmitted on a seventeenth RB to a twentieth RB. The first segment of elements may be obtained by selecting a target field in any one of the eight STFs obtained when the spectrum resource includes one bonded channel and eight other STFs obtained by multiplying the eight STFs by-1 (16 STFs in total). The second segment of elements may be obtained by selecting any sequence from S1, S2, -S1, and -S2. The third segment of elements may be obtained by selecting a target field in any one of the eight STFs and the eight other STFs obtained by multiplying the eight STFs by -1 (16 STFs in total). The fourth segment of elements may be obtained by selecting any sequence from S1, S2, -S1, and -S2. The fifth segment of elements may be obtained by selecting a target field in any one of the eight STFs and the eight other STFs obtained by multiplying the eight STFs by -1 (16 STFs in total). Therefore, $16 \times 4 \times 16 \times 4 \times 16$ STFs can be obtained in total through different permutations and combinations. Then eight orthogonal STFs with comparatively low PAPRs may be selected from the $16 \times 4 \times 16 \times 4 \times 16$ STFs as eight STFs in the PPDU when the spectrum resource includes four bonded channels.

In a third example, when the spectrum resource includes one bonded channel, the target field in the STF includes one first part; or when the spectrum resource includes a plurality of bonded channels, the target field in the STF includes a plurality of first parts and a second part located between every two adjacent first parts. Lengths of the first part and the second part are both integer multiples of m, m is a quantity of subcarriers in one resource block RB, and m > 1. The first part includes a plurality of first basic elements, a zero elements located between every two adjacent first basic elements, and a zero elements located before or after the plurality of first basic elements, wherein "a" in "a zero elements" represents quantity of zero elements and "a" $\geq 1$. A plurality of consecutive elements in the plurality of first basic elements are capable of forming a Golay sequence. The second part includes a plurality of second basic elements, a zero elements located between every two adjacent second basic elements, and a zero elements located before and/or after the plurality of second basic elements, wherein "a" in "a zero elements" represents quantity of zero elements and "a" $\geq 1$. A plurality of consecutive elements in the plurality of second basic elements can form a Golay sequence.

It can be learned that a structure of the target field in the STF when the CB is 1 is different from that when the CB is greater than 1, and regardless of whether the CB is 1 or greater than 1, each part (for example, the first part and the second part) of the STF is related to a Golay sequence. Therefore, a PAPR of each part is comparatively low, and a PAPR of the entire STF is also comparatively low.

For example, the STF may include at least three of four sequences C1, C2, -C1, and -C2, or the STF may include at least three of four sequences S3, S4, -S3, and -S4. C1 indicates a third Golay sequence whose length is n, C2 indicates a fourth Golay sequence whose length is n, S3 indicates a fifth Golay sequence whose length is n, S4 indicates a sixth Golay sequence whose length is n, and n > 1. For example, when m = 84, the third Golay sequence C1 = [a1, b1], the fourth Golay sequence C2 = [a2, b2], the fifth Golay sequence S3 = [a1, -b1], and the sixth Golay sequence S4 = [a2, -b2], where a1 = [1, 1, -1, -1, -1, -1, -1, -1, 1], b1 = [1, 1, 1, 1, 1, 1, 1, 1, -1, -1, -1], a2 = [-1, -1, 1, 1, 1, 1, 1, -1, 1, 1], and b2 = [-1, -1, 1, 1, 1, 1, 1, 1, 1, -1, -1]. It should be noted that, in this embodiment of this application, for example, a1 = [1, 1, -1, 1, -1, 1, -1, -1, 1, 1], and b1 = [1, 1, -1, 1, 1, 1, 1, 1, -1, -1]. Optionally, alternatively, a1 = [1, 1, 1, 1, 1, -1, 1, -1, -1, 1], and b1 = [1, 1, -1, -1, 1, 1, 1, -1, 1, -1]. This is not limited in this embodiment of this application.

The third Golay sequence C1 and the fourth Golay sequence C2 form a first Golay sequence pair, the fifth Golay sequence S3 and the sixth Golay sequence S4 form a second Golay sequence pair, and the first Golay sequence pair and the second Golay sequence pair form a Golay sequence group. It should be noted that, assuming $c=(c(0),c(1),...,c(N-1))$, $d=(d(0),d(1),...,d(N-1))$, $e=(e(0),e(7),...,e(N-1))$, and $f=(f(0),f(1),...,f(N-1))$, c (u) indicates the $(u+1)^{th}$ element in the sequence c, d (u) indicates the $(u+1)^{th}$ element in the sequence d, e (u) indicates the $(u+1)^{th}$ element in the sequence e, f (u) indicates the $(u+1)^{th}$ element in the sequence f, and $0 \leq u \leq N - 1$. The sequence c and the sequence d form a Golay sequence pair, and the sequence e and the sequence f form another Golay sequence pair. If $C_{ce}(t) + C_{df}(t) = 0, 1 \leq t < N$, $C_{ce}(t) = \sum_{i=0}^{N-1} c_i e_{i+t}$, and $C_{df}(t) = \sum_{i=0}^{N-1} d_i f_{i+t}$, the Golay sequence pair formed by the sequence c and the sequence d, and the another Golay sequence pair formed by the sequence e and the sequence f may be referred to as forming a Golay sequence group.

It should be noted that the spectrum resource for transmitting the STF may include at least one bonded channel. In addition, when CBs of spectrum resources are different, quantities of RBs in the spectrum resources are different, cases of allocating the spectrum resources to the receive end are also different, and correspondingly, STFs are also different. Spectrum resources with different CBs are described below by using examples.

According to a first aspect, based on the structure of the spectrum resource shown in FIG. 4 and the plurality of allocation cases shown in FIG. 5, when the CB is 1, a sequence including basic elements in the STF generated by the transmit end may be T1 (v), where $1 \leq v \leq 8$; and

$$T1\ (1) = [-C1, -1, C2, 1, C1, -1, C2, -1];$$

$$T1\ (2) = [C1, 1, -C2, -1, C1, 1, C2, -1];$$

$$T1\ (3) = [C1, -1, C2, 1, -C1, -1, C2, -1];$$

$$T1\ (4) = [C1, -1, C2, 1, C1, 1, -C2, 1];$$

$$T1 (5) = [-S3, -1, S4, 1, S3, -1, S4, -1];$$

$$T1 (6) = [S3, -1, -S4, 1, S3, 1, S4, -1];$$

$$T1 (7) = [S3, -1, S4, -1, -S3, 1, S4, -1];$$

and

$$T1 (8) = [S3, 1, S4, -1, S3, 1, -S4, -1].$$

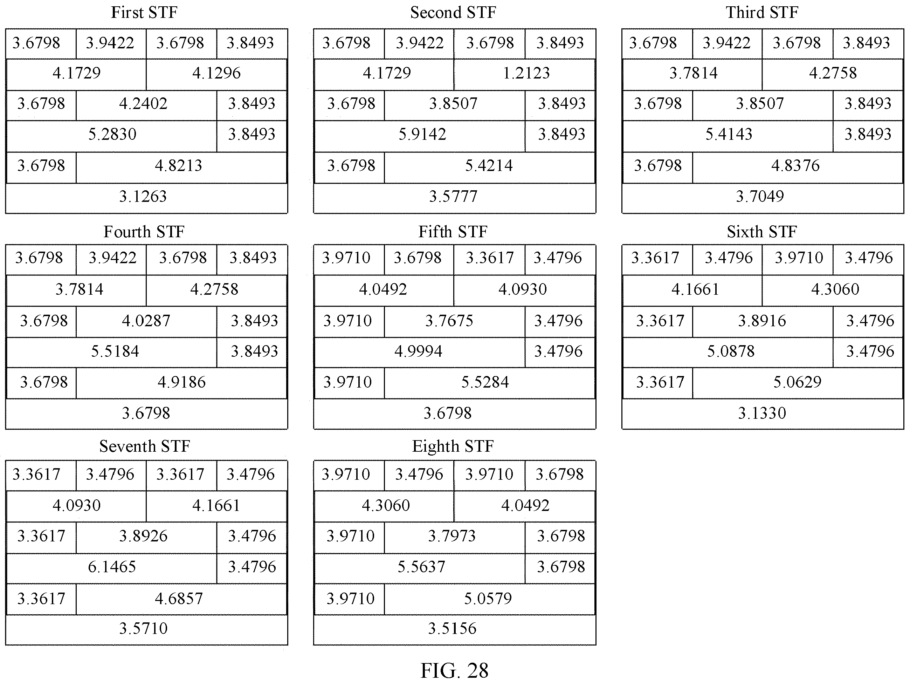

Based on eight STFs whose target elements form the eight sequences, FIG. 28 shows PAPRs of the eight STFs in a plurality of allocation cases for the spectrum resource. As shown in FIG. 28, for a first STF, when the spectrum resource is allocated to four receive ends according to the first allocation case in FIG. 5, PAPRs of four segments of elements transmitted on four subcarriers allocated to the four receive ends are all comparatively low. For example, a PAPR of a segment of elements transmitted on a subcarrier allocated to a receive end 1 is 3.6798, a PAPR of a segment of elements transmitted on a subcarrier allocated to a receive end 2 is 3.9422, a PAPR of a segment of elements transmitted on a subcarrier allocated to a receive end 3 is 3.6798, and a PAPR of a segment of elements transmitted on a subcarrier allocated to a receive end 4 is 3.8493. When the spectrum resource is allocated to one receive end according to the sixth allocation case in FIG. 5, a PAPR of a segment of elements (that is, the entire STF) transmitted on a subcarrier (that is, the entire spectrum resource) allocated to the receive end is comparatively low (for example, the PAPR is 3.1263). It can be learned from FIG. 28 that, for each of the eight STFs, regardless of how the spectrum resource is allocated, an overall PAPR of each STF is comparatively low, and a PAPR of a part, of each STF, that is transmitted to each receive end is also comparatively low. Regardless of which one of the eight STFs is generated by the transmit end, a PAPR of the STF is comparatively low, and a PAPR of a part of the STF is also comparatively low. Optionally, when the quantity of target spatial flows is 8, the transmit end may generate the eight orthogonal STFs.

According to a second aspect, based on the structure of the spectrum resource shown in FIG. 7 and the plurality of allocation cases shown in FIG. 8, the target field in the STF generated by the transmit end may be any one of the following eight target fields. For example, when the CB of the spectrum resource is 2, the target field in the STF is G2 (v, :); and

$$G2 (1, :) = [G1 (3, :), G1 (7, 169{:}252), -G1 (4, :)];$$

$$G2 (2, :) = [G1 (5, :), G1 (6, 157{:}240), G1 (6, :)];$$

$$G2 (3, :) = [G1 (5, :), G1 (6, 245{:}328), G1 (6, :)];$$

$$G2 (4, :) = [G1 (5, :), G1 (8, 77{:}160), G1 (6, :)];$$

$$G2 (5, :) = [G1 (6, :), G1 (5, 169{:}252), -G1 (5, :)];$$

$$G2 (6, :) = [G1 (6, :), G1 (6, 1{:}84), -G1 (5, :)];$$

$$G2 (7, :) = [G1 (6, :), G1 (7, 1{:}84), -G1 (5, :)];$$

and

$$G2\ (8,:) = [G1\ (6,:),\ G1\ (2,\ 85{:}168),\ G1\ (4,:)],$$

where

G1 (v, :) indicates the target field in the STF when the spectrum resource includes one bonded channel, a sequence including target elements in G1 (v, :) is T1 (v), G1 (v, y1:y2) indicates the y1$^{th}$ element to the y2$^{th}$ element in G1 (v, :), $1 \le y1 < y2 < w$, and w is a quantity of elements in G1 (v, :).

A target field in each STF includes two first parts whose lengths are 336 and one second part whose length is 84. For example, in G2 (1, :), G1 (3, :) is a first part, G1 (7, 169:252) is a second part, and -G1 (4, :) is a first part. In G2 (2, :), G1 (5, :) is a first part, G1 (6, 157:240) is a second part, and G1 (6, :) is a first part.

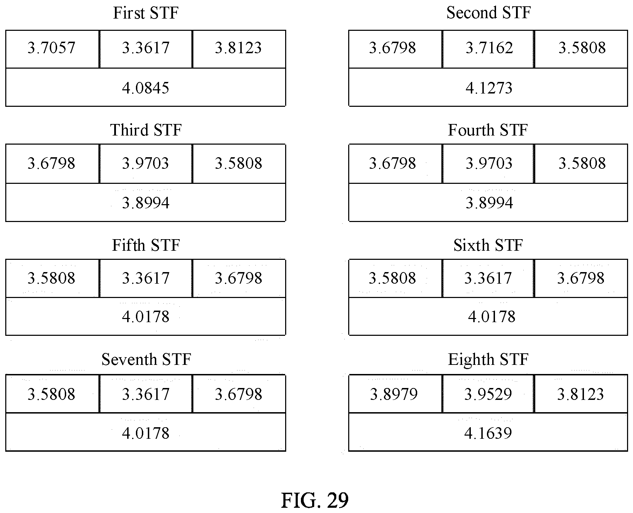

Based on eight STFs including the eight target fields, FIG. 29 shows PAPRs of the eight STFs in a plurality of allocation cases for the spectrum resource. As shown in FIG. 29, for a first STF, when the spectrum resource is allocated to three receive ends according to the first allocation case in FIG. 8, PAPRs of three segments of elements transmitted on three subcarriers allocated to the three receive ends are all comparatively low. For example, a PAPR of a segment of elements transmitted on a subcarrier allocated to a receive end 1 is 3.7057, a PAPR of a segment of elements transmitted on a subcarrier allocated to a receive end 2 is 3.3617, and a PAPR of a segment of elements transmitted on a subcarrier allocated to a receive end 3 is 3.8123. When the spectrum resource is allocated to one receive end according to the second allocation case in FIG. 8, a PAPR of a segment of elements (that is, the entire STF) transmitted on a subcarrier (that is, the entire spectrum resource) allocated to the receive end is comparatively low (for example, the PAPR is 4.0845). It can be learned from FIG. 29 that, for each of the eight STFs, regardless of how the spectrum resource is allocated, an overall PAPR of each STF is comparatively low, and a PAPR of a part, of each STF, that is transmitted to each receive end is also comparatively low. Regardless of which one of the eight STFs is generated by the transmit end, a PAPR of the STF is comparatively low, and a PAPR of a part of the STF is also comparatively low. Optionally, when the quantity of target spatial flows is 8, the transmit end may generate the eight orthogonal STFs.

It should be noted that, when the spectrum resource includes two bonded channels, the STF may be obtained through permutations and combinations based on some basic sequences. For example, G2 (v, :) may be divided into three segments of elements based on the first allocation case for the spectrum resource in FIG. 8, a first segment of elements is transmitted on a first RB to a fourth RB, a second segment of elements is transmitted on a fifth RB, and a third segment of elements is transmitted on a sixth RB to a ninth RB. The first segment of elements may be obtained by selecting a target field in any one of the eight STFs obtained when the spectrum resource includes one bonded channel and eight other STFs obtained by multiplying the eight STFs by -1 (16 STFs in total). The second segment of elements may be obtained by selecting any 84 consecutive elements in any sequence of the eight STFs in the PPDU when the spectrum resource includes one bonded channel. The third segment of elements may be obtained by selecting a target field in any one of the eight STFs and the eight other STFs obtained by multiplying the eight STFs by-1 (16 STFs in total). Therefore, $16{\times}16{\times}253{\times}16$ STFs can be obtained in total through different permutations and combinations. Then eight orthogonal STFs with comparatively low PAPRs may be selected from the $16{\times}16{\times}253{\times}16$ STFs as eight STFs in the PPDU when the spectrum resource includes two bonded channels.

According to a third aspect, based on the structure of the spectrum resource shown in FIG. 10 and the plurality of allocation cases shown in FIG. 11, the target field in the STF generated by the transmit end may be any one of the following eight target fields. For example, when the CB of the spectrum resource is 3, the target field in the STF is G3 (v, :); and

$$G3\ (1,:) = [G1\ (4,:),\ G1\ (1,\ 169{:}252),\ G1\ (2,:),\ G1\ (1,\ 1{:}84),\ G1\ (3,:)];$$

$$G3\ (2,:) = [G1\ (3,:),\ G1\ (1,\ 221{:}304),\ G1\ (2,:),\ G1\ (2,\ 133{:}216),\ -G1\ (1,:)];$$

$$G3\ (3,:) = [G1\ (3,:),\ -G1\ (1,\ 85{:}168),\ -G1\ (4,:),\ -G1\ (2,\ 229{:}312),\ -G1\ (2,:)];$$

$$G3\ (4,:) = [G1\ (3,:),\ -G1\ (1,\ 1{:}84),\ -G1\ (1,:),\ G1\ (1,\ 1{:}84),\ G1\ (4,:)];$$

$$G3\ (5,:) = [G1\ (3,:),\ -G1\ (1,\ 1{:}84),\ -G1\ (1,:),\ -G1\ (1,\ 169{:}252),\ G1\ (4,:)];$$

$$G3 (6, :) = [G1 (3, :), -G1 (1, 1:84), -G1 (1, :), -G1 (1, 85:168), G1 (4, :)];$$

$$G3 (7, :) = [G1 (3, :), G1 (1, 253:336), -G1 (7, :), G1 (3, 1:84), -G1 (6, :)];$$

and

$$G3 (8, :) = [G1 (3, :), G1 (1, 253:336), -G1 (7, :), G1 (4, 85:168), -G1 (6, :)],$$

where
$G1 (v, :)$ indicates the target field in the STF when the spectrum resource includes one bonded channel, a sequence including target elements in $G1 (v, :)$ is $T1 (v)$, $G1 (v, y1:y2)$ indicates the $y1^{th}$ element to the $y2^{th}$ element in $G1 (v, :)$, $1 \leq y1 < y2 \leq w$, and $w$ is a quantity of elements in $G1 (v, :)$.

A target field in each STF includes three first parts whose lengths are 336 and two second parts whose lengths are 84. For example, in $G3 (1, :)$, $G1 (4, :)$, $G1 (2, :)$, and $G1 (3, :)$ are all first parts, and $G1 (1, 169:252)$ and $G1 (1, 1:84)$ are both second parts.

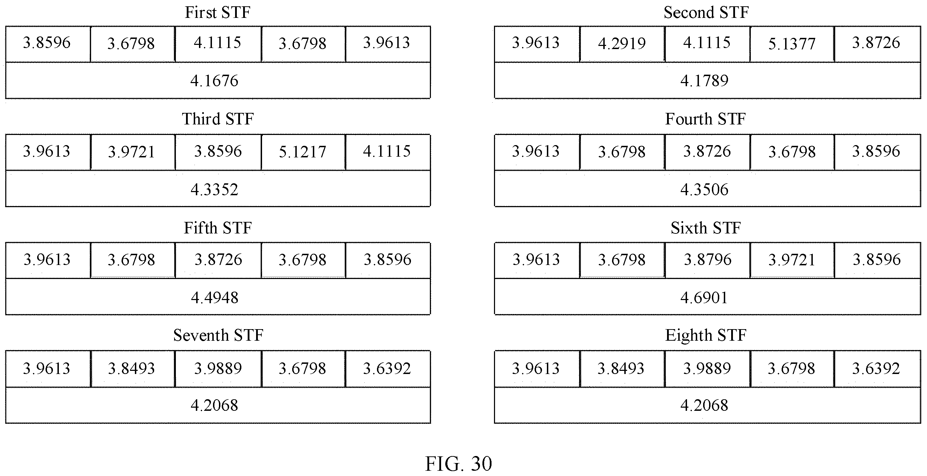

Based on eight STFs including the eight target fields, FIG. 30 shows PAPRs of the eight STFs in a plurality of allocation cases for the spectrum resource. As shown in FIG. 30, for a first STF, when the spectrum resource is allocated to five receive ends according to the first allocation case in FIG. 11, PAPRs of five segments of elements transmitted on five subcarriers allocated to the five receive ends are all comparatively low. For example, a PAPR of a segment of elements transmitted on a subcarrier allocated to a receive end 1 is 3.8596, a PAPR of a segment of elements transmitted on a subcarrier allocated to a receive end 2 is 3.6798, a PAPR of a segment of elements transmitted on a subcarrier allocated to a receive end 3 is 4.1115, a PAPR of a segment of elements transmitted on a subcarrier allocated to a receive end 4 is 3.6798, and a PAPR of a segment of elements transmitted on a subcarrier allocated to a receive end 5 is 3.9613. When the spectrum resource is allocated to one receive end according to the second allocation case in FIG. 11, a PAPR of a segment of elements (that is, the entire STF) transmitted on a subcarrier (that is, the entire spectrum resource) allocated to the receive end is comparatively low (for example, the PAPR is 4.1676). It can be learned from FIG. 30 that, for each of the eight STFs, regardless of how the spectrum resource is allocated, an overall PAPR of each STF is comparatively low, and a PAPR of a part, of each STF, that is transmitted to each receive end is also comparatively low. Regardless of which one of the eight STFs is generated by the transmit end, a PAPR of the STF is comparatively low, and a PAPR of a part of the STF is also comparatively low. Optionally, when the quantity of target spatial flows is 8, the transmit end may generate the eight orthogonal STFs.

It should be noted that, when the spectrum resource includes three bonded channels, the STF may be obtained through permutations and combinations based on some basic sequences. For example, $G3 (v, :)$ may be divided into five segments of elements based on the first allocation case for the spectrum resource in FIG. 11, a first segment of elements is transmitted on a first RB to a fourth RB, a second segment of elements is transmitted on a fifth RB, a third segment of elements is transmitted on a sixth RB to a ninth RB, a fourth segment of elements is transmitted on a tenth RB, and a fifth segment of elements is transmitted on an eleventh RB to a fourteenth RB. The first segment of elements may be obtained by selecting a target field in any one of the eight STFs obtained when the spectrum resource includes one bonded channel and eight other STFs obtained by multiplying the eight STFs by -1 (16 STFs in total). The second segment of elements may be obtained by selecting any 84 consecutive elements in any sequence of the eight STFs in the PPDU when the spectrum resource includes one bonded channel. The third segment of elements may be obtained by selecting a target field in any one of the eight STFs and the eight other STFs obtained by multiplying the eight STFs by -1 (16 STFs in total). The fourth segment of elements may be obtained by selecting any 84 consecutive elements in any sequence of the eight STFs in the PPDU when the spectrum resource includes one bonded channel. The fifth segment of elements may be obtained by selecting a target field in any one of the eight STFs and the eight other STFs obtained by multiplying the eight STFs by -1 (16 STFs in total). Therefore, $16 \times 16 \times 253 \times 16 \times 16 \times 253$ STFs can be obtained in total through different permutations and combinations. Then eight orthogonal STFs with comparatively low PAPRs may be selected from the $16 \times 16 \times 253 \times 16 \times 16 \times 253$ STFs as eight STFs in the PPDU when the spectrum resource includes three bonded channels.

According to a fourth aspect, based on the structure of the spectrum resource shown in FIG. 13 and the plurality of allocation cases shown in FIG. 14, the target field in the STF generated by the transmit end may be any one of the following eight target fields. For example, when the CB of the spectrum resource is 4, the target field in the STF is $G4 (v, :)$; and

G4 (1, :) = [G1 (3, :), G1 (3, 9:92), –G1 (4, :), G1 (6, 9:92), –G1 (3, :), G1 (4, 13:96), –G1 (4, :)];

G4 (2, :) = [G1 (3, :), G1 (4, 9:92), –G1 (4, :), G1 (6, 9:92), –G1 (3, :), G1 (4, 13:96), –G1 (4, :)];

G4 (3, :) = [G1 (3, :), G1 (5, 17:100), G1 (4, :), G1 (3, 9:92), –G1 (3, :), G1 (5, 13:96), G1 (4, :)];

G4 (4, :) = [G1 (3, :), G1 (5, 17:100), G1 (4, :), G1 (4, 9:92), –G1 (3, :), G1 (5, 13:96), G1 (4, :)];

G4 (5, :) = [G1 (6, :), G1 (4, 1:84), G1 (6, :), G1 (4, 17:100), G1 (5, :), G1 (4, 13:96), –G1 (5, :)];

G4 (6, :) = [G1 (6, :), G1 (4, 1:84), G1 (6, :), G1 (5, 5:88), G1 (5, :), G1 (3, 13:96), –G1 (5, :)];

G4 (7, :) = [G1 (6, :), G1 (4, 1:84), G1 (6, :), G1 (6, 1:84), G1 (5, :), G1 (6, 9:92), –G1 (5, :)];

and

G4 (8, :) = [G1 (6, :), G1 (5, 9:92), G1 (6, :), G1 (5, 13:96), G1 (5, :), G1 (6, 9:92), –G1 (5, :)],

where
G1 (v, :) indicates the target field in the STF when the spectrum resource includes one bonded channel, a sequence including target elements in G1 (v, :) is T1 (v), G1 (v, y1:y2) indicates the $y1^{th}$ element to the $y2^{th}$ element in G1 (v, :), 1 < y1 < y2 < w, and w is a quantity of elements in G1 (v, :).

A target field in each STF includes four first parts whose lengths are 336 and three second parts whose lengths are 84. For example, in G4 (1, :), G1 (3, :), -G1 (4, :), -G1 (3, :), and -G1 (4, :) are all first parts, and G1 (3, 9:92), G1 (6, 9:92), and G1 (4, 13:96) are all second parts.

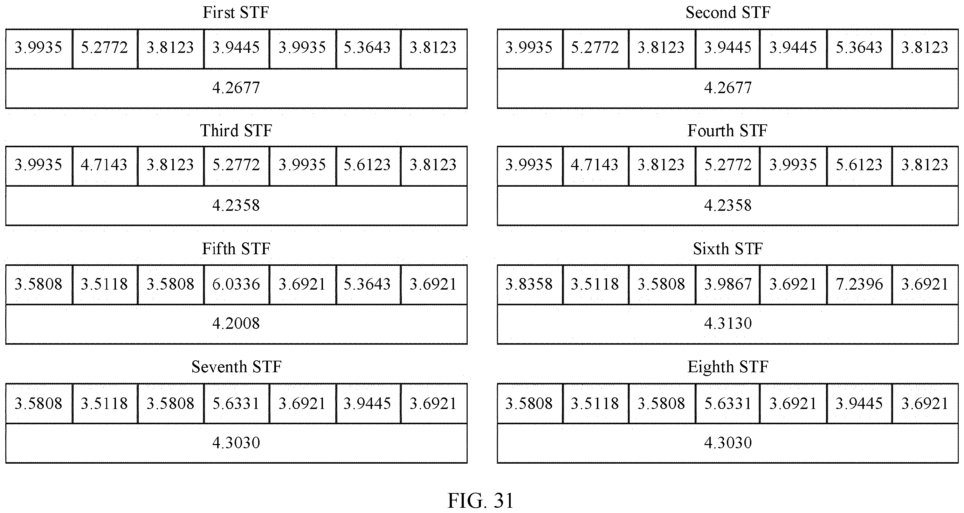

Based on eight STFs including the eight target fields, FIG. 31 shows PAPRs of the eight STFs in a plurality of allocation cases for the spectrum resource. As shown in FIG. 31, for a first STF, when the spectrum resource is allocated to nine receive ends according to the first allocation case in FIG. 14, PAPRs of nine segments of elements transmitted on nine subcarriers allocated to the nine receive ends are all comparatively low. For example, a PAPR of a segment of elements transmitted on a subcarrier allocated to a receive end 1 is 3.9935, a PAPR of a segment of elements transmitted on a subcarrier allocated to a receive end 2 is 5.2772, a PAPR of a segment of elements transmitted on a subcarrier allocated to a receive end 3 is 3.8123, a PAPR of a segment of elements transmitted on a subcarrier allocated to a receive end 4 is 3.9445, a PAPR of a segment of elements transmitted on a subcarrier allocated to a receive end 5 is 3.9935, a PAPR of a segment of elements transmitted on a subcarrier allocated to a receive end 6 is 5.3643, and a PAPR of a segment of elements transmitted on a subcarrier allocated to a receive end 7 is 3.8123. When the spectrum resource is allocated to one receive end according to the second allocation case in FIG. 14, a PAPR of a segment of elements (that is, the entire STF) transmitted on a subcarrier (that is, the entire spectrum resource) allocated to the receive end is comparatively low (for example, the PAPR is 4.2677). It can be learned from FIG. 31 that, for each of the eight STFs, regardless of how the spectrum resource is allocated, an overall PAPR of each STF is comparatively low, and a PAPR of a part, of each STF, that is transmitted to each receive end is also comparatively low. Regardless of which one of the eight STFs is generated by the transmit end, a PAPR of the STF is comparatively low, and a PAPR of a part of the STF is also comparatively low. Optionally, when the quantity of target spatial flows is 8, the transmit end may generate the eight orthogonal STFs.

It should be noted that, when the spectrum resource includes four bonded channels, the STF may be obtained through permutations and combinations based on some basic sequences. For example, G4 (v, :) may be divided into seven segments of elements based on the first allocation case for the spectrum resource in FIG. 14, a first segment of elements is transmitted on a first RB to a fourth RB, a second segment of elements is transmitted on a fifth RB, a third segment of elements is transmitted on a sixth RB to a ninth RB, a fourth segment of elements is transmitted on a tenth RB, a fifth segment of elements is transmitted on an eleventh RB to a fourteenth RB, a sixth segment of elements is transmitted on a fifteenth RB, and a seventh segment of elements is transmitted on a sixteenth RB to a nineteenth RB.

The first segment of elements may be obtained by selecting a target field in any one of the eight STFs obtained when the spectrum resource includes one bonded channel and eight other STFs obtained by multiplying the eight STFs by -1 (16 STFs in total). The second segment of elements may be obtained by selecting any 84 consecutive elements in any sequence of the eight STFs in the PPDU when the spectrum resource includes one bonded channel. The third segment of elements may be obtained by selecting a target field in any one of the eight STFs and the eight other STFs obtained by multiplying the eight STFs by - 1 (16 STFs in total). The fourth segment of elements may be obtained by selecting any 84 consecutive elements in any sequence of the eight STFs in the PPDU when the spectrum resource includes one bonded channel. The fifth segment of elements may be obtained by selecting a target field in any one of the eight STFs and the eight other STFs obtained by multiplying the eight STFs by -1 (16 STFs in total). The sixth segment of elements may be obtained by selecting any 84 consecutive elements in any sequence of the eight STFs in the PPDU when the spectrum resource includes one bonded channel. The seventh segment of elements may be obtained by selecting a target field in any one of the eight STFs and the eight other STFs obtained by multiplying the eight STFs by-1 (16 STFs in total). Therefore, $16 \times 16 \times 253 \times 16 \times 16 \times 253 \times 16 \times 16 \times 253 \times 16$ STFs can be obtained in total through different permutations and combinations. Then eight orthogonal STFs with comparatively low PAPRs may be selected from the $16 \times 16 \times 253 \times 16 \times 16 \times 253 \times 16 \times 16 \times 253 \times 16$ STFs as eight STFs in the PPDU when the spectrum resource includes four bonded channels.

It should be noted that, in this embodiment of this application, the target field in the STF in the PPDU in step 201 is described by using an example in which the quantity of subcarriers in the RB is 84 or 80. Optionally, the quantity of subcarriers in the RB may be alternatively another quantity, for example, 82 or 64. This is not limited in this embodiment of this application.

To sum up, in this embodiment of this application, elements in the target field in the STF generated by the transmit end include a plurality of elements arranged according to a regular pattern that one target element is arranged next to every a zero elements (or a zero elements are arranged next to each target element), wherein "a" in "a zero elements" represents quantity of zero elements and "a" $\geq$1, and a plurality of target elements in the target field include elements in a Golay sequence. When generating the STF in the PPDU, the transmit end may generate the STF based on the Golay sequence by inserting a zero elements at least before or after each element in the Golay sequence, wherein "a" in "a zero elements" represents quantity of zero elements and "a" $\geq$1. It can be learned that the manner of generating the STF in this embodiment of this application is different from a manner of generating an STF in the prior art. Therefore, this embodiment of this application enriches manners of generating an STF, and further enriches manners of generating a PPDU, thereby improving flexibility of generating the PPDU by the transmit end.

In addition, the Golay sequence is characterized by a comparatively low PAPR, and inserting a zero element in the Golay sequence does not greatly affect a PAPR of a sequence obtained after the zero element is inserted. Therefore, when the target field in the STF includes a plurality of consecutive target elements that can form a plurality of Golay sequences, the target field in the STF includes a plurality of sequences characterized by low PAPRs. Under an influence of these sequences, a PAPR of the entire STF is comparatively low, and a PAPR of each part of the STF is also comparatively low. If the STF needs to be allocated to a plurality of receive ends, a PAPR of a part, of the STF, that is received by each receive end is comparatively low. In this case, power utilization of the transmit end is comparatively high.

In addition, in this embodiment of this application, the STF in the PPDU when the spectrum resource includes a plurality of bonded channels may be obtained based on the STF in the PPDU when the spectrum resource includes one bonded channel. Therefore, a process of generating the STF in the PPDU in this embodiment of this application is comparatively simple.

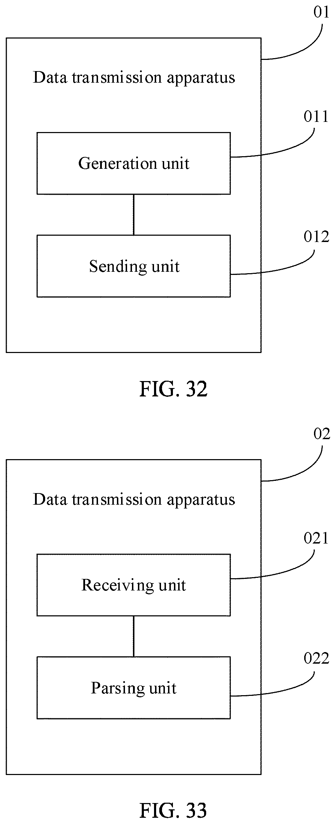

FIG. 32 is a schematic structural diagram of a data transmission apparatus according to an embodiment of this application. The data transmission apparatus may be used for the transmit end 01 in FIG. 1. The data transmission apparatus may include units configured to perform the method performed by the transmit end in FIG. 2. As shown in FIG. 32, the data transmission apparatus 01 may include:

a generation unit 011, configured to generate a physical layer protocol data unit (physical layer protocol data unit, PPDU); and
a sending unit 012, configured to send the PPDU to at least one receive end.

The PPDU includes a short training field STF. A target field in the STF includes a plurality of basic elements sequentially arranged, a zero elements located between every two adjacent basic elements, and a zero elements located before or after the plurality of basic elements, wherein "a" in "a zero elements" represents quantity of zero elements and "a" $\geq$ 1. A plurality of consecutive elements in a plurality of target elements form a Golay sequence. The target field is transmitted on a subcarrier other than a guard subcarrier and a direct current subcarrier in a spectrum resource for transmitting the STF.

In this embodiment of this application, the data transmission apparatus shown in FIG. 32 is used as an example to describe units in a data transmission apparatus used for a transmit end. It should be understood that the data transmission apparatus used for the transmit end in this embodiment of this application has any function of the transmit end in the data transmission method shown in FIG. 2.

FIG. 33 is a schematic structural diagram of another data transmission apparatus according to an embodiment of this application. The data transmission apparatus may be used for the receive end 02 in FIG. 1. The data transmission apparatus may include units configured to perform the method performed by the receive end in FIG. 2. As shown in FIG. 33, the data transmission apparatus 02 may include:

a receiving unit 021, configured to receive a physical layer protocol data unit (physical layer protocol data unit, PPDU) sent by a transmit end; and
a parsing unit 022, configured to parse the received PPDU.

The PPDU includes a short training field STF. A target field in the STF includes a plurality of basic elements sequentially arranged, a zero elements located between every two adjacent basic elements, and a zero elements located before or after the plurality of basic elements, wherein "a" in "a zero elements" represents quantity of zero elements and "a" $\geq$ 1. A plurality of consecutive elements in a plurality of target elements form a Golay sequence. The target field is transmitted on a subcarrier other than a guard subcarrier and a direct current subcarrier in a spectrum resource for transmitting the STF.

In this embodiment of this application, the data transmission apparatus shown in FIG. 33 is used as an example to describe units in a data transmission apparatus used for a receive end. It should be understood that the data transmission apparatus used for the receive end in this embodiment of this application has any function of the receive end in the data transmission method shown in FIG. 2.

The data transmission apparatus (used for the transmit end or the receive end) provided in the foregoing embodiments of this application may be implemented in a plurality of product forms. For example, the data transmission apparatus may be configured as a general-purpose processing system. For example, the data transmission apparatus may be implemented by using a general bus system structure. For example, the data transmission apparatus may be implemented by an application-specific integrated circuit (Application Specific Integrated Circuit, ASIC). The following provides several possible product forms of the data transmission apparatus in the embodiments of this application. It should be understood that the following are merely examples, and possible product forms in the embodiments of this application are not limited thereto.

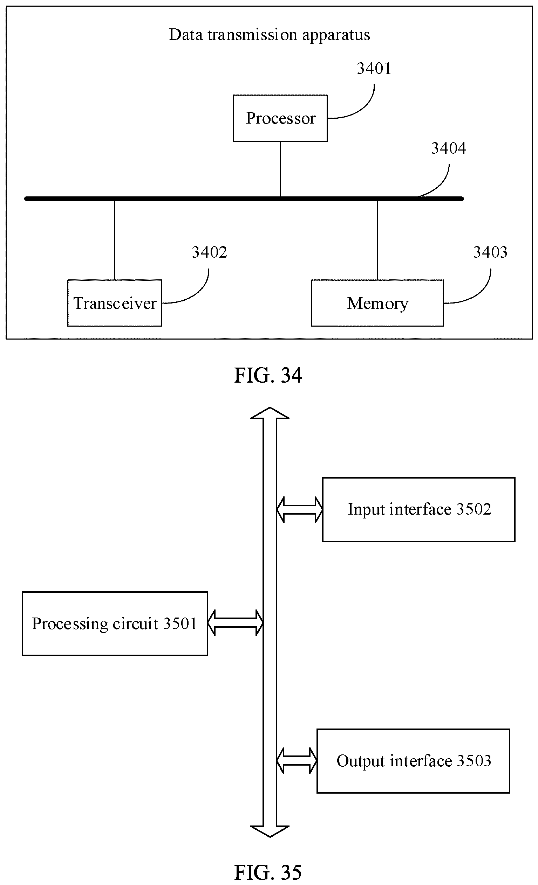

In a possible product form, the data transmission apparatus may be a device (for example, a base station, UE, or an AP) configured to transmit data. As shown in FIG. 34, the data transmission apparatus may include a processor 3401 and a transceiver 3402. Optionally, the data transmission apparatus may further include a memory 3403. The processor 3401, the transceiver 3402, and the memory 3403 communicate with each other through an internal connection. For example, the data transmission apparatus 340 may further include a bus 3404. The processor 3401, the transceiver 3402, and the memory 3403 communicate with each other through the bus 3404.

The processor 3401 is configured to generate a PPDU; the transceiver 3402 is configured to send, under control of the processor 3401, the PPDU to at least one receive end; and the memory 3403 is configured to store an instruction, where the instruction is invoked by the processor 3401 to generate the PPDU. The PPDU includes an STF. A target field in the STF includes a plurality of basic elements sequentially arranged, a zero elements located between every two adjacent basic elements, and a zero elements located before or after the plurality of basic elements, wherein "a" in "a zero elements" represents quantity of zero elements and "a" $\geq$ 1. A plurality of consecutive elements in the plurality of basic elements form a Golay sequence. The target field is transmitted on a subcarrier other than a guard subcarrier and a direct current subcarrier in a spectrum resource for transmitting the STF.

Alternatively, the transceiver 3402 is configured to receive, under control of the processor 3401, a PPDU sent by a transmit end; the processor 3401 is configured to parse the PPDU received by the transceiver; and the memory 3403 is configured to store an instruction, where the instruction is invoked by the processor 3401 to parse the PPDU. The PPDU includes an STF. A target field in the STF includes a plurality of basic elements sequentially arranged, a zero elements located between every two adjacent basic elements, and a zero elements located before or after the plurality of basic elements, wherein "a" in "a zero elements" represents quantity of zero elements and "a" $\geq$ 1. A plurality of consecutive elements in the plurality of basic elements form a Golay sequence. The target field is transmitted on a subcarrier other than a guard subcarrier and a direct current subcarrier in a spectrum resource for transmitting the STF.

In another possible product form, the data transmission apparatus is also implemented by a general-purpose processor, that is, implemented by a so-called chip. As shown in FIG. 35, the data transmission apparatus may include a processing circuit 3501, an input interface 3502, and an output interface 3503. The processing circuit 3501, the input interface 3502, and the output interface 3503 communicate with each other through an internal connection.

In one aspect, the input interface 3502 is configured to obtain information (for example, the to-be-sent data in step 201) to be processed by the processing circuit 3501, the processing circuit 3501 is configured to process the to-be-processed information to generate a PPDU, and the output interface 3503 is configured to output information processed by the processing circuit 3501. The PPDU includes an STF. A target field in the STF includes a plurality of basic elements sequentially arranged, a zero elements located between every two adjacent basic elements, and a zero elements located before or after the plurality of basic elements, wherein "a" in "a zero elements" represents quantity of zero elements and "a" $\geq$ 1. A plurality of consecutive elements in the plurality of basic elements form a Golay sequence. The target field is transmitted on a subcarrier other than a guard subcarrier and a direct current subcarrier in a spectrum resource for transmitting the STF. Optionally, the data transmission apparatus may further include a transceiver (not shown in FIG. 35). The output interface 3503 is configured to output the information processed by the processing circuit 3501 to the transceiver, and the transceiver is configured to send the information processed by the processing circuit 3501.

In another aspect, the input interface 3502 is configured to obtain a received PPDU, the processing circuit 3501 is configured to process to-be-processed information to parse the PPDU, and the output interface 3503 is configured to output information processed by the processing circuit. The PPDU includes an STF. A target field in the STF includes a plurality of basic elements sequentially arranged, a zero elements located between every two adjacent basic elements, and a zero elements located before or after the plurality of basic elements, wherein "a" in "a zero elements" represents quantity of zero elements and "a" $\geq$ 1. A plurality of consecutive elements in the plurality of basic elements form a Golay sequence. The target field is transmitted on a subcarrier other than a guard subcarrier and a direct current subcarrier in a spectrum resource for transmitting the STF. Optionally, the data transmission apparatus may further include a transceiver (not shown in FIG. 35). The transceiver is configured to receive the information (for example, the to-be-parsed PPDU) to be processed by the processing circuit 3501, and send the information to be processed by the processing circuit 3501 to the input interface 3502.

In still another possible product form, the data transmission apparatus may be alternatively implemented by using the following: a field-programmable gate array (Field-Programmable Gate Array, FPGA), a programmable logic device (Programmable Logic Device, PLD), a controller, a state machine, a gate logic, a discrete hardware component or the like, any other suitable circuit, or any combination of circuits that can perform various functions described in this application.

It should be noted that the embodiments of this application provide only a limited quantity of STFs, and an STF obtained by simply transforming the STF provided in the embodiments of this application also falls within the protection scope of this application. For example, an STF obtained by reversing an order of elements in the STF provided in this application also belongs to the STF claimed in this application. For example, for an STF whose target field is [0, 0, 0, 1, 0, 0, 0, 1, 0, 0, 0, -1, 0, 0, 0, 1, 0, 0, 0, -1, 0, 0, 0, 1, 0, 0, 0, -1, 0, 0, 0, -1, 0, 0, 0, 1, 0, 0, 0, 1], an order of the elements in the target field can be reversed to obtain the following target field: [0, 0, 0, 1, 0, 0, 0, 1, 0, 0, 0, -1, 0, 0, 0, -1, 0, 0, 0, 1, 0, 0, 0, -1, 0, 0, 0, 1, 0, 0, 0, -1, 0, 0, 0, 1, 0, 0, 0, 1].

It should be noted that mutual reference can be made between the method embodiments provided in the embodiments of this application and corresponding apparatus embodiments. This is not limited in the embodiments of this application. A chronological order of steps of the method embodiments provided in the embodiments of this application may be properly adjusted, and the steps may also be correspondingly added or deleted according to a situation.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In addition, function units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely optional embodiments of this application, but are not intended to limit this application.

**Claims**

1. A data transmission method, wherein the method is used for a transmit end, and the method comprises:

   generating (201) a physical layer protocol data unit, PPDU; and
   sending (202, 203) the PPDU to a plurality of receive ends, wherein
   the PPDU comprises a short training field, STF, and a target field in the STF comprises a plurality of basic elements sequentially arranged, a zero elements located between every two adjacent basic elements, and a zero elements located before or after the plurality of basic elements, wherein "a" in "a zero elements" represents quantity of zero elements and "a" $\geq$ 1;
   a plurality of consecutive elements in the plurality of basic elements form a Golay sequence, and the target field is transmitted on a subcarrier other than a guard subcarrier and a direct current subcarrier in a spectrum resource for transmitting the STF;
   the spectrum resource for transmitting the STF is divided into a plurality of subcarriers, and the plurality of subcarriers are allocated to the plurality of receive ends in a one-to-one correspondence;
   elements in the STF may also be divided into a plurality of segments of elements based on the division of subcarriers in the spectrum resource;
   the plurality of segments of elements are in a one-to-one correspondence with the plurality of subcarriers; and
   each segment of elements is transmitted to a receive end corresponding to the segment of elements on a subcarrier corresponding to the segment of elements.

2. A data transmission method, wherein the method is used for a receive end, and the method comprises:

   receiving (202, 203) a physical layer protocol data unit, PPDU sent by a transmit end; and
   parsing (204, 205) the received PPDU, wherein
   the PPDU comprises a short training field, STF, and a target field in the STF comprises a plurality of basic elements sequentially arranged, a zero elements located between every two adjacent basic elements, and a zero elements located before or after the plurality of basic elements, wherein "a" in "a zero elements" represents quantity of zero elements and "a" $\geq$ 1;
   a plurality of consecutive elements in the plurality of basic elements form a Golay sequence, and the target field is transmitted on a subcarrier other than a guard subcarrier and a direct current subcarrier in a spectrum resource for transmitting the STF;
   the spectrum resource for transmitting the STF is divided into a plurality of subcarriers, and the plurality of subcarriers are allocated to a plurality of receive ends in a one-to-one correspondence;
   elements in the STF may also be divided into a plurality of segments of elements based on the division of subcarriers in the spectrum resource;
   the plurality of segments of elements are in a one-to-one correspondence with the plurality of subcarriers; and
   each segment of elements is transmitted to a receive end corresponding to the segment of elements on a subcarrier corresponding to the segment of elements.

3. The method according to claim 1 or 2, wherein a quantity of elements in the target field in the STF is an integer multiple of m, m is a quantity of subcarriers in one resource block, RB, and m $\geq$ 1; and in the target field in the STF, basic elements in every m elements form a Golay sequence.

4. The method according to claim 3, wherein m = 84, and a = 3; or m = 80, and a = 3.

5. The method according to claim 3 or 4, wherein when a channel bonding, CB of the spectrum resource is 1, the target field in the STF is G1 (v, :), and 1 $\leq$ v $\leq$ 8; and

$$G1 (1, :) = [S1, S2, S1, -S2];$$

$$G1 (2, :) = [S1, S2, -S1, S2];$$

$$G1 (3, :) = [S2, S1, S2, -S1];$$

$$G1 (4, :) = [S2, S1, -S2, S1];$$

$$G1 (5, :) = [S1, -S2, S1, S2];$$

$$G1 (6, :) = [-S1, S2, S1, S2];$$

$$G1 (7, :) = [S2, -S1, S2, S1];$$

and

$$G1 (8, :) = [-S2, S1, S2, S1],$$

wherein
S1 indicates a first sequence whose length is m, S2 indicates a second sequence whose length is m, -S1 indicates S1 multiplied by -1, -S2 indicates S2 multiplied by -1, basic elements in the first sequence S1 form a first Golay sequence R1, basic elements in the second sequence S2 form a second Golay sequence R2, and the first Golay sequence R1 is orthogonal to the second Golay sequence R2.

6. The method according to claim 5, wherein m = 84, the first Golay sequence R1 = [a0, 0, b0], the second Golay sequence R2 = [a0, 0, -b0], a0 = [1, 1, -1, 1, -1, 1, -1, -1, 1, 1], and b0 = [1, 1, -1, 1, 1, 1, 1, 1, -1, -1].

7. The method according to claim 6, wherein when the CB of the spectrum resource is 2, the target field in the STF is G2 (v, :); and

$$G2 (1, :) = [S1, S2, S1, -S2, S1, S1, S2, -S1, S2];$$

$$G2 (2, :) = [S1, S2, S1, -S2, -S2, -S1, -S2, S1, -S2];$$

$$G2 (3, :) = [S2, S1, -S2, S1, S1, S2, S1, S2, -S1];$$

$$G2 (4, :) = [S2, S1, -S2, S1, -S2, -S2, -S1, -S2, S1];$$

$$G2 (5, :) = [S1, -S2, S1, S2, S1, -S1, S2, S1, S2];$$

$$G2 (6, :) = [S1, -S2, S1, S2, S1, S1, -S2, -S1, -S2];$$

$$G2 (7, :) = [S2, -S1, S2, S1, S1, -S2, S1, S2, S1];$$

and

$$G2 (8, :) = [-S2, S1, S2, S1, -S1, S2, -S1, S2, S1].$$

8. The method according to claim 6, wherein when the CB of the spectrum resource is 3, the target field in the STF is G3 (v, :); and

G3 (1, :) = [S2, –S1, S2, S1, –S2, S2, S1, S2, –S1, S2, S2, –S1, –S2, –S1];

G3 (2, :) = [–S2, S1, S2, S1, S1, S1, S2, –S1, S2, –S2, –S1, S2, S1, S2];

G3 (3, :) = [S2, S1, –S2, S1, S1, S2, S1, S2, –S1, S1, S1, –S2, –S1, –S2];

G3 (4, :) = [S1, –S2, S1, S2, –S1, –S2, –S1, –S2, S1, –S2, –S1, S2, S1, S2];

G3 (5, :) = [S2, S1, S2, –S1, –S2, –S2, S1, –S2, –S1, –S2, S2, S1, –S2, S1];

G3 (6, :) = [S2, S1, –S2, S1, S2, S1, –S2, –S1, –S2, –S1, –S1, –S2, S1, –S2];

G3 (7, :) = [S2, –S1, S2, S1, –S1, –S2, –S1, S2, –S1, –S1, –S2, S1, S2, S1];

and G3 (8, :) = [S1, S2, –S1, S2, –S1, S2, S1, S2, –S1, –S2, –S1, –S2, –S1, S2].

9. The method according to claim 6, wherein when the CB of the spectrum resource is 4, the target field in the STF is G4 (v, :); and

G4 (1, :) = [S2, S1, –S2, S1, –S2, S1, S2, –S1, S2, S1, –S2, –S1, –S2, S1, –S2, S1, –S2, –S1, –S2];

G4 (2, :) = [–S2, S1, S2, S1, S2, –S2, S1, –S2, –S1, –S1, S2, S1, S2, –S1, –S2, S2, S1, –S2, S1];

G4 (3, :) = [S2, S1, –S2, S1, –S2, S1, S2, –S1, S2, –S1, –S2, S1, –S2, –S1, –S2, S1, –S2, –S1, –S2];

G4 (4, :) = [S1, S2, S1, –S2, S1, –S2, S1, S2, S1, –S2, –S1, S2, –S1, –S2, S1, –S2, S1, –S2, –S1];

G4 (5, :) = [S2, S1, S2, –S1, –S2, S1, –S2, S1, S2, –S1, S2, –S1, –S2, –S1, S2, –S1, –S2, –S1, S2];

G4 (6, :) = [S2, –S1, S2, S1, S2, S1, –S2, –S1, –S2, S1, –S2, S1, S2, S1, S2, S1, –S2, S1, S2];

G4 (7, :) = [S2, S1, S2, –S1, S2, –S1, S2, S1, S2, –S1, –S2, S1, –S2, –S1, S2, –S1, S2, –S1, –S2];

and G4 (8, :) = [S2, S1, –S2, S1, S2, S1, S2, S1, –S2, S1, –S2, –S1, –S2, S1, S2, S1, S2, –S1, S2].

10. The method according to claim 5, wherein m = 80, the first Golay sequence R1 = [a0, b0], the second Golay sequence R2 = [a0, -b0], a0 = [1, 1, -1, 1, -1, 1, -1, -1, 1, 1], and b0 = [1, 1, -1, 1, 1, 1, 1, 1, -1, -1].

**11.** The method according to claim 10, wherein when the CB of the spectrum resource is 2, the target field in the STF is G2 (v, :); and

$$G2 (1, :) = [G1 (4, :), S2, G1 (6, :)];$$

$$G2 (2, :) = [G1 (7, :), S2, G1 (8, :)];$$

$$G2 (3, :) = [G1 (4, :), S2, G1 (2, :)];$$

$$G2 (4, :) = [G1 (3, :), S2, -G1 (1, :)];$$

$$G2 (5, :) = [G1 (1, :), -S1, -G1 (7, :)];$$

$$G2 (6, :) = [G1 (1, :), S2, G1 (2, :)];$$

$$G2 (7, :) = [G1 (7, :), -S2, G1 (3, :)];$$

and

$$G2 (8, :) = [G1 (8, :), S2, G1 (6, :)].$$

**12.** The method according to claim 10, wherein when the CB of the spectrum resource is 3, the target field in the STF is G3 (v, :); and

$$G3 (1, :) = [G1 (5, :), S1, G1 (6, :), S2, -G1 (7, :)];$$

$$G3 (2, :) = [G1 (1, :), -S1, -G1 (7, :), -S2, G1 (5, :)];$$

$$G3 (3, :) = [G1 (7, :), -S2, -G1 (3, :), -S2, -G1 (8, :)];$$

$$G3 (4, :) = [G1 (5, :), -S1, -G1 (3, :), -S2, G1 (6, :)];$$

$$G3 (5, :) = [G1 (7, :), -S2, -G1 (1, :), -S1, G1 (8, :)];$$

$$G3 (6, :) = [G1 (8, :), -S1, G1 (3, :), -S1, G1 (7, :)];$$

$$G3 (7, :) = [G1 (5, :), -S1, G1 (3, :), S2, G1 (1, :)];$$

and

$$G3 (8, :) = [G1 (1, :), -S2, -G1 (6, :), S2, -G1 (2, :)].$$

**13.** The method according to claim 10, wherein when the CB of the spectrum resource is 4, the target field in the STF is G4 (v, :); and

$$G4\ (1, :) = [G1\ (1, :), -G1\ (1, :), G1\ (5, :), G1\ (2, :), G1\ (2, :)];$$

$$G4\ (2, :) = [G1\ (2, :), -G1\ (2, :), G1\ (6, :), G1\ (1, :), G1\ (1, :)];$$

$$G4\ (3, :) = [G1\ (5, :), G1\ (5, :), G1\ (2, :), -G1\ (6, :), G1\ (6, :)];$$

$$G4\ (4, :) = [G1\ (5, :), -G1\ (5, :), -G1\ (1, :), -G1\ (6, :), -G1\ (6, :)];$$

$$G4\ (5, :) = [G1\ (1, :), G1\ (1, :), -G1\ (6, :), G1\ (2, :), -G1\ (2, :)];$$

$$G4\ (6, :) = [G1\ (4, :), -G1\ (4, :), G1\ (8, :), G1\ (3, :), G1\ (3, :)];$$

$$G4\ (7, :) = [G1\ (3, :), -G1\ (3, :), -G1\ (7, :), G1\ (4, :), G1\ (4, :)];$$

and

$$G4\ (8, :) = [G1\ (6, :), G1\ (6, :), G1\ (1, :), -G1\ (5, :), G1\ (5, :)].$$

**14.** An apparatus, configured to perform a method as claimed in any one of claims 1 to 13.

**15.** A computer-readable storage medium, wherein the storage medium stores a computer program, and the computer program comprises instructions used to perform a method as claimed in any one of claims 1 to 13.

**Patentansprüche**

**1.** Datenübertragungsverfahren, wobei das Verfahren für ein Übertragungsende verwendet wird und wobei das Verfahren umfasst:

Erzeugen (201) einer Protokolldateneinheit einer physischen Schicht (physical layer protocol data unit - PPDU); und
Senden (202, 203) der PPDU an eine Vielzahl von Empfangsenden, wobei
die PPDU ein kurzes Trainingsfeld (short training field - STF) umfasst und ein Zielfeld in dem STF eine Vielzahl von aufeinanderfolgend angeordneten Basiselementen, ein Nullelement, das sich zwischen jeweils zwei benachbarten Basiselementen befindet, und ein Nullelement, das sich vor oder nach der Vielzahl von Basiselementen befindet, umfasst, wobei "a" in "a Nullelemente" die Menge der Nullelemente darstellt und "a" $\geq$ 1 ist eine Vielzahl von aufeinanderfolgenden Elemente in der Vielzahl von Basiselementen eine Golay-Sequenz bilden und das Zielfeld auf einem anderen Hilfsträger als einem Schutzhilfsträger und einem Gleichstromhilfsträger in einer Spektrumsressource zu Übertragen der STF übertragen wird;
die Spektrumsressource zum Übertragen des STF in eine Vielzahl von Hilfsträgern unterteilt wird und die Vielzahl von Hilfsträgern der Vielzahl von Empfangsenden in einer Eins-zueins-Entsprechung zugewiesen wird;
die Elemente in dem STF auch in eine Vielzahl von Elementsegmenten unterteilt werden können, die auf der Aufteilung der Hilfsträger in der Spektrumsressource basiert;
die Vielzahl von Elementsegmenten in einer Eins-zu-eins-Entsprechung mit der Vielzahl von Hilfsträgern steht; und
jedes Elementensegment an ein Empfangsende, das dem Elementensegment entspricht, auf einem dem Elementsegment entsprechenden Hilfsträger übertragen wird.

**2.** Datenübertragungsverfahren, wobei das Verfahren für ein Empfangsende verwendet wird und das Verfahren umfasst:

Empfangen (202, 203) einer Protokolldateneinheit einer physischen Schicht (PPDU), die durch ein Übertragungsende übertragen wird; und

Parsen (204, 205) der empfangenen PPDU, wobei

die PPDU ein kurzes Trainingsfeld (short training field - STF) umfasst und ein Zielfeld in dem STF eine Vielzahl von aufeinanderfolgend angeordneten Basiselementen, ein Nullelement, das sich zwischen jeweils zwei benachbarten Basiselementen befindet, und ein Nullelement, das sich vor oder nach der Vielzahl von Basiselementen befindet, umfasst, wobei "a" in "a Nullelemente" die Menge der Nullelemente darstellt und "a" $\geq$ 1 ist eine Vielzahl von aufeinanderfolgenden Elemente in der Vielzahl von Basiselementen eine Golay-Sequenz bilden und das Zielfeld auf einem anderen Hilfsträger als einem Schutzhilfsträger und einem Gleichstromhilfsträger in einer Spektrumsressource zu Übertragen der STF übertragen wird;

die Spektrumsressource zum Übertragen des STF in eine Vielzahl von Hilfsträgern unterteilt wird und die Vielzahl von Hilfsträgern einer Vielzahl von Empfangsenden in einer Einszu-eins-Entsprechung zugewiesen wird;

die Elemente in dem STF auch in eine Vielzahl von Elementsegmenten unterteilt werden können, die auf der Aufteilung der Hilfsträger in der Spektrumsressource basiert;

die Vielzahl von Elementsegmenten in einer Eins-zu-eins-Entsprechung mit der Vielzahl von Hilfsträgern steht; und

jedes Elementensegment an ein Empfangsende, das dem Elementensegment entspricht, auf einem dem Elementensegment entsprechenden Hilfsträger übertragen wird.

**3.** Verfahren nach Anspruch 1 oder 2, wobei die Anzahl der Elemente im Zielfeld in dem STF ein ganzzahliges Vielfaches von m ist, m die Anzahl der Hilfsträger in einem Ressourcenblock RB ist und m > 1 ist; und im Zielfeld in der STF die Basiselemente in allen m Elementen eine Golay-Sequenz bilden.

**4.** Verfahren nach Anspruch 3, wobei m = 84 und a = 3; oder m = 80 und a = 3.

**5.** Verfahren nach Anspruch 3 oder 4, wobei, wenn eine Kanalbindung (channel bonding - CB) der Spektrumsressource 1 ist, das Zielfeld in der STF G1 (v, :) ist und 1$\leq$v$\leq$8; und

$$G1(1, :) = [S1, S2, S1, -S2];$$

$$G1(2, :) = [S1, S2, -S1, S2];$$

$$G1(3, :) = [S2, S1, S2, -S1];$$

$$G1(4, :) = [S2, S1, -S2, S1];$$

$$G1(5, :) = [S1, -S2, S1, S2];$$

$$G1(6, :) = [-S1, S2, S1, S2];$$

$$G1(7, :) = [S2, -S1, S2, S1];$$

und

$$G1(8, :) = [-S2, S1, S2, S1],$$

wobei

S1 eine erste Sequenz bezeichnet, deren Länge m ist, S2 eine zweite Sequenz bezeichnet, deren Länge m ist, -S1 S1 multipliziert mit -1 bezeichnet, -S2 S2 multipliziert mit -1 bezeichnet, Basiselemente in der ersten Sequenz S1 eine erste Golay-Sequenz R1 bilden, Basiselemente in der zweiten Sequenz S2 eine zweite Golay-Sequenz R2 bilden und die erste Golay-Sequenz R1 orthogonal zur zweiten Golay-Sequenz R2 ist.

6. Verfahren nach Anspruch 5, wobei m = 84, die erste Golay-Sequenz R1 = [a0, 0, b0], die zweite Golay-Sequenz R2 = [a0, 0, -b0], a0 = [1, 1, -1, 1, -1, 1, -1, -1, 1, 1] und b0 = [1, 1, -1, 1, 1, 1, 1, -1, -1].

7. Verfahren nach Anspruch 6, wobei, wenn die CB der Spektrumsressource 2 ist, das Zielfeld in dem STF G2 (v, :) ist; und

$$G2 \ (1, \ :) = [S1, \ S2, \ S1, \ -S2, \ S1, \ S1, \ S2, \ -S1, \ S2];$$

$$G2 \ (2, \ :) = [S1, \ S2, \ S1, \ -S2, \ -S2, \ -S1, \ -S2, \ S1, \ -S2];$$

$$G2 \ (3, \ :) = [S2, \ S1, \ -S2, \ S1, \ S1, \ S2, \ S1, \ S2, \ -S1];$$

$$G2 \ (4, \ :) = [S2, \ S1, \ -S2, \ S1, \ -S2, \ -S1, \ -S2, \ S1];$$

$$G2 \ (5, \ :) = [S1, \ -S2, \ S1, \ S2, \ S1, \ -S1, \ S2, \ S1, \ S2];$$

$$G2 \ (6, \ :) = [S1, \ -S2, \ S1, \ S2, \ S1, \ -S2, \ -S1, \ -S2];$$

$$G2 \ (7, \ :) = [S2, \ -S1, \ S2, \ S1, \ -S2, \ S1, \ S2, \ S1];$$

und

$$G2 \ (8, \ :) = [-S2, \ S1, \ S2, \ S1, \ -S1, \ S2, \ -S1, \ S2, \ S1].$$

8. Verfahren nach Anspruch 6, wobei, wenn die CB der Spektrumsressource 3 ist, das Zielfeld in dem STF G3 (v, :) ist; und

$$G3 \ (1, \ :) = [S2, \ -S1, \ S2, \ S1, \ -S2, \ S1, \ S2, \ -S1, \ -S2, \ -S1];$$

$$G3 \ (2, \ :) = [-S2, \ S1, \ S2, \ S1, \ S1, \ S1, \ S2, \ -S1, \ S2, \ -S2, \ -S1, \ S2, \ S1, \ S2];$$

$$G3 \ (3, \ :) = [S2, \ S1, \ -S2, \ S1, \ S1, \ S2, \ S1, \ S2, \ -S1, \ S1, \ S1, \ -S2, \ -S1, \ -S2];$$

$$G3 \ (4, \ :) = [S1, \ -S2, \ S1, \ S2, \ -S1, \ -S2, \ -S1, \ -S2, \ S1, \ -S2, \ -S1, \ S2, \ S1, \ S2];$$

$$G3 \ (5, \ :) = [S2, \ S1, \ S2, \ -S1, \ -S2, \ S1, \ -S2, \ -S1, \ -S2, \ S2, \ S1, \ -S2, \ S1];$$

G3 (6, :) = [S2, S1, -S2, S1, -S2, -S1, -S2, -S1, -S1, -S2, S1, -S2];

G3 (7, :) = [S2, -S1, S2, S1, -S1, -S2, -S1, S2, -S1, -S1, -S2, S1, S2, S1];

und

G3 (8, :) = [S1, S2, -S1, S2, -S1, S2, -S1, -S2, -S1, -S2, -S1, S2].

**9.** Verfahren nach Anspruch 6, wobei, wenn die CB der Spektrumsressource 4 ist, das Zielfeld in dem STF G4 (v, :) ist; und

G4 (1, :) = [S2, S1, -S2, S1, -S2, S1, S2, -S1, S2, S1, -S2, -S1, -S2, S1, -S2, S1, -S2, -S1, -S2];

G4 (2, :) = [-S2, S1, S2, S1, S2, -S2, S1, -S2, -S1, -S1, S2, S1, S2, -S1, -S2, S2, S1, - S2, S1];

G4 (3, :) = [S2, S1, -S2, S1, -S2, S1, S2, -S1, -S1, -S2, S1, -S2, -S1, -S2, S1, -S2, -S1, -S2];

G4 (4, :) = [S1, S2, S1, -S2, S1, -S2, S1, -S2, -S1, S2, -S1, -S2, S1, -S2, S1, -S2, -S1];

G4 (5, :) = [S2, S1, S2, -S1, -S2, S1, -S2, S1, S2, -S1, -S2, -S1, S2, -S1, -S1, S2];

G4 (6, :) = [S2, -S1, S2, S1, S2, S1, -S2, -S1, -S2, S1, -S2, S1, S2, S1, -S2, S1, S1, S1, S2];

G4 (7, :) = [S2, S1, S2, -S1, S2, -S1, S2, -S1, -S2, S1, -S2, -S1, S2, -S1, S2, -S1, -S2];

und

G4 (8, :) = [S2, S1, -S2, S1, S2, S1, -S2, S1, -S1, -S2, S1, S2, -S1, S2, -S1, S2, -S1, S2].

**10.** Verfahren nach Anspruch 5, wobei m = 80, die erste Golay-Sequenz R1 = [a0, b0], die zweite Golay-Sequenz R2 = [a0, - b0], a0 = [1, 1, -1, 1, -1, 1, -1, -1, 1, 1] und b0 = [1, 1, - 1, 1, 1, 1, 1, -1, -1] .

**11.** Verfahren nach Anspruch 10, wobei, wenn die CB der Spektrumsressource 2 ist, das Zielfeld in dem STF G2 (v, :) ist; und

G2 (1, :) = [G1 (4, :), S2, G1 (6, :)];

G2 (2, :) = [G1 (7, :), S2, G1 (8, :)];

G2 (3, :) = [G1 (4, :), S2, G1 (2, :)];

G2 (4, :) = [G1 (3, :), S2, -G1 (1, :)];

G2 (5, :) = [G1 (1, :), -S1, -G1 (7, :)];

G2 (6, :) = [G1 (1, :), S2, G1 (2, :)];

G2 (7, :) = [G1 (7, :), -S2, G1 (3, :)];

und

G2 (8, :) = [G1 (8, :), S2, G1 (6, :)].

12. Verfahren nach Anspruch 10, wobei, wenn die CB der Spektrumsressource 3 ist, das Zielfeld in dem STF G3 (v, :) ist; und

G3 (1, :) = [G1 (5, :), S1, G1 (6, :), S2, -G1 (7, :)];

G3 (2, :) = [G1 (1, :), -S1, -G1 (7, :), -S2, G1 (5, :)];

G3 (3, :) = [G1 (7, :), -S2, -G1 (3, :), -S2, -G1 (8, :)];

G3 (4, :) = [G1 (5, :), -S1, -G1 (3, :), -S2, G1 (6, :)];

G3 (5, :) = [G1 (7, :), -S2, -G1 (1, :), -S1, G1 (8, :)];

G3 (6, :) = [G1 (8, :), -S1, G1 (3, :), -S1, G1 (7, :)];

G3 (7, :) = [G1 (5, :), -S1, G1 (3, :), S2, G1 (1, :)];

und

G3 (8, :) = [G1 (1, :), -S2, -G1 (6, :), S2, -G1 (2, :)].

13. Verfahren nach Anspruch 10, wobei, wenn die CB der Spektrumsressource 4 ist, das Zielfeld in dem STF G4 (v, :) ist; und

```
G4 (1, :) = [G1 (1, :), -G1 (1, :), G1 (5, :), G1 (2, :), G1
(2, :)];

G4 (2, :) = [G1 (2, :), -G1 (2, :), G1 (6, :), G1 (1, :), G1
(1, :)];

G4 (3, :) = [G1 (5, :), G1 (5, :), G1 (2, :), -G1 (6, :), G1
(6, :)];

G4 (4, :) = [G1 (5, :), -G1 (5, :), -G1 (1, :), -G1 (6, :), -
G1 (6, :)];

G4 (5, :) = [G1 (1, :), G1 (1, :), -G1 (6, :), G1 (2, :), -G1
(2, :)];

G4 (6, :) = [G1 (4, :), -G1 (4, :), G1 (8, :), G1 (3, :), G1
(3, :)];

G4 (7, :) = [G1 (3, :), -G1 (3, :), -G1 (7, :), G1 (4, :), G1
(4, :)];

   und

G4 (8, :) = [G1 (6, :), G1 (6, :), G1 (1, :), -G1 (5, :), G1
(5, :)].
```

**14.** Vorrichtung, die zum Durchführen eines Verfahrens nach einem der Ansprüche 1 bis 13 konfiguriert ist.

**15.** Computerlesbares Speichermedium, wobei das Speichermedium ein Computerprogramm speichert und das Computerprogramm Anweisungen zum Durchführen eines Verfahrens nach einem der Ansprüche 1 bis 13 umfasst.

## Revendications

**1.** Procédé de transmission de données, dans lequel le procédé est utilisé pour une extrémité de transmission, et le procédé comprend :

la génération (201) d'une unité de données de protocole de couche physique, PPDU ; et
l'envoi (202, 203) de la PPDU à une pluralité d'extrémités de réception, dans lequel
la PPDU comprend un champ d'entraînement court, STF, et un champ cible dans le STF comprend une pluralité d'éléments de base agencés séquentiellement, a éléments zéro situés entre deux éléments de base adjacents, et a éléments zéro situés avant ou après la pluralité d'éléments de base, dans lequel « a » dans « a éléments zéro » représente la quantité d'éléments zéro et « a » ≥ 1 ;
une pluralité d'éléments consécutifs dans la pluralité d'éléments de base forment une séquence de Golay, et le champ cible est transmis sur une sous-porteuse autre qu'une sous-porteuse de garde et une sous-porteuse à courant continu dans une ressource spectrale pour transmettre le STF ;
la ressource spectrale pour transmettre le STF est divisée en une pluralité de sous-porteuses, et la pluralité de sous-porteuses est attribuée à la pluralité d'extrémités de réception dans une correspondance biunivoque ;
les éléments dans le STF peuvent également être divisés en une pluralité de segments d'éléments sur la base de la division de sous-porteuses dans la ressource spectrale ;

la pluralité de segments d'éléments sont en correspondance biunivoque avec la pluralité de sous-porteuses ; et chaque segment d'éléments est transmis à une extrémité de réception correspondant au segment d'éléments sur une sous-porteuse correspondant au segment d'éléments.

2. Procédé de transmission de données, dans lequel le procédé est utilisé pour une extrémité de réception, et le procédé comprend :

la réception (202, 203) d'une unité de données de protocole de couche physique, PPDU, envoyée par une extrémité de transmission ; et

l'analyse (204, 205) de la PPDU reçue, dans lequel la PPDU comprend un champ d'entraînement court, STF, et un champ cible dans le STF comprend une pluralité d'éléments de base agencés séquentiellement, a éléments zéro situés entre deux éléments de base adjacents, et a éléments zéro situés avant ou après la pluralité d'éléments de base. , dans lequel « a » dans « a éléments zéro » représente la quantité d'éléments zéro et « a » ≥ 1 ;

une pluralité d'éléments consécutifs dans la pluralité d'éléments de base forment une séquence de Golay, et le champ cible est transmis sur une sous-porteuse autre qu'une sous-porteuse de garde et une sous-porteuse à courant continu dans une ressource spectrale pour transmettre le STF ;

la ressource spectrale pour transmettre le STF est divisée en une pluralité de sous-porteuses, et la pluralité de sous-porteuses est attribuée à une pluralité d'extrémités de réception dans une correspondance biunivoque ;

les éléments dans le STF peuvent également être divisés en une pluralité de segments d'éléments sur la base de la division de sous-porteuses dans la ressource spectrale ;

la pluralité de segments d'éléments sont en correspondance biunivoque avec la pluralité de sous-porteuses ; et chaque segment d'éléments est transmis à une extrémité de réception correspondant au segment d'éléments sur une sous-porteuse correspondant au segment d'éléments.

3. Procédé selon la revendication 1 ou 2, dans lequel une quantité d'éléments dans le champ cible dans le STF est un multiple entier de m, m est une quantité de sous-porteuses dans un bloc de ressources, RB, et m > 1 ; et dans le champ cible dans le STF, les éléments de base dans tous les m éléments forment une séquence de Golay.

4. Procédé selon la revendication 3, dans lequel m = 84, et a = 3 ; ou m = 80, et a = 3.

5. Procédé selon la revendication 3 ou 4, dans lequel lorsqu'une liaison de canal, CB, de la ressource spectrale est 1, le champ cible dans le STF est G1 (v, :), et $1 \leq v \leq 8$ ; et

$$G1(1, :) = [S1, S2, S1, -S2] ;$$

$$G1(2, :) = [S1, S2, -S1, S2] ;$$

$$G1(3, :) = [S2, S1, S2, -S1] ;$$

$$G1(4, :) = [S2, S1, -S2, S1] ;$$

$$G1(5, :) = [S1, -S2, S1, S2] ;$$

$$G1(6, :) = [-S1, S2, S1, S2] ;$$

$$G1(7, :) = [S2, -S1, S2, S1] ;$$

et

```
G1(8, :) = [-S2, S1, S2, S1],
```

dans lequel
S1 indique une première séquence dont la longueur est m, S2 indique une seconde séquence dont la longueur est m, -S1 indique S1 multiplié par -1, -S2 indique S2 multiplié par -1, des éléments de base de la première séquence S1 forment une première séquence de Golay R1, des éléments de base de la seconde séquence S2 forment une seconde séquence de Golay R2, et la première séquence de Golay R1 est orthogonale à la seconde séquence de Golay R2.

6. Procédé selon la revendication 5, dans lequel m = 84, la première séquence de Golay R1 = [a0, 0, b0], la seconde séquence de Golay R2 = [a0, 0, -b0], a0 = [1, 1, -1, 1, -1, 1, -1, -1, 1, 1] et b0 = [1, 1, -1, 1, 1, 1, 1, 1, -1, -1].

7. Procédé selon la revendication 6, dans lequel lorsque la CB de la ressource spectrale est 2, le champ cible dans le STF est G2 (v, :) ; et

```
G2 (1, :) = [S1, S2, S1, -S2, S1, S1, S2, -S1, S2] ;

G2 (2, :) = [S1, S2, S1, -S2, -S2, -S1, -S2, S1, -S2] ;

G2 (3, :) = [S2, S1, -S2, S1, S1, S2, S1, S2, -S1] ;

G2 (4, :) = [S2, S1, -S2, S1, -S2, -S2, -S1, -S2, S1] ;

G2 (5, :) = [S1, -S2, S1, S2, S1, -S1, S2, S1, S2] ;

G2 (6, :) = [S1, -S2, S1, S2, S1, S1, -S2, -S1, -S2] ;

G2 (7, :) = [S2, -S1, S2, S1, S1, -S2, S1, S2, S1] ;
```

et

```
G2 (8, :) = [-S2, S1, S2, S1, -S1, S2, -S1, S2, S1].
```

8. Procédé selon la revendication 6, dans lequel lorsque la CB de la ressource spectrale est 3, le champ cible dans le STF est G3 (v, :) ; et

```
G3 (1, :) = [S2, -S1, S2, S1, -S2, S2, S1, S2, -S1, S2, S2, -S1, -S2, -S1] ;

G3 (2, :) = [-S2, S1, S2, S1, S1, S1, S2, -S1, S2, -S2, -S1, S2, S1, S2] ;

G3 (3, :) = [S2, S1, -S2, S1, S1, S2, S1, S2, -S1, S1, S1, -S2, -S1, -S2] ;
```

G3 (4, :) = [S1, -S2, S1, S2, -S1, -S2, -S1, -S2, S1, -S2, -S1, S2, S1, S2] ;

G3 (5, :) = [S2, S1, S2, -S1, -S2, -S2, S1, -S2, -S1, -S2, S2, S1, -S2, S1] ;

G3 (6, :) = [S2, S1, -S2, S1, S2, S1, -S2, -S1, -S2, -S1, -S1, -S2, S1, -S2] ;

G3 (7, :) = [S2, -S1, S2, S1, -S1, -S2, -S1, S2, -S1, -S1, -S2, S1, S2, S1] ;

et

G3 (8, :) = [S1, S2, -S1, S2, -S1, S2, S1, S2, -S1, -S2, -S1, -S2, -S1, S2].

**9.** Procédé selon la revendication 6, dans lequel lorsque la CB de la ressource spectrale est 4, le champ cible dans le STF est G4 (v, :) ; et

G4 (1, :) = [S2, S1, -S2, S1, -S2, S1, S2, -S1, S2, S1, -S2, -S1, -S2, S1, -S2, S1, -S2, -S1, -S2] ;

G4 (2, :) = [-S2, S1, S2, S1, S2, -S2, S1, -S2, -S1, -S1, S2, S1, S2, -S1, -S2, S2, S1, -S2, S1] ;

G4 (3, :) = [S2, S1, -S2, S1, -S2, S1, S2, -S1, S2, -S1, -S2, S1, -S2, -S1, -S2, S1, -S2, -S1, -S2] ;

G4 (4, :) = [S1, S2, S1, -S2, S1, -S2, S1, S2, S1, -S2, -S1, S2, -S1, -S2, S1, -S2, S1, -S2, -S1] ;

G4 (5, :) = [S2, S1, S2, -S1, -S2, S1, -S2, S1, S2, -S1, S2, -S1, -S2, -S1, S2, -S1, -S2, -S1, S2] ;

G4 (6, :) = [S2, -S1, S2, S1, S2, S1, -S2, -S1, -S2, S1, -S2, S1, S2, S1, S2, S1, -S2, S1, S2] ;

G4 (7, :) = [S2, S1, S2, -S1, S2, -S1, S2, S1, S2, -S1, -S2, S1, -S2, -S1, S2, -S1, S2, -S1, -S2] ;

et

G4 (8, :) = [S2, S1, -S2, S1, S2, S1, S2, S1, -S2, S1, -S2, -S1, -S2, S1, S2, S1, S2, -S1, S2].

10. Procédé selon la revendication 5, dans lequel m = 80, la première séquence de Golay R1 = [a0, b0], la seconde séquence de Golay R2 = [a0, -bO], a0 = [1, 1, -1, 1, -1, 1, -1, -1, 1, 1] et b0 = [1, 1, -1, 1, 1, 1, 1, -1, -1] .

11. Procédé selon la revendication 10, dans lequel lorsque la CB de la ressource spectrale est 2, le champ cible dans le STF est G2 (v, :) ; et

$$G2\ (1,\ :)\ =\ [G1\ (4,\ :),\ S2,\ G1\ (6,\ :)]\ ;$$

$$G2\ (2,\ :)\ =\ [G1\ (7,\ :),\ S2,\ G1\ (8,\ :)]\ ;$$

$$G2\ (3,\ :)\ =\ [G1\ (4,\ :),\ S2,\ G1\ (2,\ :)]\ ;$$

$$G2\ (4,\ :)\ =\ [G1\ (3,\ :),\ S2,\ -G1\ (1,\ :)]\ ;$$

$$G2\ (5,\ :)\ =\ [G1\ (1,\ :),\ -S1,\ -G1\ (7,\ :)]\ ;$$

$$G2\ (6,\ :)\ =\ [G1\ (1,\ :),\ S2,\ G1\ (2,\ :)]\ ;$$

$$G2\ (7,\ :)\ =\ [G1\ (7,\ :),\ -S2,\ G1\ (3,\ :)]\ ;$$

et

$$G2\ (8,\ :)\ =\ [G1\ (8,\ :),\ S2,\ G1\ (6,\ :)].$$

12. Procédé selon la revendication 10, dans lequel lorsque la CB de la ressource spectrale est 3, le champ cible dans le STF est G3 (v, :) ; et

$$G3\ (1,\ :)\ =\ [G1\ (5,\ :),\ S1,\ G1\ (6,\ :),\ S2,\ -G1\ (7,\ :)]\ ;$$

$$G3\ (2,\ :)\ =\ [G1\ (1,\ :),\ -S1,\ -G1\ (7,\ :),\ -S2,\ G1\ (5,\ :)]\ ;$$

$$G3\ (3,\ :)\ =\ [G1\ (7,\ :),\ -S2,\ -G1\ (3,\ :),\ -S2,\ -G1\ (8,\ :)]\ ;$$

$$G3\ (4,\ :)\ =\ [G1\ (5,\ :),\ -S1,\ -G1\ (3,\ :),\ -S2,\ G1\ (6,\ :)]\ ;$$

$$G3\ (5,\ :)\ =\ [G1\ (7,\ :),\ -S2,\ -G1\ (1,\ :),\ -S1,\ G1\ (8,\ :)]\ ;$$

$$G3\ (6,\ :)\ =\ [G1\ (8,\ :),\ -S1,\ G1\ (3,\ :),\ -S1,\ G1\ (7,\ :)]\ ;$$

$$G3\ (7,\ :)\ =\ [G1\ (5,\ :),\ -S1,\ G1\ (3,\ :),\ S2,\ G1\ (1,\ :)]\ ;$$

et

```
G3 (8, :) = [G1 (1, :), -S2, -G1 (6, :), S2, -G1 (2, :)].
```

**13.** Procédé selon la revendication 10, dans lequel lorsque la CB de la ressource spectrale est 4, le champ cible dans le STF est G4 (v, :) ; et

```
G4 (1, :) = [G1 (1, :), -G1 (1, :), G1 (5, :), G1 (2, :), G1 (2, :)] ;

G4 (2, :) = [G1 (2, :), -G1 (2, :), G1 (6, :), G1 (1, :), G1 (1, :)] ;

G4 (3, :) = [G1 (5, :), G1 (5, :), G1 (2, :), -G1 (6, :), G1 (6, :)] ;

G4 (4, :) = [G1 (5, :), -G1 (5, :), -G1 (1, :), -G1 (6, :), -G1 (6, :)] ;

G4 (5, :) = [G1 (1, :), G1 (1, :), -G1 (6, :), G1 (2, :), -G1 (2, :)] ;

G4 (6, :) = [G1 (4, :), -G1 (4, :), G1 (8, :), G1 (3, :), G1 (3, :)] ;

G4 (7, :) = [G1 (3, :), -G1 (3, :), -G1 (7, :), G1 (4, :), G1 (4, :)] ;

    et

G4 (8, :) = [G1 (6, :), G1 (6, :), G1 (1, :), -G1 (5, :), G1 (5, :)].
```

**14.** Appareil, configuré pour exécuter un procédé selon l'une quelconque des revendications 1 à 13.

**15.** Support de stockage lisible par ordinateur, dans lequel le support de stockage stocke un programme informatique, et le programme informatique comprend des instructions utilisées pour exécuter un procédé selon l'une quelconque des revendications 1 à 13.

0

Data transmission system

02

First
receive
end

01

Transmit
end

02

Second
receive
end

FIG. 1

| Transmit end | First receive end | Second receive end |
|---|---|---|

201. The transmit end generates a PPDU, where the PPDU includes an STF; a target field in the STF includes a plurality of basic elements sequentially arranged, a zero elements located between every two adjacent basic elements, and a zero elements located before or after the plurality of basic elements, where a ≥ 1; a plurality of consecutive elements in the plurality of basic elements form a Golay sequence; and the target field is transmitted on a subcarrier other than a guard subcarrier and a direct current subcarrier in a spectrum resource for transmitting the STF

202. Send the PPDU

203. Send the PPDU

204. Parse the received PPDU

205. Parse the received PPDU

FIG. 2

■ Guard subcarrier

☐ Intermediate subcarrier

▦ Direct current subcarrier

Spectrum resource:

**FIG. 3**

■ Guard subcarrier

☐ Intermediate subcarrier

▦ Direct current subcarrier

Spectrum resource: | | RB | RB | | RB | RB | |

**FIG. 4**

| RBs in a spectrum resource: | RB | RB | RB | RB |
|---|---|---|---|---|

| First allocation case: | Receive end 1 | Receive end 2 | Receive end 3 | Receive end 4 |
|---|---|---|---|---|
| Second allocation case: | Receive end 1 | | Receive end 2 | |
| Third allocation case: | Receive end 1 | Receive end 2 | | Receive end 3 |
| Fourth allocation case: | Receive end 1 | | | Receive end 2 |
| Fifth allocation case: | Receive end 1 | Receive end 2 | | |

| Sixth allocation case: | Receive end 1 |
|---|---|

**FIG. 5**

44

First STF

| 2.9583 | 2.9577 | 2.9583 | 2.9577 |
| 2.9888 | | 2.8832 | |
| 2.9583 | 2.9685 | | 2.9577 |
| | 4.8347 | | 2.9577 |
| 2.9583 | | 4.8740 | |
| 2.9640 | | | |

Second STF

| 2.9583 | 2.9577 | 2.9583 | 2.9577 |
| 2.9888 | | 2.8832 | |
| 2.9583 | 2.9778 | | 2.9577 |
| | 4.8689 | | 2.9577 |
| 2.9583 | | 5.1410 | |
| 2.9821 | | | |

Third STF

| 2.9577 | 2.9583 | 2.9577 | 2.9583 |
| 2.9685 | | 2.9778 | |
| 2.9577 | 2.9888 | | 2.9583 |
| | 4.7723 | | 2.9583 |
| 2.9577 | | 4.8689 | |
| 2.9514 | | | |

Fourth STF

| 2.9577 | 2.9583 | 2.9577 | 2.9583 |
|--------|--------|--------|--------|
| 2.9685 | | 2.9778 | |
| 2.9577 | 2.8832 | | 2.9583 |
| 4.8740 | | | 2.9583 |
| 2.9577 | 5.1410 | | |
| 2.9461 | | | |

Fifth STF

| 2.9583 | 2.9577 | 2.9583 | 2.9577 |
|--------|--------|--------|--------|
| 2.8832 | | 2.9888 | |
| 2.9583 | 2.9778 | | 2.9577 |
| 5.1410 | | | 2.9577 |
| 2.9583 | 5.0120 | | |
| 2.9874 | | | |

Sixth STF

| 2.9583 | 2.9577 | 2.9583 | 2.9577 |
|--------|--------|--------|--------|
| 2.8832 | | 2.9888 | |
| 2.9583 | 2.9685 | | 2.9577 |
| 4.2504 | | | 2.9577 |
| 2.9583 | 4.7732 | | |
| 2.9876 | | | |

Seventh STF

| 2.9577 | 2.9583 | 2.9577 | 2.9583 |
|--------|--------|--------|--------|
| 2.9778 | | 2.9685 | |
| 2.9577 | 2.8832 | | 2.9583 |
| 5.1410 | | | 2.9583 |
| 2.9577 | 4.2504 | | |
| 3.0085 | | | |

Eighth STF

| 2.9577 | 2.9583 | 2.9577 | 2.9583 |
|--------|--------|--------|--------|
| 2.9778 | | 2.9685 | |
| 2.9577 | 2.9888 | | 2.9583 |
| 5.0120 | | | 2.9583 |
| 2.9577 | 4.8347 | | |
| 2.8862 | | | |

FIG. 6

■ Guard subcarrier

☐ Intermediate subcarrier

▨ Direct current subcarrier

Spectrum resource:

| | RB | RB | RB | RB | 0.5 RBs | ▨ | 0.5 RBs | RB | RB | RB | RB | |

FIG. 7

| RBs in a spectrum resource: | RB | RB | RB | RB | RB | RB | RB | RB | RB |
|---|---|---|---|---|---|---|---|---|---|

First allocation case:

| Receive end 1 | Receive end 2 | Receive end 3 |
|---|---|---|

Second allocation case:

| Receive end 1 |
|---|

FIG. 8

First STF

| 2.9871 | 2.9613 | 2.9519 |
|--------|--------|--------|
| 4.1055 | | |

Second STF

| 2.9874 | 3.0099 | 2.9876 |
|--------|--------|--------|
| 4.1364 | | |

Third STF

| 2.9640 | 3.0099 | 2.9821 |
|--------|--------|--------|
| 4.1853 | | |

Fourth STF

| 2.9718 | 2.9613 | 3.0085 |
|--------|--------|--------|
| 4.2014 | | |

Fifth STF

| 2.9910 | 3.0099 | 2.9519 |
|--------|--------|--------|
| 4.2280 | | |

Sixth STF

| 3.0085 | 2.9613 | 2.9718 |
|--------|--------|--------|
| 4.2463 | | |

Seventh STF

| 2.9640 | 2.9613 | 3.0085 |
|--------|--------|--------|
| 4.2479 | | |

Eighth STF

| 2.9640 | 2.9613 | 2.9821 |
|--------|--------|--------|
| 4.2549 | | |

FIG. 9

Guard subcarrier

Intermediate subcarrier

Direct current subcarrier

Spectrum resource: | | RB | RB | RB | RB | RB | RB | RB | | RB | RB | RB | RB | RB | RB | RB | |

FIG. 10

RBs in a spectrum resource:

| RB | RB | RB | RB | RB | RB | RB | RB | RB | RB | RB | RB | RB | RB |
|----|----|----|----|----|----|----|----|----|----|----|----|----|----|

Receive end 2       Receive end 4

First allocation case:

| Receive end 1 | ↓ | Receive end 3 | ↓ | Receive end 5 |
|---|---|---|---|---|

Second allocation case:

| Receive end 1 |
|---|

FIG. 11

EP 3 879 775 B1

First STF

| 3.0085 | 2.9981 | 3.0040 | 2.9981 | 2.9414 |
|--------|--------|--------|--------|--------|
| 3.8665 | | | | |

Second STF

| 2.9414 | 2.9834 | 2.9821 | 2.9981 | 2.9980 |
|--------|--------|--------|--------|--------|
| 3.9727 | | | | |

Third STF

| 2.9680 | 2.9834 | 3.0040 | 2.9834 | 2.9980 |
|--------|--------|--------|--------|--------|
| 3.9731 | | | | |

Fourth STF

| 2.9904 | 2.9384 | 3.0040 | 2.9981 | 2.9980 |
|--------|--------|--------|--------|--------|
| 3.9793 | | | | |

Fifth STF

| 3.0040 | 2.9881 | 3.0085 | 2.9981 | 2.9680 |
|--------|--------|--------|--------|--------|
| 3.9740 | | | | |

Sixth STF

| 2.9680 | 2.9981 | 2.9980 | 2.9834 | 2.9821 |
|--------|--------|--------|--------|--------|
| 4.0233 | | | | |

Seventh STF

| 3.0085 | 2.9834 | 2.9680 | 2.9834 | 2.9414 |
|--------|--------|--------|--------|--------|
| 4.0174 | | | | |

Eighth STF

| 2.9821 | 2.9834 | 3.0040 | 2.9981 | 3.0097 |
|--------|--------|--------|--------|--------|
| 4.0233 | | | | |

FIG. 12

Guard subcarrier

Intermediate subcarrier

Direct current subcarrier

Spectrum
resource:

| | RB | RB | RB | RB | RB | RB | RB | RB | RB | 0.5 RBs | | 0.5 RBs | RB | RB | RB | RB | RB | RB | RB | RB | RB | |

FIG. 13

RBs in a spectrum resource:  | RB | RB | RB | RB | RB | RB | RB | RB | RB | RB | RB | RB | RB | RB | RB | RB | RB | RB | RB |

Receive end 2        Receive end 4        Receive end 6

First allocation case:

| Receive end 1 | | Receive end 3 | | Receive end 5 | | Receive end 7 |

Second allocation case:

| Receive end 1 |

FIG. 14

First STF

| 2.9910 | 3.0099 | 3.0079 | 2.9835 | 3.0071 | 3.0099 | 2.9912 |
|---|---|---|---|---|---|---|
| 3.7495 | | | | | | |

Second STF

| 2.9829 | 3.0099 | 3.0085 | 2.9835 | 3.0071 | 3.0099 | 2.9910 |
|---|---|---|---|---|---|---|
| 3.8372 | | | | | | |

Third STF

| 2.9910 | 3.0099 | 3.0079 | 2.9835 | 3.0085 | 3.0099 | 2.9912 |
|---|---|---|---|---|---|---|
| 3.8974 | | | | | | |

Fourth STF

| 3.0099 | 2.9835 | 2.9829 | 3.0099 | 2.9897 | 2.9835 | 3.0085 |
|---|---|---|---|---|---|---|
| 3.8977 | | | | | | |

Fifth STF

| 3.0071 | 3.0099 | 2.9897 | 2.9835 | 2.9829 | 3.0099 | 3.0099 |
|---|---|---|---|---|---|---|
| 3.9090 | | | | | | |

Sixth STF

| 3.0085 | 3.0099 | 2.9912 | 2.9835 | 2.9829 | 3.0099 | 2.9897 |
|---|---|---|---|---|---|---|
| 3.9318 | | | | | | |

Seventh STF

| 3.0071 | 3.0099 | 2.9912 | 2.9835 | 3.0085 | 3.0099 | 2.9897 |
|---|---|---|---|---|---|---|
| 3.9375 | | | | | | |

Eighth STF

| 2.9910 | 3.0099 | 3.0039 | 2.9835 | 3.0071 | 3.0099 | 3.0079 |
|---|---|---|---|---|---|---|
| 3.9615 | | | | | | |

FIG. 15

EP 3 879 775 B1

■ Guard subcarrier

☐ Intermediate subcarrier

▦ Direct current subcarrier

Spectrum resource:

| | RB | RB | | RB | RB | |
|---|---|---|---|---|---|---|

## FIG. 16

RBs in a spectrum resource:

| RB | RB | RB | RB |
|---|---|---|---|

First allocation case:

| Receive end 1 | Receive end 2 | Receive end 3 | Receive end 4 |
|---|---|---|---|

Second allocation case:

| Receive end 1 | | Receive end 2 | |
|---|---|---|---|

Third allocation case:

| Receive end 1 | Receive end 2 | | Receive end 3 |
|---|---|---|---|

Fourth allocation case:

| Receive end 1 | | | Receive end 2 |
|---|---|---|---|

Fifth allocation case:

| Receive end 1 | Receive end 2 | | |
|---|---|---|---|

Sixth allocation case:

| Receive end 1 | | | |
|---|---|---|---|

## FIG. 17

**First STF**

| | | | |
|---|---|---|---|
| 2.7841 | 2.9364 | 2.7841 | 2.9364 |
| 2.8951 | | 2.9213 | |
| 2.7841 | 3.0065 | | 2.9313 |
| 5.1410 | | | 2.9364 |
| 2.7841 | 4.7830 | | |
| 2.9337 | | | |

**Second STF**

| | | | |
|---|---|---|---|
| 2.7841 | 2.9364 | 2.7841 | 2.9364 |
| 2.8951 | | 2.9213 | |
| 2.7841 | 2.9249 | | 2.9364 |
| 4.3056 | | | 2.9364 |
| 2.7841 | 4.0344 | | |
| 2.9800 | | | |

**Third STF**

| | | | |
|---|---|---|---|
| 2.9364 | 2.7841 | 2.9364 | 2.7841 |
| 2.9249 | | 3.0065 | |
| 5.0344 | 2.9213 | | 2.7841 |
| 5.3044 | | | 2.7841 |
| 2.9364 | 4.8653 | | |
| 2.9432 | | | |

**Fourth STF**

| | | | |
|---|---|---|---|
| 2.9364 | 2.7841 | 2.9364 | 2.7841 |
| 3.0065 | | 2.9249 | |
| 2.9364 | 2.8951 | | 2.7841 |
| 4.4968 | | | 2.7841 |
| 2.9364 | 4.3056 | | |
| 3.0094 | | | |

**Fifth STF**

| | | | |
|---|---|---|---|
| 2.9364 | 2.7841 | 2.9364 | 2.7841 |
| 3.0065 | | 2.9249 | |
| 2.9364 | 2.9213 | | 2.7841 |
| 4.7830 | | | 2.7841 |
| 2.9364 | 5.1945 | | |
| 2.9016 | | | |

**Sixth STF**

| | | | |
|---|---|---|---|
| 2.9364 | 2.7841 | 2.9364 | 2.7841 |
| 2.9249 | | 3.0066 | |
| 2.9364 | 2.8951 | | 2.7841 |
| 5.0245 | | | 2.7841 |
| 2.9364 | 5.1410 | | |
| 2.8801 | | | |

**Seventh STF**

| | | | |
|---|---|---|---|
| 2.7841 | 2.9364 | 2.7841 | 2.9364 |
| 2.9213 | | 2.8951 | |
| 2.7841 | 2.9249 | | 2.9364 |
| 5.1545 | | | 2.9364 |
| 2.7841 | 5.0245 | | |
| 2.8545 | | | |

**Eighth STF**

| | | | |
|---|---|---|---|
| 2.7841 | 2.9364 | 2.7841 | 2.9364 |
| 2.7841 | | 2.8951 | |
| 2.7841 | 3.0065 | | 2.9364 |
| 4.8623 | | | 2.9364 |
| 2.7841 | 4.4968 | | |
| 2.8920 | | | |

FIG. 18

EP 3 879 775 B1

Guard subcarrier

Intermediate subcarrier

Direct current subcarrier

Spectrum resource:

FIG. 19

| RBs in a spectrum resource: | RB | RB | RB | RB | RB | RB | RB | RB | RB |
|---|---|---|---|---|---|---|---|---|---|

First allocation case:

| Receive end 1 | Receive end 2 | Receive end 3 |
|---|---|---|

Second allocation case:

| Receive end 1 |
|---|

FIG. 20

First STF

| 2.9271 | 2.9871 | 2.9957 |
|---|---|---|
| 3.9987 | | |

Second STF

| 2.9771 | 2.9871 | 3.0101 |
|---|---|---|
| 4.0535 | | |

Third STF

| 2.9271 | 2.9871 | 2.9825 |
|---|---|---|
| 4.0646 | | |

Fourth STF

| 3.0091 | 2.9871 | 2.9694 |
|---|---|---|
| 4.0985 | | |

Fifth STF

| 2.9694 | 2.7841 | 2.9771 |
|---|---|---|
| 4.1482 | | |

Sixth STF

| 2.9694 | 2.9871 | 2.9825 |
|---|---|---|
| 4.1499 | | |

Seventh STF

| 2.9771 | 2.9871 | 3.0094 |
|---|---|---|
| 4.1973 | | |

Eighth STF

| 3.0101 | 2.9871 | 2.9957 |
|---|---|---|
| 4.1974 | | |

FIG. 21

EP 3 879 775 B1

Guard subcarrier

Intermediate subcarrier

Direct current subcarrier

Spectrum resource: | | RB | RB | RB | RB | RB | RB | RB | | RB | RB | RB | RB | RB | RB | RB | |

FIG. 22

RBs in a spectrum resource:

| RB | RB | RB | RB | RB | RB | RB | RB | RB | RB | RB | RB | RB | RB |

Receive end 2

Receive end 4

First allocation case:

| Receive end 1 | | Receive end 3 | | Receive end 5 |

Second allocation case:

| Receive end 1 |

FIG. 23

EP 3 879 775 B1

First STF

| 2.9653 | 2.7841 | 2.9788 | 2.9999 | 2.9515 |
|--------|--------|--------|--------|--------|
| 3.9904 | | | | |

Second STF

| 2.9865 | 2.7841 | 2.9515 | 2.9999 | 2.9653 |
|--------|--------|--------|--------|--------|
| 3.9923 | | | | |

Third STF

| 2.9515 | 2.9999 | 3.0094 | 2.9999 | 2.8801 |
|--------|--------|--------|--------|--------|
| 4.0186 | | | | |

Fourth STF

| 2.9653 | 2.7841 | 3.0094 | 2.9999 | 2.9798 |
|--------|--------|--------|--------|--------|
| 4.0652 | | | | |

Fifth STF

| 2.9515 | 2.9999 | 2.9865 | 2.7841 | 2.8801 |
|--------|--------|--------|--------|--------|
| 4.0878 | | | | |

Sixth STF

| 2.8801 | 2.7841 | 3.0094 | 2.7841 | 2.9515 |
|--------|--------|--------|--------|--------|
| 4.0879 | | | | |

Seventh STF

| 2.9653 | 2.7841 | 3.0094 | 2.9999 | 2.9865 |
|--------|--------|--------|--------|--------|
| 4.1224 | | | | |

Eighth STF

| 2.9865 | 2.9999 | 2.9798 | 2.9999 | 2.9800 |
|--------|--------|--------|--------|--------|
| 4.1428 | | | | |

FIG. 24

EP 3 879 775 B1

■ Guard subcarrier

□ Intermediate subcarrier

▨ Direct current subcarrier

Spectrum resource: | ■ | RB | RB | RB | RB | RB | RB | RB | RB | RB | RB | ▨ | RB | RB | RB | RB | RB | RB | RB | RB | RB | RB | ■ |

FIG. 25

EP 3 879 775 B1

RBs in a spectrum resource:

| RB | RB | RB | RB | RB | RB | RB | RB | RB | RB | RB | RB | RB | RB | RB | RB | RB | RB | RB | RB |
|----|----|----|----|----|----|----|----|----|----|----|----|----|----|----|----|----|----|----|----|

First allocation case:

| Receive end 1 | Receive end 2 | Receive end 3 | Receive end 4 | Receive end 5 |
|---|---|---|---|---|

Second allocation case:

| Receive end 1 |
|---|

FIG. 26

First STF

| 2.9704 | 2.9704 | 3.0036 | 2.9915 | 2.9915 |
|--------|--------|--------|--------|--------|
| 2.8663 | | | | |

Second STF

| 2.9915 | 2.9915 | 2.9957 | 2.9704 | 2.9704 |
|--------|--------|--------|--------|--------|
| 2.9712 | | | | |

Third STF

| 3.0036 | 3.0036 | 2.9915 | 2.9957 | 2.9957 |
|--------|--------|--------|--------|--------|
| 2.9726 | | | | |

Fourth STF

| 3.0036 | 3.0036 | 2.9704 | 2.9957 | 2.9957 |
|--------|--------|--------|--------|--------|
| 2.9736 | | | | |

Fifth STF

| 2.9704 | 2.9704 | 2.9957 | 2.9915 | 2.9915 |
|--------|--------|--------|--------|--------|
| 2.9760 | | | | |

Sixth STF

| 2.9597 | 2.9597 | 3.0101 | 3.0094 | 3.0094 |
|--------|--------|--------|--------|--------|
| 2.9783 | | | | |

Seventh STF

| 3.0094 | 3.0094 | 2.9771 | 2.9597 | 2.9597 |
|--------|--------|--------|--------|--------|
| 2.9814 | | | | |

Eighth STF

| 2.9957 | 2.9957 | 2.9704 | 3.0036 | 3.0036 |
|--------|--------|--------|--------|--------|
| 2.9861 | | | | |

FIG. 27

EP 3 879 775 B1

First STF

| 3.6798 | 3.9422 | 3.6798 | 3.8493 |
|---|---|---|---|
| 4.1729 | | 4.1296 | |
| 3.6798 | 4.2402 | | 3.8493 |
| 5.2830 | | | 3.8493 |
| 3.6798 | 4.8213 | | |
| 3.1263 | | | |

Second STF

| 3.6798 | 3.9422 | 3.6798 | 3.8493 |
|---|---|---|---|
| 4.1729 | | 1.2123 | |
| 3.6798 | 3.8507 | | 3.8493 |
| 5.9142 | | | 3.8493 |
| 3.6798 | 5.4214 | | |
| 3.5777 | | | |

Third STF

| 3.6798 | 3.9422 | 3.6798 | 3.8493 |
|---|---|---|---|
| 3.7814 | | 4.2758 | |
| 3.6798 | 3.8507 | | 3.8493 |
| 5.4143 | | | 3.8493 |
| 3.6798 | 4.8376 | | |
| 3.7049 | | | |

Fourth STF

| 3.6798 | 3.9422 | 3.6798 | 3.8493 |
|---|---|---|---|
| 3.7814 | | 4.2758 | |
| 3.6798 | 4.0287 | | 3.8493 |
| 5.5184 | | | 3.8493 |
| 3.6798 | 4.9186 | | |
| 3.6798 | | | |

Fifth STF

| 3.9710 | 3.6798 | 3.3617 | 3.4796 |
|---|---|---|---|
| 4.0492 | | 4.0930 | |
| 3.9710 | 3.7675 | | 3.4796 |
| 4.9994 | | | 3.4796 |
| 3.9710 | 5.5284 | | |
| 3.6798 | | | |

Sixth STF

| 3.3617 | 3.4796 | 3.9710 | 3.4796 |
|---|---|---|---|
| 4.1661 | | 4.3060 | |
| 3.3617 | 3.8916 | | 3.4796 |
| 5.0878 | | | 3.4796 |
| 3.3617 | 5.0629 | | |
| 3.1330 | | | |

Seventh STF

| 3.3617 | 3.4796 | 3.3617 | 3.4796 |
|---|---|---|---|
| 4.0930 | | 4.1661 | |
| 3.3617 | 3.8926 | | 3.4796 |
| 6.1465 | | | 3.4796 |
| 3.3617 | 4.6857 | | |
| 3.5710 | | | |

Eighth STF

| 3.9710 | 3.4796 | 3.9710 | 3.6798 |
|---|---|---|---|
| 4.3060 | | 4.0492 | |
| 3.9710 | 3.7973 | | 3.6798 |
| 5.5637 | | | 3.6798 |
| 3.9710 | 5.0579 | | |
| 3.5156 | | | |

FIG. 28

First STF

| 3.7057 | 3.3617 | 3.8123 |
|--------|--------|--------|
| 4.0845 | | |

Second STF

| 3.6798 | 3.7162 | 3.5808 |
|--------|--------|--------|
| 4.1273 | | |

Third STF

| 3.6798 | 3.9703 | 3.5808 |
|--------|--------|--------|
| 3.8994 | | |

Fourth STF

| 3.6798 | 3.9703 | 3.5808 |
|--------|--------|--------|
| 3.8994 | | |

Fifth STF

| 3.5808 | 3.3617 | 3.6798 |
|--------|--------|--------|
| 4.0178 | | |

Sixth STF

| 3.5808 | 3.3617 | 3.6798 |
|--------|--------|--------|
| 4.0178 | | |

Seventh STF

| 3.5808 | 3.3617 | 3.6798 |
|--------|--------|--------|
| 4.0178 | | |

Eighth STF

| 3.8979 | 3.9529 | 3.8123 |
|--------|--------|--------|
| 4.1639 | | |

FIG. 29

**First STF**

| 3.8596 | 3.6798 | 4.1115 | 3.6798 | 3.9613 |
|--------|--------|--------|--------|--------|
|        |        | 4.1676 |        |        |

**Second STF**

| 3.9613 | 4.2919 | 4.1115 | 5.1377 | 3.8726 |
|--------|--------|--------|--------|--------|
|        |        | 4.1789 |        |        |

**Third STF**

| 3.9613 | 3.9721 | 3.8596 | 5.1217 | 4.1115 |
|--------|--------|--------|--------|--------|
|        |        | 4.3352 |        |        |

**Fourth STF**

| 3.9613 | 3.6798 | 3.8726 | 3.6798 | 3.8596 |
|--------|--------|--------|--------|--------|
|        |        | 4.3506 |        |        |

**Fifth STF**

| 3.9613 | 3.6798 | 3.8726 | 3.6798 | 3.8596 |
|--------|--------|--------|--------|--------|
|        |        | 4.4948 |        |        |

**Sixth STF**

| 3.9613 | 3.6798 | 3.8796 | 3.9721 | 3.8596 |
|--------|--------|--------|--------|--------|
|        |        | 4.6901 |        |        |

**Seventh STF**

| 3.9613 | 3.8493 | 3.9889 | 3.6798 | 3.6392 |
|--------|--------|--------|--------|--------|
|        |        | 4.2068 |        |        |

**Eighth STF**

| 3.9613 | 3.8493 | 3.9889 | 3.6798 | 3.6392 |
|--------|--------|--------|--------|--------|
|        |        | 4.2068 |        |        |

FIG. 30

First STF

| 3.9935 | 5.2772 | 3.8123 | 3.9445 | 3.9935 | 5.3643 | 3.8123 |
|--------|--------|--------|--------|--------|--------|--------|
| 4.2677 | | | | | | |

Second STF

| 3.9935 | 5.2772 | 3.8123 | 3.9445 | 3.9445 | 5.3643 | 3.8123 |
|--------|--------|--------|--------|--------|--------|--------|
| 4.2677 | | | | | | |

Third STF

| 3.9935 | 4.7143 | 3.8123 | 5.2772 | 3.9935 | 5.6123 | 3.8123 |
|--------|--------|--------|--------|--------|--------|--------|
| 4.2358 | | | | | | |

Fourth STF

| 3.9935 | 4.7143 | 3.8123 | 5.2772 | 3.9935 | 5.6123 | 3.8123 |
|--------|--------|--------|--------|--------|--------|--------|
| 4.2358 | | | | | | |

Fifth STF

| 3.5808 | 3.5118 | 3.5808 | 6.0336 | 3.6921 | 5.3643 | 3.6921 |
|--------|--------|--------|--------|--------|--------|--------|
| 4.2008 | | | | | | |

Sixth STF

| 3.8358 | 3.5118 | 3.5808 | 3.9867 | 3.6921 | 7.2396 | 3.6921 |
|--------|--------|--------|--------|--------|--------|--------|
| 4.3130 | | | | | | |

Seventh STF

| 3.5808 | 3.5118 | 3.5808 | 5.6331 | 3.6921 | 3.9445 | 3.6921 |
|--------|--------|--------|--------|--------|--------|--------|
| 4.3030 | | | | | | |

Eighth STF

| 3.5808 | 3.5118 | 3.5808 | 5.6331 | 3.6921 | 3.9445 | 3.6921 |
|--------|--------|--------|--------|--------|--------|--------|
| 4.3030 | | | | | | |

FIG. 31

EP 3 879 775 B1

01

Data transmission apparatus

011

Generation unit

012

Sending unit

FIG. 32

02

Data transmission apparatus

021

Receiving unit

022

Parsing unit

FIG. 33

Data transmission apparatus

3401

Processor

3404

Transceiver

3402

Memory

3403

FIG. 34

Input interface 3502

Processing circuit 3501

Output interface 3503

FIG. 35

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018131800 A1